# EUROPEAN PATENT APPLICATION

(11) **EP 4 848 871 A1**
(43) Date of publication of application: **02.12.2026**
(21) Application number: 24923438.6
(22) Date of filing: 07.11.2024
(51) Int. Cl.: H04W 74/0833

(54) **COMMUNICATION METHOD AND COMMUNICATION DEVICE**

(30) Priority: 05.02.2024 CN 202410168567
(71) Applicant: Huawei Technologies Co., Ltd., Shenzhen, Guangdong 518129 (CN)
(72) Inventor: HAN, Chengcheng, Shenzhen, Guangdong 518129 (CN); GUO, Zhiheng, Shenzhen, Guangdong 518129 (CN); LU, Shaozhong, Shenzhen, Guangdong 518129 (CN); HOU, Hailong, Shenzhen, Guangdong 518129 (CN); SONG, Xinghua, Shenzhen, Guangdong 518129 (CN)
(74) Representative: Huawei European IPR
(86) International application number: PCT/CN2024/130373
(87) International publication number: WO 2025/167234

(57) **Abstract**

A communication method and a communication apparatus are provided. The method includes: A first apparatus receives first information, where the first information indicates a first resource, and indicates whether to perform random access on the first resource, so that random access is performed or not performed on the first resource based on the first information. The first resource includes a first time domain resource and a first frequency domain resource, the first time domain resource corresponds to the first frequency domain resource, a first part of the first time domain resource is located in a first time domain unit, a first frequency domain unit corresponding to the first time domain unit includes a first subband used for uplink transmission and a second subband used for downlink transmission, and the first frequency domain resource is located in the first frequency domain unit.

## Description

This application claims priority to Chinese Patent Application No. 202410168567.3, filed with the China National Intellectual Property Administration on February 5, 2024 and entitled "COMMUNICATION METHOD AND COMMUNICATION APPARATUS", which is incorporated herein by reference in its entirety.

### TECHNICAL FIELD

This application relates to the communication field, and specifically, to a communication method and a communication apparatus.

### BACKGROUND

With the rapid development of the 5th generation mobile communication technology, also referred to as new radio (new radio, NR), various communication requirements have emerged. To satisfy requirements of emerging services, a full duplex (full duplex, FD) solution is proposed to improve uplink coverage of time division duplex (time division duplex, TDD) systems.

Random access is a procedure performed by a terminal device for connecting to a network. The terminal device may complete uplink time synchronization with a network device through a random access procedure. For initial access, the terminal device may establish a radio resource control (radio resource control, RRC) connection to the network device through the random access procedure, to implement transmission of uplink and downlink service data. Currently, terminal devices are supported in performing random access (random access, RA) on subband full duplex (subband full duplex, SBFD) symbols/in SBFD slots. However, during the random access on the SBFD symbols/in the SBFD slots, uplink transmission and downlink transmission may cause mutual interference, affecting transmission performance.

### SUMMARY

To resolve the foregoing technical problem, this application provides a communication method and a communication apparatus, to improve random access performance.

According to a first aspect, a communication method is provided. The method may be performed by a first apparatus, or may be performed by another body. This is not limited in this application. For ease of description, the following uses an example in which the method is performed by the first apparatus for description. The first apparatus may be a terminal device, a chip or a circuit (for example, a modem (modem) chip, also referred to as a baseband (baseband) chip, or a system on chip (system on chip, SoC) chip or a system in package (system in package, SIP) chip that includes a modem core) in the terminal device, a functional module, in the terminal device, that can invoke and execute a program, or the like.

The method includes: receiving first information, where the first information indicates a first resource, the first resource includes a first time domain resource and a first frequency domain resource, the first time domain resource corresponds to the first frequency domain resource, a first part of the first time domain resource is located in a first time domain unit, a first frequency domain unit corresponding to the first time domain unit includes a first subband used for uplink transmission and a second subband used for downlink transmission, and the first frequency domain resource is located in the first frequency domain unit, where the first information further indicates whether to perform random access on the first resource; and performing or skipping performing random access on the first resource based on the first information.

According to a second aspect, a communication method is provided. The method may be performed by a second apparatus, or may be performed by another body. This is not limited in this application. For ease of description, the following uses an example in which the method is performed by the second apparatus for description. The second apparatus may be a network device, a chip or a circuit in the network device, a central unit (central unit, CU) or a distributed unit (distributed unit, DU) in the network device, or a functional module, in the network device, that can invoke and execute a program. For example, the network device includes a base station.

The method includes: determining first information, where the first information indicates a first resource, the first resource includes a first time domain resource and a first frequency domain resource, the first time domain resource corresponds to the first frequency domain resource, a first part of the first time domain resource is located in a first time domain unit, a first frequency domain unit corresponding to the first time domain unit includes a first subband used for uplink transmission and a second subband used for downlink transmission, and the first frequency domain resource is located in the first frequency domain unit, where the first information further indicates whether to perform random access on the first resource; and sending the first information.

For example, the first time domain unit includes a subband full duplex SBFD time domain unit (for example, an SBFD slot or an SBFD symbol), or a single frequency full duplex (single frequency full duplex, SFFD) time unit (for example, an SFFD slot or an SFFD symbol).

For example, in frequency domain, the second subband may be located above or below the first subband. Optionally, the second subband may include a third subband and a fourth subband, and the third subband and the fourth subband are located on both sides of the first subband in time domain.

For example, the first apparatus may be an inactive-state terminal, an idle-state terminal, or a connected-state terminal. An activation status or a connection status of the first apparatus is not limited in this application. Optionally, the first apparatus supports subband duplex, including SBFD and SFFD.

According to the foregoing solution, the second apparatus may determine the first resource and indicate the first resource to the first apparatus, and indicate whether to perform random access on the first resource. Correspondingly, the first apparatus may determine, by interpreting the information from the second apparatus, a position of the first resource, and determine whether to perform random access on the first resource. In this implementation, the second apparatus may determine, based on an interference status of cross-link interference (cross-link interference, CLI), of a cell, evaluated by the second apparatus, whether the first resource is used for initial access of the first apparatus, especially initial access of the inactive-state terminal or the idle-state terminal, so that a CLI interference level caused by random access of the first apparatus in the cell can be effectively controlled, and random access performance of the first apparatus can be improved.

In some implementations of the first aspect or the second aspect, the first information includes second information and third information, the second information indicates the first resource, and the third information indicates whether to perform random access on the first resource.

According to the foregoing solution, the second apparatus may use the first information to indicate both the first resource and whether to perform random access on the first resource. Alternatively, the second apparatus may use the second information and the third information to respectively indicate the first resource and indicate whether to perform random access on the first resource. The first information is further subdivided to provide a plurality of possible implementations.

In some implementations of the first aspect or the second aspect, performing or skipping performing random access on the first resource based on the first information includes: when the first information indicates to perform random access on the first resource, and the first apparatus is in an idle state or an inactive state, performing, by the first apparatus, random access on the first resource.

According to the foregoing solution, for an idle-state terminal or an inactive-state terminal, if the first information indicates to perform random access on the first resource, the first apparatus performs random access on the first resource. Especially, considering that the second apparatus cannot control CLI interference caused by the idle-state terminal or the inactive-state terminal, the first information indicates whether the first apparatus can perform random access on the first resource, that is, contention-based random access (contention-based random access, CBRA), to balance both initial random access performance and effective control of CLI interference of the idle-state terminal or the inactive-state terminal.

Optionally, when the first information indicates to perform random access on the first resource, and the first apparatus is in a non-idle state or a connected state, the first apparatus performs random access on the first resource.

In some implementations of the first aspect or the second aspect, performing or skipping performing random access on the first resource based on the first information includes: when the first information indicates to perform random access on the first resource and the first apparatus is in a non-idle state, skipping, by the first apparatus, performing random access on the first resource.

According to the foregoing solution, for an idle-state terminal or an inactive-state terminal, if the first information indicates to perform random access on the first resource, the first apparatus performs random access on the first resource. Especially, considering that the second apparatus cannot control CLI interference caused by the idle-state terminal or the inactive-state terminal, the first information indicates whether the first apparatus can perform random access on the first resource, to balance both initial random access performance and effective control of CLI interference of the idle-state terminal or the inactive-state terminal.

Optionally, when the first information indicates to perform random access on the first resource, and the first apparatus is in the non-idle state, the first apparatus does not perform CBRA on the first resource, and may perform contention-free random access (contention-free random access, CFRA).

Optionally, when the first information indicates not to perform random access on the first resource, and/or when the first apparatus is in the non-idle state or an active state, the first apparatus does not perform random access on the first resource.

In some implementations of the first aspect or the second aspect, a second part of the first time domain resource is located in a second time domain unit, the second part is a time domain resource of a second resource, and the second time domain unit is used only for the uplink transmission, where the first information indicates not to perform random access on the second resource; when the second resource partially overlaps a third resource, the first information indicates to perform random access on a non-overlapping resource, the non-overlapping resource is a resource that does not overlap with the second resource or the third resource, a time domain resource of the third resource is located in the second time domain unit, and the third resource is predefined or preconfigured; or when the second resource does not overlap the third resource, the first information indicates to perform random access on the second resource, a time domain resource of the third resource is located in the second time domain unit, and the third resource is predefined or preconfigured.

For example, the second time domain unit includes an uplink (uplink, UL) time domain unit, for example, a UL slot or a UL symbol.

According to the foregoing solution, for random access resources located in the SBFD time domain unit and the UL time domain unit, the second apparatus may indicate, by using the first information, the first apparatus not to use the random access resource in the UL time domain unit to perform random access, or indicate the first apparatus to perform random access on a non-overlapping random access resource in the UL time domain unit, to increase, as much as possible, resources for the first apparatus to perform random access, so as to enhance an access capability of the first apparatus, and indicate the first apparatus not to perform random access on an overlapping random access resource in the UL time domain unit, so that signal transmission interference can be effectively controlled.

In some implementations of the first aspect or the second aspect, the method further includes: when the first information indicates to perform random access on the first resource, determining a first time-frequency physical random access channel occasion (time-frequency physical random access channel occasion or PRACH occasion, RO) from the first resource; and sending a preamble on the first RO.

For example, the first information further indicates that the first RO is used for CBRA; or the first information further indicates that the first RO is used for CFRA.

According to the foregoing solution, when the first information indicates to perform random access on the first resource, the first apparatus may select the first RO from the first resource, to send the random access preamble, so as to implement random access. Further, based on the first information indicating that the first RO is used for CBRA or CFRA, the first apparatus may choose, in a targeted manner, to perform random access through CBRA or CFRA, to control signal interference as much as possible while ensuring random access performance.

According to a third aspect, a communication method is provided. The method may be performed by a first apparatus, or may be performed by another body. This is not limited in this application. For ease of description, the following uses an example in which the method is performed by the first apparatus for description. The first apparatus may be a terminal device, a chip or a circuit in the terminal device, a functional module, in the terminal device, that can invoke and execute a program, or the like.

The method includes: receiving first information, where the first information indicates a first resource, the first resource includes a first time domain resource and a first frequency domain resource, the first time domain resource corresponds to the first frequency domain resource, the first time domain resource is located in a first time domain unit, a first frequency domain unit corresponding to the first time domain unit includes a first subband used for uplink transmission and a second subband used for downlink transmission, and the first frequency domain resource is located in the first frequency domain unit; obtaining second information, and determining a first RO based on the first information and the second information, where the first RO is located on the first resource; and performing random access on the first RO.

For example, the first time domain unit includes an SBFD time domain unit (for example, an SBFD slot or an SBFD symbol), or a single frequency full duplex (single frequency full duplex, SFFD) time unit (for example, an SFFD slot or an SFFD symbol), and the second time domain unit includes an uplink (uplink, UL) time domain unit, for example, a UL slot or a UL symbol.

For example, in frequency domain, the second subband may be located above or below the first subband. Optionally, the second subband includes a third subband and a fourth subband, and the third subband and the fourth subband are located on both sides of the first subband in time domain.

According to the foregoing solution, the first apparatus may determine, by receiving the first information, the first resource used for random access, and may determine the first RO from the first resource with reference to the second information. For example, the first apparatus may send a random access preamble on the first RO, to implement uplink synchronization and complete a random access procedure. In this implementation, the first RO used for random access is selected based on the second information. This can effectively control a CLI interference level caused by random access of the first apparatus in a cell, and improve random access performance of the first apparatus.

In some implementations of the third aspect, obtaining the second information includes: receiving the second information from a second apparatus, to be specific, the second apparatus may indicate the second information to the first apparatus via signaling.

Optionally, the second information may be predefined or preconfigured. This is not limited in this application.

In some implementations of the third aspect, the second information indicates a first threshold, and the first threshold includes one or more of the following: a reference signal received power (reference signal received power, RSRP) threshold, a path loss threshold, or a transmit power threshold; and determining the first RO based on the first information and the second information includes: obtaining a first measurement result; determining a first comparison result based on the first measurement result and the first threshold; determining the first RO based on the first comparison result and a first mapping relationship, where the first mapping relationship indicates a mapping relationship between M comparison results and N RO sets, the M comparison results include the first comparison result, the first resource includes the N RO sets, the N RO sets include a first RO set, and the first RO set includes the first RO, where both M and N are integers greater than or equal to 1.

According to the foregoing solution, the comparison result is obtained by comparing the signal measurement result with the first threshold, to determine the corresponding RO set, and select the first RO used for random access from the RO set, so as to implement the uplink synchronization and complete the random access procedure. The first RO used for random access determined in this manner can effectively control a CLI interference level caused by random access of the first apparatus in the cell, and can also improve random access performance of the first apparatus.

In some implementations of the third aspect, the second information indicates a frequency distance threshold, and determining the first RO based on the first information and the second information includes: determining the first RO based on the first comparison result and a second comparison result, where the first comparison result is a result of comparison between the frequency distance threshold and a first distance, the second comparison result is a result of comparison between the frequency distance threshold and a second distance, the first distance is a distance between the first RO and a first frequency, the second distance is a distance between a second RO and the first frequency, and the first frequency is located on the second subband.

Optionally, the first frequency may be located on the first subband, for example, adjacent to a frequency on a downlink subband.

According to the foregoing solution, the first apparatus determines the first RO used for random access by comparing distances between a plurality of ROs (for example, the first RO and the second RO) and the first frequency with the frequency distance threshold. The first RO used for random access determined in this manner can effectively control a CLI interference level caused by random access of the first apparatus in the cell, and can also improve random access performance of the first apparatus.

It should be understood that the distance (namely, the first distance) between the first RO and the first frequency is greater than or equal to the frequency distance threshold, and the distance (namely, the second distance) between the second RO and the first frequency is less than or equal to the frequency distance threshold. Alternatively, the first distance is greater than or equal to the frequency distance threshold, the second distance is greater than or equal to the frequency distance threshold, and the first distance is greater than or equal to the second distance. In this case, the second RO may also be used for random access. In comparison, an effect of performing random access by using the first RO is better.

In some implementations of the third aspect, the second information indicates the frequency distance threshold, and determining the first RO based on the first information and the second information includes: randomly selecting an RO from an RO set that satisfies a distance comparison requirement as the first RO, where a distance (namely, the first distance) between the first RO and the first frequency satisfies a relationship with the frequency distance threshold.

Optionally, the first frequency may be located on the first subband, for example, adjacent to a frequency on a downlink subband.

According to the foregoing solution, the first apparatus may select one or more ROs associated with an SSB, select any RO from the one or more ROs, and calculate a distance between the RO and the first frequency. If the distance is greater than or equal to the frequency distance threshold, the first apparatus may use the first RO to perform random access. In this case, a distance between another RO on the first resource and the first frequency and a value relationship between the distance and the frequency distance threshold may not be considered. In the foregoing, the distances between the plurality of ROs and the first frequency are compared, and the distances are compared with the frequency distance threshold, to finally determine the first RO. By comparison, in this implementation, random access delay of the first apparatus can be reduced. This can improve random access performance while effectively controlling CLI interference.

In some implementations of the third aspect, the second information indicates the frequency distance threshold; and when a distance between the first RO and a second frequency is greater than or equal to the frequency distance threshold, the first RO is used for contention-based random access CBRA, and the second frequency is located on the second subband; or when the distance between the first RO and the second frequency is less than the frequency distance threshold, the first RO is used for contention-free random access CFRA.

Optionally, the second frequency may be located on the first subband, for example, adjacent to a frequency on a downlink subband.

According to the foregoing solution, if the distance between the first RO and the second frequency is greater than or equal to the frequency distance threshold, it indicates that performance of performing random access on the first RO is high, and cross-link interference is weak. In this case, the first RO may be used for CBRA. On the contrary, if the distance between the first RO and the second frequency is less than the frequency distance threshold, it indicates that performance of performing random access on the first RO is low, and cross-link interference is strong. In this case, the first RO may be used for CFRA. In this implementation, a CLI interference level caused by random access of the first apparatus in the cell can be effectively controlled, and random access performance of the first apparatus can be improved.

According to a fourth aspect, a communication method is provided. The method may be performed by a first apparatus, or may be performed by another body. This is not limited in this application. For ease of description, the following uses an example in which the method is performed by the first apparatus for description. The first apparatus may be a terminal device, a chip or a circuit in the terminal device, a functional module, in the terminal device, that can invoke and execute a program, or the like.

The method includes: receiving first information, where the first information indicates a first resource, the first resource includes a first time domain resource and a first frequency domain resource, the first time domain resource corresponds to the first frequency domain resource, the first time domain resource is located in a first time domain unit, a first frequency domain unit corresponding to the first time domain unit includes a first subband used for uplink transmission and a second subband used for downlink transmission, and the first frequency domain resource is located on the first subband; obtaining a first measurement resource, where the first measurement resource includes a second time domain resource and a second frequency domain resource, the second time domain resource corresponds to the second frequency domain resource, the second time domain resource is located in the first time domain unit, and the second frequency domain resource is located on the second subband; performing signal strength measurement on the first measurement resource to obtain a first measurement result; and determining, based on the first measurement result, whether to perform random access on the first resource.

Optionally, a resource used for signal measurement (for example, the first measurement resource) may be periodic. In other words, a quantity of first measurement resources is not limited in this application.

Optionally, a resource used for signal measurement (for example, the first measurement resource) may be located in an SBFD time domain unit, for example, in an SBFD slot or on an SBFD symbol, and a frequency domain resource may be located in a resource element (resource element, RE) corresponding to the SBFD time domain unit.

According to the foregoing solution, the first apparatus obtains the first measurement resource, performs signal monitoring on the first measurement resource to obtain the first measurement result, and then determines, based on the first measurement result, whether to perform random access on the first resource. In this implementation, whether to use the first resource to perform random access is determined based on strength of signal interference detected by the first apparatus, so that a CLI interference level caused by random access of the first apparatus in a cell can be effectively controlled, and random access performance of the first apparatus can be improved.

In some implementations of the fourth aspect, determining, based on the first measurement result, whether to perform random access on the first resource includes: when the first measurement result is greater than or equal to a first signal strength threshold, performing random access on the first resource.

In some implementations of the fourth aspect, determining, based on the first measurement result, whether to perform random access on the first resource includes: when the first measurement result is less than the first signal strength threshold, skipping performing random access on the first resource.

According to the foregoing solution, the first measurement result is compared with the first signal strength threshold, to determine whether to perform random access on the first resource. For example, when the first measurement result is greater than or equal to the first signal strength threshold, it indicates that a downlink signal is strong enough. In this case, the first apparatus may use the first resource for random access. On the contrary, when the first measurement result is less than the first signal strength threshold, it indicates that the downlink signal is weak enough. In this case, the first apparatus does not use the first resource for random access. This can effectively reduce interference caused by random access of the first apparatus, and ensure random access performance of the first apparatus.

In some implementations of the fourth aspect, the method further includes: obtaining a second measurement resource, where the second measurement resource includes a third time domain resource and a third frequency domain resource, the third time domain resource corresponds to the third frequency domain resource, the third time domain resource is located in a first time domain unit, and the third frequency domain resource is located on the first subband; performing signal strength measurement on the second measurement resource to obtain a second measurement result; and determining, based on the first measurement result and the second measurement result, whether to perform random access on the first resource.

According to the foregoing solution, the second measurement resource located on the first subband is introduced, and signal monitoring is performed on the second measurement resource to obtain the second measurement result, and whether to perform random access on the first resource is determined based on the first measurement result and the second measurement result. In this implementation, whether to use the first resource to perform random access is determined based on strength of signal interference detected by the first apparatus, so that a CLI interference level caused by random access of the first apparatus in the cell can be effectively controlled, and random access performance of the first apparatus can be improved.

In some implementations of the fourth aspect, determining, based on the first measurement result and the second measurement result, whether to perform random access on the first resource includes: when the first measurement result is greater than or equal to the first signal strength threshold, and the second measurement result is less than or equal to a second signal strength threshold, performing random access on the first resource.

According to the foregoing solution, the first measurement result is compared with the first signal strength threshold, and the second measurement result is compared with the second signal strength threshold, to determine whether to perform random access on the first resource. For example, when the first measurement result is greater than or equal to the first signal strength threshold, it indicates that a downlink signal is strong enough. In addition, when the second measurement result is less than or equal to the second signal strength threshold, it indicates that interference of an uplink signal of other UE to a downlink signal at this frequency position is weak enough. In this case, the first apparatus may use the first resource for random access. This can effectively reduce interference caused by random access of the first apparatus, and ensure random access performance of the first apparatus.

In some implementations of the fourth aspect, determining, based on the first measurement result and the second measurement result, whether to perform random access on the first resource includes: when the first measurement result is less than the first signal strength threshold, and/or the second measurement result is greater than the second signal strength threshold, skipping performing random access on the first resource.

According to the foregoing solution, the first measurement result is compared with the first signal strength threshold, and the second measurement result is compared with the second signal strength threshold, to determine whether to perform random access on the first resource. For example, when the first measurement result is less than the first signal strength threshold, it indicates that a downlink signal is weak enough. In addition, when the second measurement result is greater than the second signal strength threshold, it indicates that interference of an uplink signal of other UE to a downlink signal at this frequency position is strong enough. In this case, the first apparatus does not use the first resource for random access. This can avoid interference caused by random access of the first apparatus.

In some implementations of the fourth aspect, the second subband includes a third subband and a fourth subband, and the third subband and the fourth subband are located on both sides of the first subband in frequency domain; obtaining a third measurement resource, where the third measurement resource includes a fourth time domain resource and a fourth frequency domain resource, the fourth time domain resource corresponds to the fourth frequency domain resource, the fourth time domain resource is located in the first time domain unit, the fourth frequency domain resource is located on the third subband, and the second frequency domain resource is located on the fourth subband; performing signal strength measurement on the third measurement resource to obtain a third measurement result; and determining, based on the first measurement result and the third measurement result, whether to perform random access on the first resource.

According to the foregoing solution, the third measurement resource located on the third subband is introduced, and signal monitoring is performed on the third measurement resource to obtain the third measurement result, and then whether to perform random access on the first resource is determined based on the first measurement result and the third measurement result. In this implementation, whether to use the first resource to perform random access is determined based on strength of signal interference detected by the first apparatus, so that a CLI interference level caused by random access of the first apparatus in the cell can be effectively controlled, and random access performance of the first apparatus can be improved.

In some implementations of the fourth aspect, determining, based on the first measurement result and the third measurement result, whether to perform random access on the first resource includes: when the first measurement result is greater than or equal to the first signal strength threshold, and the third measurement result is greater than or equal to a third signal strength threshold, performing random access on the first resource.

Optionally, the first signal strength threshold and the third signal strength threshold may be the same or different. This is not limited in this application.

According to the foregoing solution, the first measurement result is compared with the first signal strength threshold, and the third measurement result is compared with the third signal strength threshold, to determine whether to perform random access on the first resource. For example, when the first measurement result is greater than or equal to the first signal strength threshold, and the third measurement result is greater than or equal to the third signal strength threshold, it indicates that a downlink signal is strong enough. In this case, the first apparatus may use the first resource for random access. This can avoid interference caused by random access of the first apparatus, and improve random access performance of the first apparatus.

In some implementations of the fourth aspect, determining, based on the first measurement result and the third measurement result, whether to perform random access on the first resource includes: when the first measurement result is less than the first signal strength threshold, and/or the third measurement result is less than the third signal strength threshold, skipping performing random access on the first resource.

According to the foregoing solution, the first measurement result is compared with the first signal strength threshold, and the third measurement result is compared with the third signal strength threshold, to determine whether to perform random access on the first resource. For example, when the first measurement result is less than the first signal strength threshold, or the third measurement result is less than the third signal strength threshold, it indicates that a downlink signal is weak enough. In this case, the first apparatus does not use the first resource for random access. This can avoid interference caused by random access of the first apparatus.

In some implementations of the fourth aspect, when random access is not performed on the first resource, a fourth measurement resource is obtained, where the fourth measurement resource includes a fifth time domain resource and a fifth frequency domain resource, the fifth time domain resource corresponds to the fifth frequency domain resource, the fifth time domain resource is located in the first time domain unit, and the fifth frequency domain resource is located on the third subband; obtaining a fifth measurement resource, where the fifth measurement resource includes a sixth time domain resource and a sixth frequency domain resource, the sixth time domain resource corresponds to the sixth frequency domain resource, the sixth time domain resource is located in the first time domain unit, and the sixth frequency domain resource is located on the fourth subband; performing signal strength measurement on the fourth measurement resource to obtain a fourth measurement result; and performing signal strength measurement on the fifth measurement resource to obtain a fifth measurement result; and determining, based on the fourth measurement result and the fifth measurement result, whether to perform random access on the first resource.

It should be noted that the third measurement resource and the fourth measurement resource are located on the third subband, and the third measurement resource and the fourth measurement resource are different. The fifth measurement resource and the second measurement resource are located on the fourth subband, and the fifth measurement resource and the second measurement resource are different. Optionally, the first measurement resource and the third measurement resource may be considered as a group of measurement resources, and the fourth measurement resource and the fifth measurement resource may be considered as a group of measurement resources. In other words, when the first apparatus finds that interference is strong after measuring signals on a first group of measurement resources, the first apparatus may continue to measure a next group of measurement resources until a measurement resource with weak interference strength is found, and then perform random access on a random access resource after the measurement resource, to effectively control CLI interference while ensuring random access performance.

According to the foregoing solution, the fourth measurement resource located on the third subband and the fifth measurement resource located on the fourth subband are introduced, signal monitoring is performed on the fourth measurement resource to obtain the fourth measurement result, signal monitoring is performed on the fifth measurement resource to obtain the fifth measurement result, and whether to perform random access on the first resource is determined based on the fourth measurement result and the fifth measurement result. In this implementation, whether to use the first resource to perform random access is determined based on strength of signal interference detected by the first apparatus, so that a CLI interference level caused by random access of the first apparatus in the cell can be effectively controlled, and random access performance of the first apparatus can be improved.

In some implementations of the fourth aspect, determining, based on the fourth measurement result and the fifth measurement result, whether to perform random access on the first resource includes: performing random access on the first resource when the fourth measurement result is greater than or equal to a fourth signal strength threshold, and the fifth measurement result is greater than or equal to a fifth signal strength threshold.

Optionally, the fourth signal strength threshold and the fifth signal strength threshold may be the same or different. This is not limited in this application.

According to the foregoing solution, the fourth measurement result is compared with the fourth signal strength threshold, and the fifth measurement result is compared with the fifth signal strength threshold, to determine whether to perform random access on the first resource. For example, when the fourth measurement result is greater than or equal to the fourth signal strength threshold, and the fifth measurement result is greater than or equal to the fifth signal strength threshold, it indicates that a downlink signal is strong enough. In this case, the first apparatus may use the first resource for random access. This can avoid interference caused by random access of the first apparatus, and improve random access performance of the first apparatus.

In some implementations of the fourth aspect, determining, based on the fourth measurement result and the fifth measurement result, whether to perform random access on the first resource includes: when the fourth measurement result is less than the fourth signal strength threshold, and/or the fifth measurement result is less than the fifth signal strength threshold, performing random access on the first resource.

According to the foregoing solution, the fourth measurement result is compared with the fourth signal strength threshold, and the fifth measurement result is compared with the fifth signal strength threshold, to determine whether to perform random access on the first resource. For example, when the fourth measurement result is less than the fourth signal strength threshold, or the fifth measurement result is less than the fifth signal strength threshold, it indicates that a downlink signal is weak enough. In this case, the first apparatus does not use the first resource for random access. This can avoid interference caused by random access of the first apparatus.

According to a fifth aspect, a communication method is provided. The method may be performed by a first apparatus, or may be performed by another body. This is not limited in this application. For ease of description, the following uses an example in which the method is performed by the first apparatus for description. The first apparatus may be a terminal device, a chip or a circuit in the terminal device, a functional module, in the terminal device, that can invoke and execute a program, or the like.

The method includes: obtaining a first resource and a second resource, where the first resource includes a first time domain resource and a first frequency domain resource, the first time domain resource corresponds to the first frequency domain resource, a first part of the first time domain resource is located in a first time domain unit, a first frequency domain unit corresponding to the first time domain unit includes a first subband used for uplink transmission and a second subband used for downlink transmission, the first frequency domain resource is located in the first frequency domain unit, a time domain resource of the second resource is located in a second time domain unit, and the second resource is predefined or preconfigured.

A time domain resource of a third resource is located in the second time domain unit, and the third resource is predefined or preconfigured.

A format length of a random access preamble sent on the first resource and the second resource is greater than a format length of a random access preamble sent on the third resource; the first resource and the second resource support repetitions of physical random access channel (physical random access channel, PRACH) transmission, and the third resource does not support repetitions of PRACH transmission, or a maximum quantity of repetitions of PRACH transmission supported by the first resource and the second resource is different from a maximum quantity of repetitions of PRACH transmission supported by the third resource; a corresponding RSRP threshold used by the first resource and the second resource to determine a quantity of repetitions (for example, 2, 4, 8, or another value) is greater than a corresponding RSRP threshold used by the third resource to determine a quantity of repetitions (for example, 2, 4, 8, or another value); a time domain resource corresponding to an RO of the first resource and the second resource is greater than a time domain resource corresponding to an RO of the third resource, or a preamble length corresponding to the first resource and the second resource is greater than a preamble length corresponding to the third resource; maximum transmit power on the first resource and the second resource (or maximum transmit power at which UE is allowed to send a PRACH) is less than maximum transmit power on the third resource (or maximum transmit power at which UE allowed to send a PRACH); or transmit power on the first resource and the second resource is less than transmit power on the third resource.

According to a sixth aspect, a communication method is provided. The method may be performed by a first apparatus, or may be performed by another body. This is not limited in this application. For ease of description, the following uses an example in which the method is performed by the first apparatus for description. The first apparatus may be a terminal device, a chip or a circuit in the terminal device, a functional module, in the terminal device, that can invoke and execute a program, or the like.

The method includes: obtaining a first measurement result; and determining a first RO or a second RO based on the first measurement result and a first threshold, where the first RO is located on a first resource, the second RO is located on a second resource, the first resource includes a first time domain resource and a first frequency domain resource, the first time domain resource corresponds to the first frequency domain resource, a first part of the first time domain resource is located in a first time domain unit, a second part of the first time domain resource is located in a second time domain unit, the second part is a time domain resource of the second resource, and the second time domain unit is used only for uplink transmission.

For example, the first time domain unit includes an SBFD time domain unit (for example, an SBFD slot or an SBFD symbol) or an SFFD time unit (for example, an SFFD slot or an SFFD symbol), and the second time domain unit includes a UL time domain unit, for example, a UL slot or a UL symbol.

In some implementations of the sixth aspect, the first apparatus obtains second information, where the second information indicates a first threshold, and the first threshold includes one or more of the following: an RSRP threshold, a path loss threshold, or a transmit power threshold. The second information may be predefined or preconfigured, or the second information may be indicated by a second apparatus via signaling.

According to the foregoing solution, the first apparatus obtains the first measurement result through signal measurement, and determines, by comparing the first measurement result and the first threshold, to perform random access on the first resource or perform random access on the second resource.

In some implementations of the sixth aspect, determining the first RO or the second RO based on the first measurement result and the first threshold includes one or more of the following: when the first measurement result is greater than or equal to the RSRP threshold, the first RO is located on the first resource; when the first measurement result is less than or equal to the RSRP threshold, the second RO is located on the second resource; when the first measurement result is less than or equal to the path loss threshold, the first RO is located on the first resource; when the first measurement result is greater than or equal to the path loss threshold, the second RO is located on the second resource; when the first measurement result is less than or equal to the transmit power threshold, the first RO is located on the first resource; or when the first measurement result is greater than or equal to the transmit power threshold, the second RO is located on the second resource.

According to the foregoing solution, if the first measurement result indicates that an RSRP measurement value is greater than or equal to the RSRP threshold, a path loss value is less than or equal to the path loss threshold, or transmit power is less than or equal to the transmit power threshold, it indicates that signal quality is high, and a CLI interference degree is small. In this case, it indicates that the first apparatus may perform random access on the first resource. On the contrary, if the first measurement result indicates that the RSRP measurement value is less than the RSRP threshold, the path loss value is greater than the path loss threshold, or the transmit power is greater than the transmit power threshold, it indicates that the signal quality is poor, a path loss is severe, and the CLI interference degree is high. In this case, it indicates that the first apparatus may not use the first resource to perform random access. This can effectively control a CLI interference level caused by random access of the first apparatus in a cell, and improve random access performance of the first apparatus.

In some implementations of the sixth aspect, determining the first RO or the second RO based on the first measurement result and the first threshold includes one or more of the following: when the first signal measurement result is less than the RSRP threshold, the first RO is located on the first resource; when the first signal measurement result is greater than or equal to the RSRP threshold, the second RO is located on the second resource; when the first signal measurement result is greater than or equal to the path loss threshold, the first RO is located on the first resource; when the first signal measurement result is less than or equal to the path loss threshold, the first RO is located on the second resource; when the first signal measurement result is greater than or equal to the transmit power threshold, the first RO is located on the first resource; or when the first signal measurement result is less than or equal to the transmit power threshold, the second RO is located on the second resource.

According to the foregoing solution, it is considered that a PRACH resource in an SBFD time domain unit may be used to extend PRACH coverage. For example, a longer random access preamble is used or a higher repetition level is allowed. In this case, determining logic for determining, based on the first threshold and the first measurement result, a PRACH resource used for random access changes. For example, when coverage of the first apparatus is limited (for example, an RSRP is small), the first apparatus may select the PRACH resource (namely, the first resource) in the SBFD time domain unit. In this implementation, random access performance of the first apparatus can be improved.

In some implementations of the sixth aspect, the second information indicates a frequency distance threshold; and when the first RO is located on the first resource, a distance between the first RO and a second frequency is greater than or equal to the frequency distance threshold, and the second frequency is located on a second subband; or when the second RO is located on the second resource, a distance between the second RO and the second frequency is less than or equal to the frequency distance threshold, and the second frequency is located on the second subband.

Optionally, the second frequency may alternatively be located on a first subband, for example, adjacent to a frequency on a downlink subband.

According to the foregoing solution, if the distance between the first RO and the second frequency is greater than or equal to the frequency distance threshold, it indicates that a CLI interference degree is low. In this case, the first apparatus may perform random access on the first resource. On the contrary, if the distance between the first RO and the second frequency is less than or equal to the frequency distance threshold, it indicates that the CLI interference degree is high. In this case, the first apparatus may not use the first resource to perform random access. This can effectively control a CLI interference level caused by random access of the first apparatus in the cell, and improve random access performance of the first apparatus.

According to a seventh aspect, a communication method is provided. The method may be performed by a first apparatus, or may be performed by another body. This is not limited in this application. For ease of description, the following uses an example in which the method is performed by the first apparatus for description. The first apparatus may be a terminal device, a chip or a circuit in the terminal device, a functional module, in the terminal device, that can invoke and execute a program, or the like.

The method includes: receiving first information, where the first information indicates a first resource, the first resource includes a first time domain resource and a first frequency domain resource, the first time domain resource corresponds to the first frequency domain resource, a first part of the first time domain resource is located in a first time domain unit, a first frequency domain unit corresponding to the first time domain unit includes a first subband used for uplink transmission and a second subband used for downlink transmission, and the first frequency domain resource is located in the first frequency domain unit, where the first information further indicates that M FDM-ROs of N FDM-ROs of the first resource are used for contention-based random access CBRA, where N is greater than or equal to M, and M and N are positive integers; and/or the first information indicates that K FDM-ROs of the N FDM-ROs of the first resource are used for contention-free random access CFRA, where K is a positive integer less than or equal to N; and determining, based on the first information, to perform CBRA on the M FDM-ROs, and/or to perform CFRA on the K FDM-ROs.

According to an eighth aspect, a communication method is provided. The method may be performed by a second apparatus, or may be performed by another body. This is not limited in this application. For ease of description, the following uses an example in which the method is performed by the second apparatus for description. The second apparatus may be a network device, a chip or a circuit in the network device, a CU or a DU in the network device, or a functional module, in the network device, that can invoke and execute a program. For example, the network device includes a base station.

The method includes: determining first information, where the first information indicates a first resource, the first resource includes a first time domain resource and a first frequency domain resource, the first time domain resource corresponds to the first frequency domain resource, a first part of the first time domain resource is located in a first time domain unit, a first frequency domain unit corresponding to the first time domain unit includes a first subband used for uplink transmission and a second subband used for downlink transmission, and the first frequency domain resource is located in the first frequency domain unit, where the first information further indicates that M frequency division multiplexing-random access occasions (frequency division multiplexing-ROs, FDM-ROs) of N FDM-ROs of the first resource are used for CBRA, where M is a positive integer less than or equal to N; and/or the first information indicates that K FDM-ROs of the N FDM-ROs of the first resource are used for CFRA, where K is a positive integer less than or equal to N; and sending the first information.

Optionally, a value relationship between M and K is not limited in this application.

For example, a value of N may be 1, 2, 4, or 8. A value of M may be {1, 2, 3, 4} or {1, 2, 3, 4, 5, 6, 7, 8}. A value of K may be {1, 2, 3, 4} or {1, 2, 3, 4, 5, 6, 7, 8}.

For example, the first time domain unit includes an SBFD time domain unit (for example, an SBFD slot or an SBFD symbol) or an SFFD time unit (for example, an SFFD slot or an SFFD symbol).

For example, in frequency domain, the second subband may be located above or below the first subband. Optionally, the second subband may include a third subband and a fourth subband, and the third subband and the fourth subband are located on both sides of the first subband in time domain.

For example, the first apparatus may be an inactive-state terminal, an idle-state terminal, or a connected-state terminal. An activation status or a connection status of the first apparatus is not limited in this application. Optionally, the first apparatus supports subband duplex.

According to the foregoing solution, the second apparatus may determine the first resource and indicate the first resource to the first apparatus, and indicate the RO, of the first resource, that is used for CBRA or CFRA. Correspondingly, the first apparatus may determine, by interpreting the information from the second apparatus, a position of the first resource, and determine to perform CBRA on the M FDM-ROs of the first resource, and/or determine to perform CFRA on the K FDM-ROs of the first resource. In this implementation, the second apparatus may determine, based on a CLI interference status, of a cell, evaluated by the second apparatus, the RO, of the first resource, that is used for CBRA or CFRA of the first apparatus, especially initial access of the inactive-state terminal or the idle-state terminal. This can effectively control a CLI interference level caused by random access of the first apparatus in the cell, and improve random access performance of the first apparatus.

In some implementations of the eighth aspect, the M FDM-ROs are ROs, of the N FDM-ROs, that are farthest from the second subband, and a sum of distances between the M FDM-ROs and the second subband is a smallest value of a sum of distances between any M FDM-ROs of the N FDM-ROs and the second subband.

For example, assuming that M=1 and N=2, it may be understood that there are two FDM-ROs (for example, an FDM-RO #1 and an FDM-RO #2) of the first resource, and a distance between the FDM-RO #1 and the second subband is greater than a distance between the FDM-RO #2 and the second subband (downlink subband). In this case, the FDM-RO #1 is selected.

For example, assuming that M=2 and N=4, it may be understood that, for four FDM-ROs (for example, an FDM-RO #1 and an FDM-RO #2, and an FDM-RO #3 and an FDM-RO #4) of the first resource, distances between the FDM-RO #1 to the FDM-RO #4 and the second subband decrease sequentially. In this case, the FDM-RO #1 and the FDM-RO #2 are selected.

According to the foregoing solution, one or more frequency division ROs that are farthest from the downlink subband may be selected for CBRA. In this way, CLI can be reduced.

According to a ninth aspect, a communication method is provided. The method may be performed by a first apparatus, or may be performed by another body. This is not limited in this application. For ease of description, the following uses an example in which the method is performed by the first apparatus for description. The first apparatus may be a terminal device, a chip or a circuit in the terminal device, a functional module, in the terminal device, that can invoke and execute a program, or the like.

The method includes: receiving first information, where the first information indicates a first resource, the first resource includes a first time domain resource and a first frequency domain resource, the first time domain resource corresponds to the first frequency domain resource, the first time domain resource is located in a first time domain unit, a first frequency domain unit corresponding to the first time domain unit includes a first subband used for uplink transmission and a second subband used for downlink transmission, and the first frequency domain resource is located on the first subband; obtaining a first measurement resource, where the first measurement resource includes a second time domain resource and a second frequency domain resource, the second time domain resource corresponds to the second frequency domain resource, the second time domain resource is located in the first time domain unit, and the second frequency domain resource is located on the second subband; performing signal strength measurement on the first measurement resource to obtain a first measurement result; and determining, based on the first measurement result, whether to perform random access on the first resource;

For example, when it is determined that random access is to be performed on the first resource, and the second subband may be located above or below the first subband, the first resource is located in the middle of the first subband and at a position farthest from the second subband, a resource used to send a random access response (random access response, RAR) is located at the bottom of the second subband, a resource used to send a message 3 (msg3) is located in the middle of the first subband, a resource used to send a message 4 (msg4) is located at the bottom of the second subband, and a resource used to send a message (msg5) is located in the middle of the first subband. In other words, a resource position for sending a PUSCH may be located in the middle of the first subband, and a resource position for sending a PDSCH may be located at the bottom of the second subband. This can improve random access performance while effectively controlling CLI interference.

For example, when it is determined that random access is to be performed on the first resource, if the second subband includes a third subband and a fourth subband, and the third subband and the fourth subband are located on both sides of the first subband in time domain, the first resource may be located in the middle of the first subband and at a position farthest from the second subband, a resource used to send a RAR is located at the top of the third subband or at the bottom of the fourth subband, a resource used to send a msg3 is located in the middle of the first subband, a resource used to send a msg4 is located at the top of the third subband or at the bottom of the fourth subband, and a resource used to send a msg5 is located in the middle of the first subband. In other words, a resource position for sending a physical uplink shared channel (physical uplink shared channel, PUSCH) by the first apparatus may be located in the middle of the first subband, and a resource position for sending a physical downlink shared channel (physical downlink shared channel, PDSCH) by the second apparatus may be located at the top of the third subband or at the bottom of the fourth subband. This can improve random access performance while effectively controlling CLI interference.

According to a tenth aspect, a communication method is provided. The method may be performed by a first apparatus, or may be performed by another body. This is not limited in this application. For ease of description, the following uses an example in which the method is performed by the first apparatus for description. The first apparatus may be a terminal device, a chip or a circuit in the terminal device, a functional module, in the terminal device, that can invoke and execute a program, or the like.

The method includes: receiving first information, where the first information indicates a first resource, the first resource includes a first time domain resource and a first frequency domain resource, the first time domain resource corresponds to the first frequency domain resource, a first part of the first time domain resource is located in a first time domain unit, a first frequency domain unit corresponding to the first time domain unit includes a first subband used for uplink transmission and a second subband used for downlink transmission, the first frequency domain resource is located in the first frequency domain unit, a second part of the first time domain resource is located in a second time domain unit, the second part is a time domain resource of a second resource, and the second time domain unit is used only for the uplink transmission, where the first information further indicates whether to perform random access on the first resource; and performing or skipping performing random access on the first resource based on the first information.

For example, the first information indicates not to perform random access on the second resource.

Alternatively, for example, when the second resource partially overlaps a third resource, the first information indicates to perform random access on a non-overlapping resource, the non-overlapping resource is a resource that does not overlap with the second resource or the third resource, a time domain resource of the third resource is located in the second time domain unit, and the third resource is predefined or preconfigured.

Alternatively, for example, when the second resource does not overlap the third resource, the first information indicates to perform random access on the second resource, a time domain resource of the third resource is located in the second time domain unit, and the third resource is predefined or preconfigured.

According to an eleventh aspect, a first apparatus is provided. The first apparatus has a function of implementing the first aspect. For example, the first apparatus includes a corresponding module, unit, or means (means) for performing the operation in the first aspect. The module, unit, or means may be specifically implemented by using software, may be implemented by using hardware, or may be implemented by using software in combination with hardware.

In a possible design, the first apparatus includes: a transceiver unit, configured to receive first information, where the first information indicates a first resource, the first resource includes a first time domain resource and a first frequency domain resource, the first time domain resource corresponds to the first frequency domain resource, a first part of the first time domain resource is located in a first time domain unit, a first frequency domain unit corresponding to the first time domain unit includes a first subband used for uplink transmission and a second subband used for downlink transmission, and the first frequency domain resource is located in the first frequency domain unit, where the first information further indicates whether to perform random access on the first resource; and a processing unit, configured to perform or skip performing random access on the first resource based on the first information.

The transceiver unit may perform receiving and sending in the first aspect, and the processing unit may perform processing other than the receiving and sending in the first aspect.

According to a twelfth aspect, a second apparatus is provided. The second apparatus has a function of implementing the second aspect. For example, the second apparatus includes a corresponding module, unit, or means (means) for performing the operation in the second aspect. The module, unit, or means may be specifically implemented by using software, may be implemented by using hardware, or may be implemented by using software in combination with hardware.

In a possible design, the second apparatus includes: a processing unit, configured to determine first information, where the first information indicates a first resource, the first resource includes a first time domain resource and a first frequency domain resource, the first time domain resource corresponds to the first frequency domain resource, a first part of the first time domain resource is located in a first time domain unit, a first frequency domain unit corresponding to the first time domain unit includes a first subband used for uplink transmission and a second subband used for downlink transmission, and the first frequency domain resource is located in the first frequency domain unit, where the first information further indicates whether to perform random access on the first resource; and a transceiver unit, configured to send the first information.

The transceiver unit may perform receiving and sending in the second aspect, and the processing unit may perform processing other than the receiving and sending in the second aspect.

According to a thirteenth aspect, a first apparatus is provided. The first apparatus has a function of implementing the third aspect. For example, the first apparatus includes a corresponding module, unit, or means (means) for performing the operation in the third aspect. The module, unit, or means may be specifically implemented by using software, may be implemented by using hardware, or may be implemented by using software in combination with hardware.

In a possible design, the first apparatus includes: a receiving unit, configured to receive first information, where the first information indicates a first resource, the first resource includes a first time domain resource and a first frequency domain resource, the first time domain resource corresponds to the first frequency domain resource, the first time domain resource is located in a first time domain unit, a first frequency domain unit corresponding to the first time domain unit includes a first subband used for uplink transmission and a second subband used for downlink transmission, and the first frequency domain resource is located in the first frequency domain unit; and a processing unit, configured to: obtain second information, and determine a first RO based on the first information and the second information, where the first RO is located on the first resource, where the processing unit is further configured to perform random access on the first RO.

The transceiver unit may perform receiving and sending in the third aspect, and the processing unit may perform processing other than the receiving and sending in the third aspect.

According to a fourteenth aspect, a first apparatus is provided. The first apparatus has a function of implementing the fourth aspect. For example, the first apparatus includes a corresponding module, unit, or means (means) for performing the operation in the fourth aspect. The module, unit, or means may be specifically implemented by using software, may be implemented by using hardware, or may be implemented by using software in combination with hardware.

In a possible design, the first apparatus includes: a receiving unit, configured to receive first information, where the first information indicates a first resource, the first resource includes a first time domain resource and a first frequency domain resource, the first time domain resource corresponds to the first frequency domain resource, the first time domain resource is located in a first time domain unit, a first frequency domain unit corresponding to the first time domain unit includes a first subband used for uplink transmission and a second subband used for downlink transmission, and the first frequency domain resource is located on the first subband; and a processing unit, configured to obtain a first measurement resource, where the first measurement resource includes a second time domain resource and a second frequency domain resource, the second time domain resource corresponds to the second frequency domain resource, the second time domain resource is located in the first time domain unit, and the second frequency domain resource is located on the second subband, where the processing unit is further configured to perform signal strength measurement on the first measurement resource to obtain a first measurement result, and the processing unit is further configured to determine, based on the first measurement result, whether to perform random access on the first resource.

The transceiver unit may perform receiving and sending in the fourth aspect, and the processing unit may perform processing other than the receiving and sending in the fourth aspect.

According to a fifteenth aspect, a first apparatus is provided. The first apparatus has a function of implementing the fifth aspect. For example, the first apparatus includes a corresponding module, unit, or means (means) for performing the operation in the fifth aspect. The module, unit, or means may be specifically implemented by using software, may be implemented by using hardware, or may be implemented by using software in combination with hardware.

In a possible design, the first apparatus includes: a processing unit, configured to obtain a first resource and a second resource, where the first resource includes a first time domain resource and a first frequency domain resource, the first time domain resource corresponds to the first frequency domain resource, a first part of the first time domain resource is located in a first time domain unit, a first frequency domain unit corresponding to the first time domain unit includes a first subband used for uplink transmission and a second subband used for downlink transmission, the first frequency domain resource is located in the first frequency domain unit, a time domain resource of the second resource is located in a second time domain unit, and the second resource is predefined or preconfigured. A format length of a random access preamble sent on the first resource is greater than a format length of a random access preamble sent on the second resource; the first resource uses repetitions of PRACH transmission, and the second resource does not use repetitions of PRACH transmission; a reference signal received power RSRP threshold used by the first resource to determine a quantity of repetitions is greater than an RSRP threshold used by the second resource to determine a quantity of repetitions; the time domain resource of the first resource is greater than the time domain resource of the second resource; maximum transmit power on the first resource (in other words, maximum transmit power allowed to be used by UE) is less than maximum transmit power on the second resource; or transmit power on the first resource is less than transmit power on the second resource.

The transceiver unit may perform receiving and sending in the fifth aspect, and the processing unit may perform processing other than the receiving and sending in the fifth aspect.

According to a sixteenth aspect, a first apparatus is provided. The first apparatus has a function of implementing the sixth aspect. For example, the first apparatus includes a corresponding module, unit, or means (means) for performing the operation in the sixth aspect. The module, unit, or means may be specifically implemented by using software, may be implemented by using hardware, or may be implemented by using software in combination with hardware.

In a possible design, the first apparatus includes: a processing unit, configured to obtain a first measurement result, where the processing unit is further configured to determine a first RO or a second RO based on the first measurement result and a first threshold, where the first RO is located on a first resource, the second RO is located on a second resource, the first resource includes a first time domain resource and a first frequency domain resource, the first time domain resource corresponds to the first frequency domain resource, a first part of the first time domain resource is located in a first time domain unit, a second part of the first time domain resource is located in a second time domain unit, the second part is a time domain resource of the second resource, and the second time domain unit is used only for uplink transmission.

The transceiver unit may perform receiving and sending in the sixth aspect, and the processing unit may perform processing other than the receiving and sending in the sixth aspect.

According to a seventeenth aspect, a first apparatus is provided. The first apparatus has a function of implementing the seventh aspect. For example, the first apparatus includes a corresponding module, unit, or means (means) for performing the operation in the seventh aspect. The module, unit, or means may be specifically implemented by using software, may be implemented by using hardware, or may be implemented by using software in combination with hardware.

In a possible design, the first apparatus includes: a transceiver unit, configured to receive first information, where the first information indicates a first resource, the first resource includes a first time domain resource and a first frequency domain resource, the first time domain resource corresponds to the first frequency domain resource, a first part of the first time domain resource is located in a first time domain unit, a first frequency domain unit corresponding to the first time domain unit includes a first subband used for uplink transmission and a second subband used for downlink transmission, and the first frequency domain resource is located in the first frequency domain unit, where the first information further indicates that M FDM-ROs of N FDM-ROs of the first resource are used for contention-based random access CBRA, where N is greater than or equal to M, and M and N are positive integers; and/or the first information indicates that K FDM-ROs of the N FDM-ROs of the first resource are used for contention-free random access CFRA, where K is a positive integer less than or equal to N; and a processing unit, configured to determine, based on the first information, to perform CBRA on the M FDM-ROs, and/or to perform CFRA on the K FDM-ROs.

The transceiver unit may perform receiving and sending in the seventh aspect, and the processing unit may perform processing other than the receiving and sending in the seventh aspect.

According to an eighteenth aspect, a second apparatus is provided. The second apparatus has a function of implementing the eighth aspect. For example, the second apparatus includes a corresponding module, unit, or means (means) for performing the operation in the eighth aspect. The module, unit, or means may be specifically implemented by using software, may be implemented by using hardware, or may be implemented by using software in combination with hardware.

In a possible design, the second apparatus includes: a processing unit, configured to determine first information, where the first information indicates a first resource, the first resource includes a first time domain resource and a first frequency domain resource, the first time domain resource corresponds to the first frequency domain resource, a first part of the first time domain resource is located in a first time domain unit, a first frequency domain unit corresponding to the first time domain unit includes a first subband used for uplink transmission and a second subband used for downlink transmission, and the first frequency domain resource is located in the first frequency domain unit, where the first information further indicates that M FDM-ROs of N FDM-ROs of the first resource are used for CBRA; where M is a positive integer less than or equal to N; and/or the first information indicates that K FDM-ROs of the N FDM-ROs of the first resource are used for CFRA, where K is a positive integer less than or equal to N; and a transceiver unit, configured to send the first information.

The transceiver unit may perform receiving and sending in the eighth aspect, and the processing unit may perform processing other than the receiving and sending in the eighth aspect.

According to a nineteenth aspect, a first apparatus is provided. The first apparatus has a function of implementing the ninth aspect. For example, the first apparatus includes a corresponding module, unit, or means (means) for performing the operation in the ninth aspect. The module, unit, or means may be specifically implemented by using software, may be implemented by using hardware, or may be implemented by using software in combination with hardware.

In a possible design, the first apparatus includes: a transceiver unit, configured to receive first information, where the first information indicates a first resource, the first resource includes a first time domain resource and a first frequency domain resource, the first time domain resource corresponds to the first frequency domain resource, the first time domain resource is located in a first time domain unit, a first frequency domain unit corresponding to the first time domain unit includes a first subband used for uplink transmission and a second subband used for downlink transmission, and the first frequency domain resource is located on the first subband; and a processing unit, configured to: obtain a first measurement resource, where the first measurement resource includes a second time domain resource and a second frequency domain resource, the second time domain resource corresponds to the second frequency domain resource, the second time domain resource is located in the first time domain unit, and the second frequency domain resource is located on the second subband; and perform signal strength measurement on the first measurement resource to obtain a first measurement result, where the processing unit is further configured to determine, based on the first measurement result, whether to perform random access on the first resource.

For example, when it is determined that random access is to be performed on the first resource, and the second subband may be located above or below the first subband, the first resource is located in the middle of the first subband and at a position farthest from the second subband, a resource used to send a RAR is located at the bottom of the second subband, a resource used to send a msg3 is located in the middle of the first subband, a resource used to send a msg4 is located at the bottom of the second subband, and a resource used to send a msg5 is located in the middle of the first subband. In other words, a resource position for sending a PUSCH may be located in the middle of the first subband, and a resource position for sending a PDSCH may be located at the bottom of the second subband. This can improve random access performance while effectively controlling CLI interference.

For example, when it is determined that random access is to be performed on the first resource, if the second subband includes a third subband and a fourth subband, and the third subband and the fourth subband are located on both sides of the first subband in time domain, the first resource may be located in the middle of the first subband and at a position farthest from the second subband, a resource used to send a RAR is located at the top of the third subband or at the bottom of the fourth subband, a resource used to send a msg3 is located in the middle of the first subband, a resource used to send a msg4 is located at the top of the third subband or at the bottom of the fourth subband, and a resource used to send a msg5 is located in the middle of the first subband. In other words, a resource position for sending a PUSCH by the first apparatus may be located in the middle of the first subband, and a resource position for sending a PDSCH by the second apparatus may be located at the top of the third subband or at the bottom of the fourth subband. This can improve random access performance while effectively controlling CLI interference.

The transceiver unit may perform receiving and sending in the ninth aspect, and the processing unit may perform processing other than the receiving and sending in the ninth aspect.

According to a twentieth aspect, a first apparatus is provided. The first apparatus has a function of implementing the ninth aspect. For example, the first apparatus includes a corresponding module, unit, or means (means) for performing the operation in the ninth aspect. The module, unit, or means may be specifically implemented by using software, may be implemented by using hardware, or may be implemented by using software in combination with hardware.

In a possible design, the first apparatus includes: a transceiver unit, configured to receive first information, where the first information indicates a first resource, the first resource includes a first time domain resource and a first frequency domain resource, the first time domain resource corresponds to the first frequency domain resource, a first part of the first time domain resource is located in a first time domain unit, a first frequency domain unit corresponding to the first time domain unit includes a first subband used for uplink transmission and a second subband used for downlink transmission, the first frequency domain resource is located in the first frequency domain unit, a second part of the first time domain resource is located in a second time domain unit, the second part is a time domain resource of a second resource, and the second time domain unit is used only for the uplink transmission, where the first information further indicates whether to perform random access on the first resource; and a processing unit, configured to perform or skip performing random access on the first resource based on the first information.

For example, the first information indicates not to perform random access on the second resource.

Alternatively, for example, when the second resource partially overlaps a third resource, the first information indicates to perform random access on a non-overlapping resource, the non-overlapping resource is a resource that does not overlap with the second resource or the third resource, a time domain resource of the third resource is located in the second time domain unit, and the third resource is predefined or preconfigured.

Alternatively, for example, when the second resource does not overlap the third resource, the first information indicates to perform random access on the second resource, a time domain resource of the third resource is located in the second time domain unit, and the third resource is predefined or preconfigured.

The transceiver unit may perform receiving and sending in the tenth aspect, and the processing unit may perform processing other than the receiving and sending in the tenth aspect.

According to a twenty-first aspect, a communication apparatus is provided. The communication apparatus may be the foregoing first apparatus or the foregoing second apparatus. The communication apparatus includes a transceiver, a processor, and a memory. The processor is configured to control the transceiver to receive or send a signal. The memory is configured to store a computer program. The processor is configured to invoke the computer program from the memory and run the computer program, to cause the communication apparatus to perform the method according to any one of the possible implementations of the first aspect to the tenth aspect.

Optionally, there are one or more processors, and there are one or more memories.

Optionally, the memory and the processor may be integrated together, or the memory and the processor may be separately disposed.

Optionally, the communication apparatus further includes a transmitter machine (transmitter) and a receiver machine (receiver).

According to a twenty-second aspect, a communication system is provided. The communication system includes a first apparatus and a second apparatus, where the first apparatus is configured to perform the method in any one of the possible implementations of the first aspect, the third aspect to the seventh aspect, the ninth aspect, or the tenth aspect, and the second apparatus is configured to perform the method in any one of the possible implementations of the second aspect or the eighth aspect.

For example, the first apparatus may be a terminal device, a chip or a circuit in the terminal device, or a functional module, in the terminal device, that can invoke and execute a program.

For example, the second apparatus may be a network device, a chip or a circuit in the network device, a CU or a DU in the network device, or a functional module, in the network device, that can invoke and execute a program.

According to a twenty-third aspect, a computer-readable storage medium is provided. The computer-readable storage medium stores computer program code or instructions. When the computer program code or the instructions are run, the method in any one of the possible implementations of the first aspect to the tenth aspect is implemented.

According to a twenty-fourth aspect, a chip is provided. The chip includes at least one processor, the at least one processor is coupled to a memory, and the memory is configured to store a computer program. When the computer program is run, the method in any one of the possible implementations of the first aspect to the tenth aspect is implemented.

For example, the chip may include an input circuit or interface configured to send information or data and an output circuit or interface configured to receive information or data.

According to a twenty-fifth aspect, a computer program product is provided. The computer program product includes computer program code or instructions. When the computer program code or the instructions are run, the method in any one of the possible implementations of the first aspect to the tenth aspect is implemented.

According to a twenty-sixth aspect, a computer program is provided. When the computer program is run, the method in any one of the possible implementations of the first aspect to the tenth aspect is implemented.

It should be understood that, for beneficial effects of the eleventh aspect to the twenty-sixth aspect, refer to any one of the first aspect to the tenth aspect and the possible implementations thereof. Details are not described herein again.

### BRIEF DESCRIPTION OF DRAWINGS

FIG. 1 is a diagram of a communication system applicable to this application;
FIG. 2 is a diagram of time-frequency division in an SBFD solution;
FIG. 3a to FIG. 3c are diagrams of SBFD-specific uplink and downlink slot configurations;
FIG. 4 is a schematic flowchart of a four-step random access procedure;
FIG. 5 is a schematic flowchart of a two-step random access procedure;
FIG. 6 is a diagram of configuring a PRACH in a UL slot;
FIG. 7a and FIG. 7b are diagrams of time-frequency resources of a PRACH;
FIG. 8a to FIG. 8c are diagrams of RO-SSB association relationships;
FIG. 9 is an interaction flowchart of a communication method according to an embodiment of this application;
FIG. 10a to FIG. 10c are diagrams of a PRACH resource in an SBFD slot and a UL slot according to embodiments of this application;
FIG. 11 is an interaction flowchart of another communication method according to an embodiment of this application;
FIG. 12a to FIG. 12c are diagrams of position relationships between a first resource and an RO according to embodiments of this application;
FIG. 13a and FIG. 13b are diagrams of a random access resource used for CFRA or CBRA according to embodiments of this application;
FIG. 14 is an interaction flowchart of still another communication method according to an embodiment of this application;
FIG. 15a to FIG. 15d are diagrams of position relationships between a measurement resource and a PRACH resource according to embodiments of this application;
FIG. 16a and FIG. 16b are diagrams of position relationships between messages sent during random access according to embodiments of this application;
FIG. 17a to FIG. 17g are diagrams of positions of a first frequency according to embodiments of this application;
FIG. 18 is a block diagram of a communication apparatus according to an embodiment of this application; and
FIG. 19 is a block diagram of another communication apparatus according to an embodiment of this application.

### DESCRIPTION OF EMBODIMENTS

The following describes technical solutions in embodiments of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, new radio (new radio, NR), a future communication system, or vehicle-to-everything (vehicle-to-X, V2X), where V2X may include vehicle to network (vehicle to network, V2N), vehicle-to-vehicle (vehicle-to-vehicle, V2V), vehicle to infrastructure (vehicle to infrastructure, V2I), vehicle to pedestrian (vehicle to pedestrian, V2P), and the like, a long term evolution-vehicle (long term evolution-vehicle, LTE-V) technology, an internet of vehicles, machine-type communication (machine-type communication, MTC), an internet of things (internet of things, IoT), a long term evolution-machine (long term evolution-machine, LTE-M) technology, machine to machine (machine to machine, M2M), and the like.

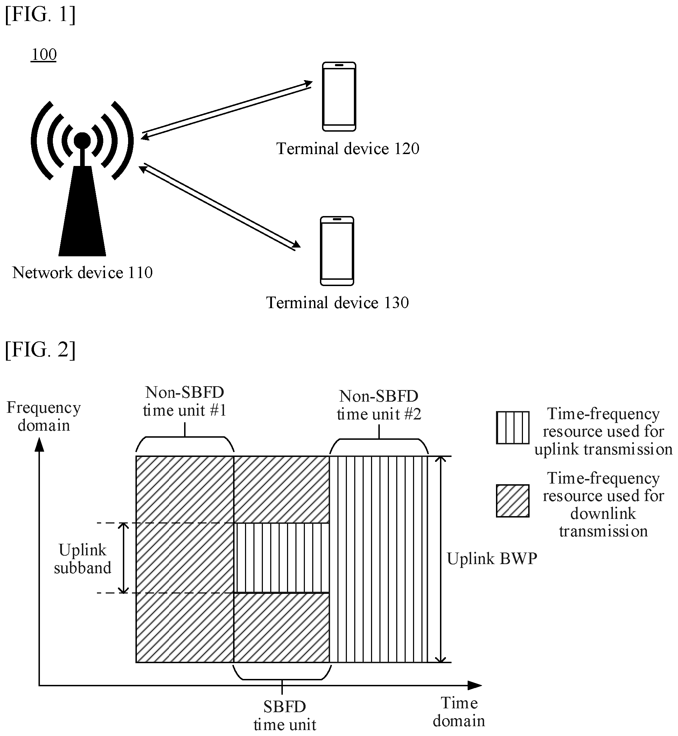

FIG. 1 is a diagram of a communication system applicable to this application. As shown in FIG. 1, the communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120 or the terminal device 130 via a radio link, to exchange information. It may be understood that the network device and the terminal device may also be referred to as communication devices or communication apparatuses.

The network device is a network side device having a wireless transceiver function. The network device may be an apparatus, in a radio access network (radio access network, RAN), that provides a wireless communication function for the terminal device, and is referred to as a RAN device. The RAN may be a cellular system related to the 3rd generation partnership project (3rd generation partnership project, 3GPP), for example, a 5G mobile communication system or a future-oriented evolved system (for example, a 6G mobile communication system). The RAN may alternatively be an open radio access network (open RAN, O-RAN, or ORAN), a cloud radio access network (cloud radio access network, CRAN), or a wireless fidelity (wireless fidelity, Wi-Fi) system. For example, the network device may be a base station (base station), an evolved NodeB (evolved NodeB, eNodeB), a next generation NodeB (next generation NodeB, gNB) in a 5G mobile communication system, a base station subsequently evolved in 3GPP, a transmission reception point (transmission reception point, TRP), an access node in a Wi-Fi system, a wireless relay node, a wireless backhaul node, or the like. In communication systems using different radio access technologies (radio access technologies, RATs), names of devices having base station functions may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include at least one of the following: one or more central units (central units, CUs), one or more distributed units (distributed units, DUs), or one or more radio units (radio units, RUs). In different systems, the CU (or a CU-CP and a CU-UP), the DU, or the RU may alternatively have different names, but a person skilled in the art may understand meanings of the names. For example, in an ORAN system, the CU may also be referred to as an O-CU (open CU), the DU may also be referred to as an O-DU (open DU), the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module. For example, functions of the CU may be implemented by using one entity or different entities. For example, the functions of the CU are further divided. In other words, a control plane and a user plane are separated and implemented by using different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing non-real-time protocols and services, and implements functions of a radio resource control (radio resource control, RRC) layer and a packet data convergence protocol (packet data convergence protocol, PDCP) layer. The DU is responsible for processing physical layer protocols and real-time services, and implements functions of a radio link control (radio link control, RLC) layer, a media access control (media access control, MAC) layer, and a physical (physical, PHY) layer. In this way, some functions of a radio access network device may be implemented by using a plurality of network function entities. These network function entities may be network elements in a hardware device, may be software functions run on dedicated hardware, or may be virtualized functions instantiated on a platform (for example, a cloud platform). The network device may further include an active antenna unit (active antenna unit, AAU for short). The AAU implements some processing functions of the physical layer, radio frequency processing, and active antenna-related functions. Information at the RRC layer is eventually converted into information at the PHY layer, or is converted from information at the PHY layer. Therefore, in this architecture, higher layer signaling, for example, RRC layer signaling, may also be considered as being sent by the DU or sent by the DU and the AAU. It may be understood that the network device may be a device including one or more of a CU node, a DU node, and an AAU node. In addition, the CU may be classified as a network device in an access network (radio access network, RAN), or the CU may be classified as a network device in a core network (core network, CN). This is not limited in this application. For another example, in a vehicle-to-everything (vehicle-to-everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device through a relay station. In embodiments of this application, an apparatus configured to implement a function of the network device may be the network device, or may be an apparatus that can support the network device in implementing the function, for example, a chip system or a combined device or component that can implement the function of the access network device. The apparatus may be installed in the network device. In embodiments of this application, the chip system may include a chip, or may include a chip and another discrete device.

The terminal device is a user side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect persons, things, machines, and the like, and may be widely used in various scenarios, for example, cellular communication, device-to-device (device-to-device, D2D) communication, V2X communication, machine-to-machine/machine-type communication (machine-to-machine/machine-type communication, M2M/MTC), internet of things, virtual reality (virtual reality, VR), augmented reality (augmented reality, AR), industrial control (industrial control), self driving (self driving), remote medical (remote medical), smart grid (smart grid), smart furniture, smart office, smart wearable, smart transportation, smart city (smart city), uncrewed aerial vehicle, and robot. For example, the terminal device may be a handheld terminal in the cellular communication, a communication device in the D2D, an internet of things device in the MTC, a surveillance camera in the smart transportation and the smart city, or a communication device in the uncrewed aerial vehicle. The terminal device may be sometimes referred to as user equipment (user equipment, UE), a user terminal, a user apparatus, a subscriber unit, a subscriber station, a terminal, an access terminal, an access station, a UE station, a remote station, a mobile device, a wireless communication device, or the like. The terminal device may alternatively be a terminal device in an IoT system. IoT is an important part of future development of information technologies. A main technical feature of IoT is connecting things to networks by using communication technologies, to implement an intelligent network for interconnection between persons and machines and between things. In embodiments of this application, the IoT technology can implement massive connections, deep coverage, and terminal power saving by using, for example, a narrowband (narrowband, NB) technology. In embodiments of this application, an apparatus configured to implement a function of the terminal device may be the terminal device, or may be an apparatus that can support the terminal device in implementing the function, for example, a chip system or a combined device or component that can implement the function of the terminal device. The apparatus may be installed in the terminal device.

The network device and the terminal device may be deployed on land, where the deployment includes indoor or outdoor, or handheld or vehicle-mounted deployment; may be deployed on water; or may be deployed on airplanes, balloons, and satellites in the air. Scenarios in which the network device and the terminal device are located are not limited in embodiments of this application.

For example, the communication system 100 may further include an application function (application function, AF) network element. The AF network element is a control plane network function provided by an operator network, and is configured to provide application layer information. The communication system 100 may further include a session management function (session management function, SMF) network element. The SMF is a control plane network function provided by the operator network. In embodiments of this application, when the communication system 100 includes the AF network element and the SMF network element, the AF may send service-related information to the network device through the SMF.

For ease of understanding of embodiments of this application, terms or technologies in this application are briefly described first.

### 1. TDD

In TDD, time domain resources are divided into uplink and downlink resources. For example, a possible TDD uplink/downlink configuration is DDDSU, where D represents a downlink slot, each symbol in the downlink slot is a downlink symbol, U represents an uplink slot, each symbol in the uplink slot is an uplink symbol, S is a special slot, and the special slot includes at least a flexible symbol. Limited uplink time domain resource assignment results in decreased uplink coverage and increased delay in TDD.

### 2. SBFD

In an SBFD solution, one carrier is divided into a plurality of overlapping or non-overlapping subbands, and transmission directions of different subbands may be different. In other words, one carrier includes a first subband and a second subband that are non-overlapping, and transmission directions of the first subband and the second subband are different. It should be noted that the first subband and the second subband are two types of subbands with different transmission directions, and do not mean that one carrier includes only two subbands. For example, one carrier includes a subband #1 and a subband #2, and transmission directions of the subband #1 and the subband #2 are different. Alternatively, one carrier includes a subband #1, a subband #2, and a subband #3, transmission directions of the subband #1 and the subband #3 are the same, and transmission directions of the subband #1 and the subband #2 are different.

In this application, SBFD includes subband overlapping full duplex (subband overlapping full duplex) and subband non-overlapping full duplex (subband non-overlapping full duplex).

### 3. Subband

A subband is a part of a frequency band in a carrier, namely, one or more consecutive PRBs in frequency domain. In this application, a subband used for uplink transmission is referred to as an uplink subband, and a subband used for downlink transmission is referred to as a downlink subband. The subband may also be understood as a frequency resource. Currently, a base station supports FD SBFD, to be specific, in one slot, sending on an uplink subband and receiving on a downlink subband can be simultaneously performed. A terminal device supports only half duplex (Half duplex, HF) SBFD, to be specific, in one slot, sending can be performed only on an uplink subband, or receiving can be performed only on a downlink subband.

### 4. SBFD time unit

Frequency resources in an SBFD time unit include an uplink frequency resource and a downlink frequency resource, where the uplink frequency resource is used for uplink transmission, and the downlink frequency resource is used for downlink transmission. It may be understood that the SBFD time unit includes subbands used for the uplink transmission and the downlink transmission, and a base station may perform an SBFD operation by using the subbands in the SBFD time unit. In embodiments of this application, when a time unit is a symbol, the SBFD time unit is an SBFD symbol. When a time unit is a slot, a subframe, a half-frame, a frame, a mini-subframe, a mini-slot, or a transmission occasion (transmission occasion, TO), the SBFD time unit may be a time unit including an SBFD symbol.

It should be noted that a frequency domain resource in an SBFD time unit in this application may include a downlink (downlink, DL) subband (subband) and an uplink (uplink, UL) subband. To avoid cross-link interference between downlink transmission on the DL subband and uplink transmission on the UL subband, a guard band (guard band) may be further defined between the DL subband and the UL subband. Whether a guard band exists between the DL subband and the UL subband, and if the guard band exists, whether transmission can be performed on the guard band are not limited in this application. In addition, whether the DL subband and the UL subband may overlap is not limited in this application.

### 5. Non-SBFD time unit

A frequency resource corresponding to each of all symbols included in a non-SBFD time unit is used only for downlink transmission or used only for uplink transmission. In embodiments of this application, when a time unit is a symbol, the non-SBFD time unit is a non-SBFD symbol. When a time unit is a slot, a subframe, a half-frame, a frame, a mini-subframe, a mini-slot, or a TO, the non-SBFD time unit may be a time unit including no SBFD symbol. For example, all the symbols in the non-SBFD time unit are downlink symbols; all the symbols in the non-SBFD time unit are uplink symbols; all the symbols in the non-SBFD time unit are flexible symbols; in a non-full duplex time unit, some symbols are downlink symbols, and some symbols are uplink symbols; in the non-full duplex time unit, some symbols are downlink symbols, some symbols are uplink symbols, and some symbols are flexible symbols; in the non-full duplex time unit, some symbols are downlink symbols, and some symbols are flexible symbols; or in the non-full duplex time unit, some symbols are uplink symbols, and some symbols are flexible symbols. For example, rectangles filled with vertical bars in FIG. 2 represent a group of time-frequency resources used for uplink transmission, and slots in a time domain range occupied by the time-frequency resources are referred to as uplink time units. Transmission directions of all frequency resources in these time units are uplink, and these time units may be referred to as non-SBFD time units.

FIG. 2 is a diagram of time-frequency division in an SBFD solution. A horizontal axis represents a time domain, and includes an SBFD time unit, a non-SBFD time unit #1, and a non-SBFD time unit #2. A vertical axis represents a frequency domain, and includes an uplink BWP. In FIG. 2, a rectangle filled with forward slashes represents a time-frequency resource used for downlink transmission, and a rectangle filled with vertical bars represents a time-frequency resource used for uplink transmission. A frequency resource in the SBFD time unit includes an uplink subband and a downlink subband. The non-SBFD time unit #1 may be a downlink symbol or a flexible symbol, and the non-SBFD time unit #2 may be an uplink symbol or a flexible symbol.

### 6. SBFD-specific uplink and downlink slot configurations

Based on different configurations of an uplink subband and a downlink subband in a slot, for example, SBFD-specific uplink and downlink slot configurations may include the following three types: XXXXX, XXXXU, and DXXXU, where D represents a downlink time unit, all symbols in the downlink time unit are downlink symbols, no uplink subband can be configured on the downlink symbols, U represents an uplink time unit, all symbols in the uplink time unit are uplink symbols, no downlink subband can be configured on the uplink symbols, X represents an SBFD time unit, and each symbol in the SBFD time unit may be configured with at least one uplink subband and at least one downlink subband.

It should be understood that quantities of X in XXXXX, XXXXU, and DXXXU are merely examples for description, and the quantities of X may be configured by a network device based on actual situations. In addition, XXXXX, XXXXU, and DXXXU may be configured via cell-level uplink and downlink slot configuration signaling and UE-level uplink and downlink slot configuration signaling.

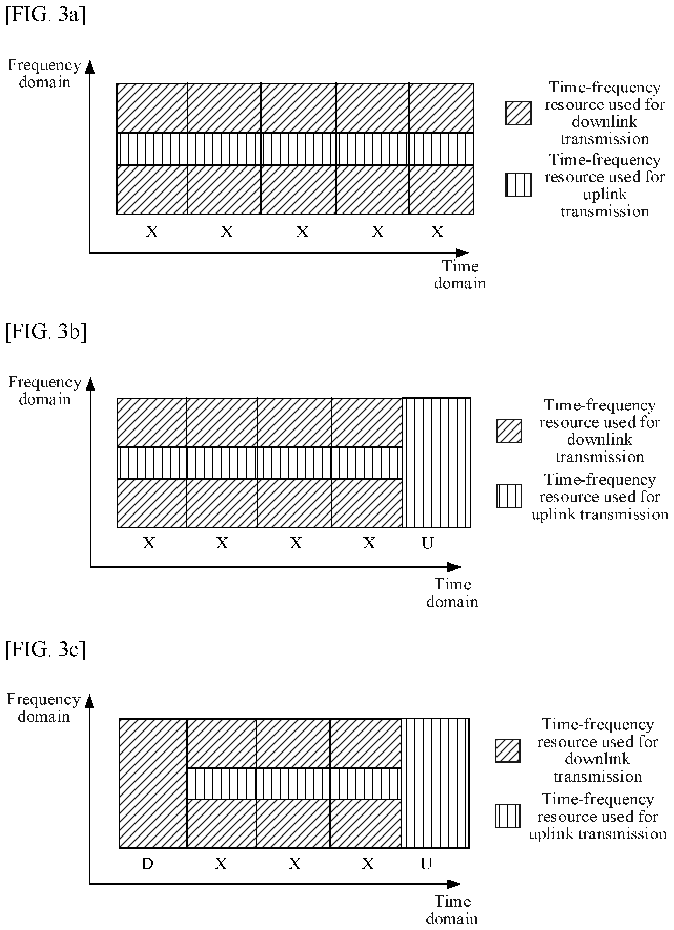

FIG. 3a to FIG. 3c are diagrams of SBFD-specific uplink and downlink slot configurations. FIG. 3a is a possible example of XXXXX, FIG. 3b is a possible example of XXXXU, and FIG. 3c is a possible example of DXXXU. In this configuration method, uplink and downlink subbands configured on flexible symbols are invisible to UE. In other words, the UE does not know frequency resource positions of the uplink and downlink subbands. In this case, if the UE determines to perform downlink transmission on a flexible symbol, a base station needs to ensure that the UE is indicated to perform downlink reception only on a downlink subband configured on the flexible symbol. If the UE determines to perform uplink transmission on a flexible symbol, the base station needs to ensure that the UE is indicated to perform the uplink transmission only on an uplink subband configured on the flexible symbol.

### 7. Time-frequency resource

In embodiments of this application, data or information may be carried over a time-frequency resource. The time-frequency resource may include a resource in time domain (namely, a time domain resource) and a resource in frequency domain (namely, a frequency domain resource).

In time domain, a time domain resource may include one or more time domain units (the time domain unit may alternatively be referred to as a time unit), and one time unit may include several time domain resources. The time domain unit is, for example, a radio frame (radio frame, RF), and a time domain resource included in the time domain unit is, for example, a subframe (subframe), a frame, a half-subframe, a half-frame, a slot (slot), a mini-slot (mini-slot), a partial slot (partial slot), or an orthogonal frequency division multiplexing (orthogonal frequency division multiplexing, OFDM) symbol (symbol). Alternatively, the time domain unit may be a set of one or more time domain resources. For example, the time domain unit is one or more OFDM symbols in one slot. For example, a quantity of the one or more OFDM symbols is 6, 7, 12, or 14. One or more time units may be consecutive or discrete in terms of time. In addition, duration of a slot may be related to a subcarrier spacing (subcarrier spacing, SCS). For example, when the subcarrier spacing is 15 kHz, duration of one slot is 1 millisecond (ms); when the subcarrier spacing is 30 kHz, duration of one slot is 0.5 ms; or when the subcarrier spacing is 60 kHz, duration of one slot is 0.25 ms. Similarly, it may be deduced that when the subcarrier spacing is 15 ∗ 2*^{µ}* kHz, duration of one slot is 2^{-*µ*} ms, where *µ*=0, 1, 2, .... *µ* is a non-negative integer.

In frequency domain, a frequency domain resource may include one or more frequency domain units. A frequency domain unit may be an RE, a resource block (resource block, RB), a subchannel, a resource pool (resource pool), a bandwidth (bandwidth), a bandwidth part (bandwidth part, BWP), a component carrier (component carrier, CC), a channel (channel), an interlace (interlace) RB, or the like.

### 8. Random access

A terminal device achieves uplink synchronization through a random access procedure, to access a network for communication. Random access includes contention-based random access CBRA (which may also be referred to as four-step random access) and contention-free random access CFRA (which may also be referred to as two-step random access). Contention-free access is usually performed when the terminal device can successfully receive radio resource control (radio resource control, RRC) signaling.

A random access procedure is a process from a time when a terminal device sends a random access preamble (preamble) to start attempting to access a network to a time before a basic signaling connection is established between the terminal device and the network. It should be noted that before the terminal device selects an RO for sending the preamble, the terminal device needs to select an uplink carrier. For example, when a supplementary uplink (supplementary uplink, SUL) or a normal uplink (normal uplink, NUL) is configured, the terminal device may choose to operate on the SUL or the NUL. After selecting the uplink carrier, the terminal device (for example, the terminal device in an RRC connected state) may need to perform a bandwidth part BWP operation. For example, when no RO is configured in an active uplink BWP for the terminal device, the terminal device needs to switch the active uplink BWP to an initial uplink BWP. After selecting the uplink carrier or performing the BWP operation, the terminal device needs to select a random access (random access, RA) type. It may be understood that the terminal device needs to choose whether to perform two-step random access or four-step random access. Further, after determining the RA type, the terminal device needs to select a RACH resource. The terminal device may select an RO based on a selected synchronization signal block (synchronization signal/PBCH block, SSB) and an SSB-RO mapping relationship. For example, one SSB may correspond to a plurality of ROs, or a plurality of SSBs are mapped to one RO. For another example, one SSB corresponds to one or more preambles, and different SSBs may use different preambles.

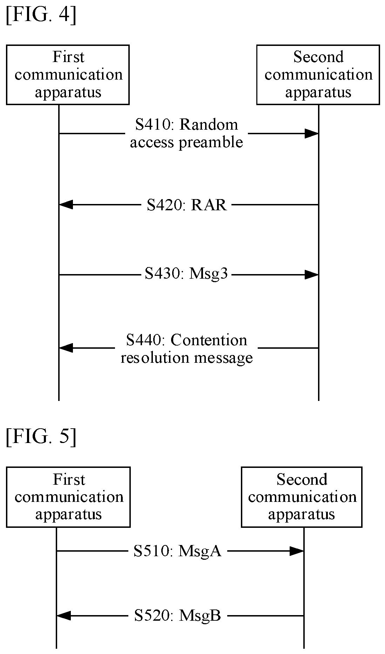

FIG. 4 is a schematic flowchart of a contention-based random access method. The method shown in FIG. 4 may be performed by a first apparatus and a second apparatus. The first apparatus may be a terminal device, a chip or a circuit in the terminal device, or a functional module, in the terminal device, that can invoke and execute a program. The second apparatus may be a network device, a chip or a circuit in the network device, a CU or a DU in the network device, or a functional module, in the network device, that can invoke and execute a program. As shown in FIG. 4, the method includes the following steps.

S410: The first apparatus sends a random access preamble (preamble) to the second apparatus.

Correspondingly, the second apparatus receives the random access preamble sent by the first apparatus.

For example, the first apparatus sends the preamble, namely, a Msg1, to the second apparatus on a PRACH resource. It should be understood that before step S410, the first apparatus may obtain, by reading a system information block (system information block, SIB), a resource configuration for sending a PRACH, and the resource configuration mainly includes configuration information such as a time-frequency resource position, an SSB-RO mapping relationship, and a preamble-SSB mapping relationship.

S420: The second apparatus sends a RAR to the first apparatus.

Correspondingly, the first apparatus receives the RAR from the second apparatus.

For example, the second apparatus sends the RAR, namely, a Msg2, to the first apparatus based on the preamble. The RAR may include indication information indicating an uplink resource used to send a message 3 (message 3, Msg3). It may be understood as that after receiving the RAR, the first apparatus can learn of the uplink resource used to send the Msg3.

It should be understood that before step S420 is performed, in other words, after sending the Msg1, the first apparatus starts a random access response window, and monitors, in the window, the RAR sent by the second apparatus. If the first apparatus successfully detects the RAR of the first apparatus, random access succeeds, and the first apparatus may continue to send the Msg3 as indicated by the RAR, that is, perform step S430. If the first apparatus does not receive the RAR of the UE, random access fails, and the first apparatus re-initiates, based on a fallback parameter indicated by the second apparatus, a random access procedure until a maximum quantity of random access times is reached.

S430: The first apparatus sends the Msg3 to the second apparatus.

Correspondingly, the second apparatus receives the Msg3 from the first apparatus.

For example, the first apparatus sends the Msg3 based on the RAR, and a main function of the Msg3 is to send an RRC connection setup request. The Msg3 may include layer 2 (layer 2, L2) information and/or layer 3 (layer 3, L3) information, for example, an RRC connection setup request message, and for another example, a beam failure recovery (beam failure recovery, BFR) MAC control element (control element, CE).

S440: The second apparatus sends a contention resolution message to the first apparatus.

Correspondingly, the first apparatus receives the contention resolution message from the second apparatus.

The contention resolution message includes an identifier (identifier, ID) of the first apparatus. Optionally, the contention resolution message may also be referred to as a message 4 (message 4, Msg4), and the Msg4 carries a contention resolution identifier and an air interface parameter configuration for the first apparatus.

For example, when contention resolution of the first apparatus succeeds, the second apparatus sends the contention resolution message to the first apparatus. If the first apparatus successfully receives the Msg4, and the Msg4 carries the contention resolution identifier of the first apparatus, random access succeeds; otherwise, random access fails. If random access succeeds, the first apparatus may continue to send a Msg5, and a main function of the Msg5 is to send an RRC setup complete command. If random access fails, the first apparatus re-initiates, based on a fallback parameter indicated by the second apparatus, a random access procedure until a maximum quantity of random access times is reached.

Optionally, in response to a physical downlink shared channel (physical downlink shared channel, PDSCH) carrying the Msg4, the first apparatus may send corresponding hybrid automatic repeat request-acknowledgment (hybrid automatic repeat request-acknowledgment, HARQ-ACK) information via a physical uplink control channel (physical uplink control channel, PUCCH).

Further, when the second apparatus determines, from the Msg3, that random access is contention-based random access, the second apparatus stores information about first apparatuses that require contention, and when the contention is resolved by using the Msg4, contention resolution is performed on the first apparatuses that require contention.

It should be noted that FIG. 4 is merely a diagram provided for ease of describing the four-step random access procedure, and does not constitute any limitation on the protection scope of this application. For specific descriptions of the four-step random access procedure, refer to descriptions in a current related technology.

FIG. 5 is a schematic flowchart of a two-step random access procedure. The method shown in FIG. 5 may be performed by a first apparatus and a second apparatus. The first apparatus may be a terminal device, a chip or a circuit in the terminal device, or a functional module, in the terminal device, that can invoke and execute a program. The second apparatus may be a network device, a chip or a circuit in the network device, a CU or a DU in the network device, or a functional module, in the network device, that can invoke and execute a program. As shown in FIG. 5, the method includes the following steps.

S510: The first apparatus sends a message A (message A, MsgA) to the second apparatus.

Correspondingly, the second apparatus receives the message A from the first apparatus.

The MsgA includes a preamble part and a PUSCH part. The preamble part is sent on a PRACH resource (for example, the foregoing RO), and a PUSCH resource may carry L2 or L3 information, for example, a BFR MAC CE or an RRC connection setup request message.

S520: The second apparatus sends a message B (message B, MsgB) to the first apparatus.

Correspondingly, the first apparatus receives the message B from the second apparatus.

The MsgB message may include a success RAR (success RAR) or a fallback RAR (fallback RAR).

For example, when the first apparatus receives the fallback RAR, the first apparatus needs to fall back to a four-step random access procedure, and send a Msg3 to the second apparatus, that is, perform step S430 in FIG. 4.

Optionally, in addition to the foregoing fallback process from two-step random access to four-step random access, if the second apparatus chooses to perform the two-step random access procedure when triggering random access, after a quantity of preamble sending times in the two-step random access procedure reaches a maximum quantity of sending times, the first apparatus may further fall back (fallback) to the four-step random access procedure to attempt access, to increase an access success rate of the first apparatus and ensure access performance of the first apparatus.

As described above, UE sends a preamble (preamble) on an RO. One RO may be considered as a time-frequency resource for transmitting a preamble. One RO may support code division multiplexing transmission of a plurality of preamble sequences, and one NR cell supports a plurality of ROs. Different from LTE, a multi-beam operation is introduced in NR. Therefore, a random access procedure in NR is beam-based transmission. For example, for UE in an initial access phase, transmission of the UE is mainly based on SSB beams, and for UE in a connected state, CSI-RS beam-based transmission may be performed. NR may support a base station in sending SSBs in a plurality of beam directions. For example, in a frequency range 1 (frequency range 1, FR1), a maximum of eight SSBs can be supported. The UE may select one of the SSBs and use a beam of the SSB to send a PRACH. For how the UE selects the SSB for sending the PRACH, for example, if the base station is not configured with a reference signal received power RSRP threshold, the UE may select any SSB to send the PRACH; otherwise, the UE selects any SSB from one or more SSBs that exceed the RSRP threshold to send the PRACH.

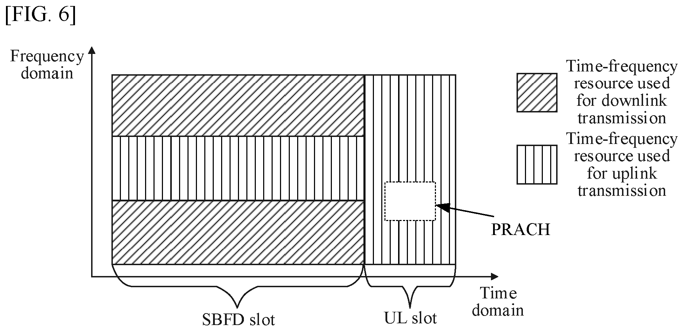

FIG. 6 is a diagram of configuring a PRACH in a UL slot. As shown in FIG. 6, a horizontal axis represents a time domain, and includes an SBFD slot and the UL slot, a vertical axis represents a frequency domain, and a dashed box in the UL slot may represent a PRACH resource. For example, a base station may configure the PRACH in the UL slot by sending an RACH-ConfigGeneric information element, and UE may perform random access by using the PRACH. For example, the UE looks up a table based on a parameter PRACH-ConfigurationIndex carried in the RACH-ConfigGeneric to obtain a periodicity, a frame number, a subframe number, a slot number, a quantity of ROs in a slot, and the like of time domain distribution of the PRACH, to determine a time domain position of the PRACH. For another example, the UE may separately obtain a start position of the PRACH in frequency domain and a quantity of PRACH frequency division multiplexing times based on parameters msg1-FrequencyStart and msg1-FDM that are carried in the RACH-ConfigGeneric, to determine a frequency domain position of the PRACH.

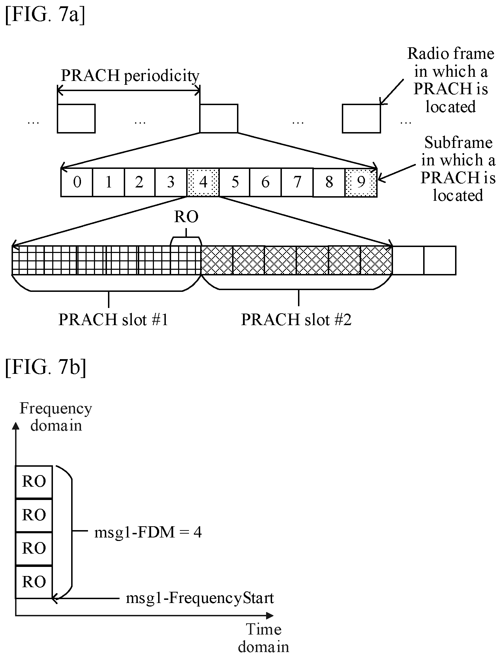

FIG. 7a and FIG. 7b are diagrams of time-frequency resources of a PRACH. As shown in FIG. 7a, three blocks at an uppermost layer in the figure may represent radio frames in which the PRACH is located, a time domain distance between two adjacent blocks is a PRACH periodicity, an intermediate layer represents 10 subframes, for example, subframes 0 to 9, included in a radio frame in which a PRACH is located, where the subframe 4 and the subframe 9 represent subframes in which the PRACH is located, and a lowermost layer represents a slot structure of the subframe 4 in which the PRACH is located, where the slot structure includes two PRACH slots (for example, a PRACH slot #1 and a PRACH slot #2), and each small block indicates one RO, in other words, each PRACH slot includes six ROs. As shown in FIG. 7b, a horizontal axis represents a time domain, a vertical axis represents a frequency domain, and each block represents one RO. A quantity of ROs may be 1, 2, 4, or 8. For example, four ROs may be arranged from a frequency domain position specified by msg1-FrequencyStart.

It should be understood that, in the Msg1 transmission process in step S410, the UE may select an RO based on an index of the SSB to transmit the preamble sequence. Therefore, in the NR standard, in addition to specifying a PRACH position, an RO-SSB mapping relationship is further specified (one SSB index may be associated with a plurality of ROs, or a plurality of SSB indexes are associated with one RO). For example, a network device may configure a mapping relationship between N SSBs and one RO by using a higher-layer parameter ssb-perRACH-OccasionAndCB-PreamblesPerSSB. When N is less than 1, one SSB is associated with 1/N RO. When N is greater than 1, the N SSBs are associated with one RO (one SSB is associated with 1/N RO).

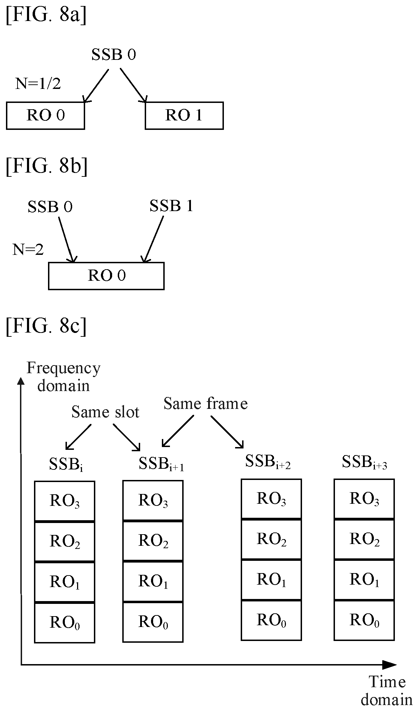

FIG. 8a to FIG. 8c are diagrams of RO-SSB association relationships. As shown in FIG. 8a, when N=1/2, one SSB is associated with two ROs. As shown in FIG. 8b, when N=2, one RO is associated with two SSBs. Therefore, when one SSB index is associated with a plurality of ROs, UE may select one of the plurality of ROs, and select a preamble sequence for transmission on the RO. Further, after the RO-SSB association relationship is determined, the UE starts RO-SSB mapping. An order of the RO-SSB mapping is frequency domain first, then time domain: first in a same slot, then in a same frame, and finally across different frames. As shown in FIG. 8c, a horizontal axis represents a time domain, and a vertical axis represents a frequency domain. When an SSB set used by a base station may be {SSBᵢ, SSBᵢ₊₁, SSBᵢ₊₂, SSBᵢ₊₃}, msg1-FDM=4, and N=1/4, one SSB is associated with four ROs, an RO set is denoted as {RO₀, RO₁, RO₂, RO₃}, 16 ROs complete a complete RO-SSB mapping periodicity, and an order of RO-SSB mapping may be arrangement from a frequency domain corresponding to an RO time domain position, to be specific, an RO₀ to an RO₃ that correspond to the SSBᵢ occupy four RO positions, in frequency domain, that correspond to a 1^{st} RO time domain position of a start PRACH slot of a same frame, an RO₀ to an RO₃ that correspond to the SSBᵢ₊₁ occupy four RO positions, in frequency domain, that correspond to a 2^{nd} RO time domain position of the start PRACH slot, an RO₀ to an RO₃ that correspond to the SSBᵢ₊₂ occupy four RO positions, in frequency domain, that correspond to a 1^{st} RO time domain position of a 2^{nd} PRACH slot of the same frame, and an RO₀ to an RO₃ that correspond to the SSBᵢ₊₃ occupy four RO positions, in frequency domain, that correspond to a 2^{nd} RO time domain position of the 2^{nd} PRACH slot of the same frame.

Currently, a random access procedure, including a process of sending a Msg1 or a MsgA, is supported on an SBFD symbol/in an SBFD slot. However, supporting sending of the Msg1 or the MsgA on the SBFD symbol/in the SBFD slot may have the following problems:
(1) Uplink transmission performed on an uplink subband of the SBFD symbol/slot causes cross-link interference (cross-link interference, CLI), that is, UE-UE interference, to downlink transmission performed by a local cell or a neighboring cell on a downlink subband. Consequently, downlink transmission performance of the SBFD symbol/slot is poor. Especially, to ensure a random access success rate, users in poor coverage areas such as cell edges increase transmit power. This leads to stronger UE-UE interference.
(2) Uplink transmission performed on an uplink subband of the SBFD symbol/slot is affected by CLI caused by downlink transmission performed by a local cell or a neighboring cell on a downlink subband. Consequently, uplink transmission performance of the SBFD symbol/slot is poor. If PRACH transmission is supported on the SBFD symbol/in the SBFD slot, a random access success rate of UE decreases, especially for users in poor coverage areas such as cell edges, random access success rates severely decrease.

It should be noted that, a base station can better control UE-UE interference caused by connected (connected)-state UE, but cannot control UE-UE interference caused by idle (idle)-state UE. In different cases, degrees of UE-UE interference caused by the idle-state UE are different, depending on PRACH resource positions, quantities of access users, user density, application scenarios, and the like. In different cases, losses and benefits of initial access performed by the idle-state UE on a PRACH resource in the SBFD slot (which may be referred to as an SBFD-PRACH resource for short) are different.

In conclusion, in a process of performing random access on the SBFD symbol/in the SBFD slot, uplink transmission and downlink transmission interfere with each other, affecting transmission performance. In addition, random access performance varies in different cases (for example, different PRACH resource positions, quantities of access users, user density, and application scenarios). How to resolve transmission performance deterioration caused by Msg1 or MsgA transmission in SBFD slots/on SBFD symbols supporting random access procedures, or how to enable base stations to flexibly control SBFD-PRACH resources for initial access needs to be resolved.

To resolve the foregoing technical problem, this application provides a communication method and a communication apparatus, to effectively improve random access performance.

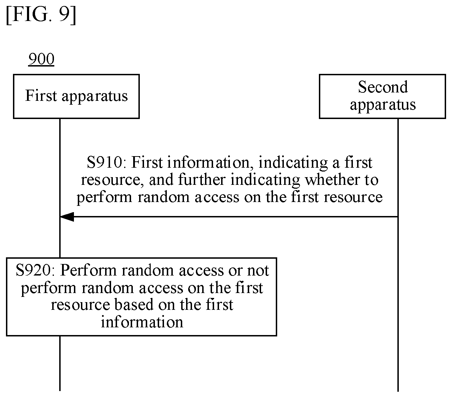

With reference to the accompanying drawings, the communication method provided in embodiments of this application is described below in detail. Embodiments provided in this application are applicable to the communication system shown in FIG. 1. The technical solutions of this application are specifically described with reference to FIG. 9. An execution body may be a first apparatus or a second apparatus. The first apparatus may be a terminal device, a communication module in the terminal device, a circuit or a chip (for example, a modem (modem) chip, also referred to as a baseband (baseband) chip, or a system on chip (system on chip, SoC) chip or a system in package (system in package, SIP) chip that includes a modem core) that is responsible for a communication function in the terminal device, or a logical node, a logical module, or software that can implement all or some functions of the terminal device. The second apparatus may be a network device, a CU or a distributed unit DU in the network device, a module (for example, a circuit, a chip, or a chip system) in the network device, or a logical node, a logical module, or software that can implement all or some functions of the network device.

FIG. 9 is a schematic flowchart of a communication method according to an embodiment of this application. As shown in FIG. 9, the method 900 includes the following plurality of steps.

S910: The second apparatus sends first information to the first apparatus.

Correspondingly, the first apparatus receives the first information from the second apparatus.

The first information indicates a first resource, and the first information further indicates whether to perform random access on the first resource.

For example, the first resource includes a first time domain resource and a first frequency domain resource, the first time domain resource corresponds to the first frequency domain resource, a first part of the first time domain resource is located in a first time domain unit, a first frequency domain unit corresponding to the first time domain unit includes a first subband used for uplink transmission and a second subband used for downlink transmission, and the first frequency domain resource is located in the first frequency domain unit.

It should be understood that the first resource may be referred to as a random access resource (for example, a PRACH resource), and is used for random access.

For example, the first apparatus may be inactive-state UE, idle-state UE, or connected-state UE. An activation status or a connection status of the first apparatus is not limited in this application. Optionally, the first apparatus is a terminal that supports subband duplex.

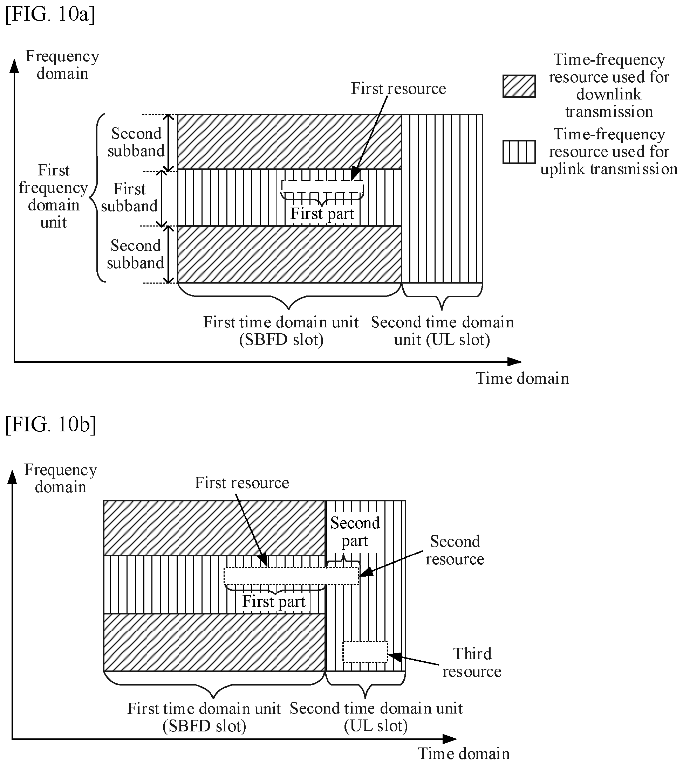

For example, the first time domain unit may be an SBFD time domain unit (for example, an SBFD slot or an SBFD symbol), or a single frequency full duplex (single frequency full duplex, SFFD) time unit, and the first frequency domain unit may be a component carrier CC. As shown in FIG. 10a, a horizontal axis represents a time domain, and includes the SBFD slot (namely, the first time domain unit) and a UL slot (namely, a second time domain unit, which may also be referred to as a UL time domain unit), and a vertical axis represents a frequency domain, and includes the first subband and the second subband (namely, the first frequency domain unit), where a first uplink subband may be referred to as an uplink subband, and the second subband may be referred to as a downlink subband. In this case, the first resource may be a resource located in the SBFD slot, that is, a dashed box in the SBFD slot may represent the PRACH resource.

Optionally, the second subband includes a third subband and a fourth subband, and the third subband and the fourth subband are located on both sides of the first subband in time domain. As shown FIG. 10a, it may be considered that the third subband is located above the first subband, and it may be considered that the fourth subband is located below the first subband, that is, both the third subband and the fourth subband are downlink subbands.

Optionally, the first information may be a broadcast message, or may be a message specially sent to the first apparatus. This is not limited in this application.

For example, the first information may include two fields, for example, a first field and a second field. The first field may be PRACH-ConfigurationIndex , and indicates the first resource. The second field may be a newly added field, and indicates whether to perform random access on the first resource. The second field may be represented by using a bit. A bit "1" indicates to perform random access on the first resource, and a bit "0" indicates that random access is not to be performed on the first resource or indicates not to perform random access on the first resource, or vice versa. For another example, if a value of the second field is enable, it indicates that idle-state UE or inactive-state UE can perform random access on the first resource. If a value of the second field is disable, it indicates that idle-state UE or inactive-state UE cannot perform random access on the first resource. For still another example, the first information may include a bitmap (bitmap). In the bitmap, a value of a corresponding bit position indicating to perform random access on the first resource may be "1", and a value of a corresponding bit position indicating not to perform random access on the first resource may be "0", or vice versa.

In an implementation, the first information includes second information and third information, the second information indicates the first resource, and the third information indicates whether to perform random access on the first resource.

For example, the second information may include a first field, and the third information may include a second field. The first field and the second field may be represented by using bits. A value of the first field may be "1", and indicates a time-frequency position of the first resource. A value of the second field may be "1", and indicates to perform random access on the first resource. The value of the second field may be "0", and indicates not to perform random access on the first resource.

S920: The first apparatus performs random access or does not perform random access on the first resource based on the first information.

It should be understood that if the first information in step S910 indicates to perform random access on the first resource, the first apparatus performs random access on the first resource; or if the first information in step S910 indicates not to perform random access on the first resource, the first apparatus does not perform random access on the first resource.

For example, after receiving the first information, the first apparatus parses the first information to determine the time-frequency domain position of the first resource, for example, a dashed box shown in FIG. 10a to FIG. 10c, and parses the first information to determine whether the first resource can be used for random access, in other words, determine whether to send a random preamble on the first resource, that is, whether to send a message 1 or a message A on the first resource.

In an implementation, when the first information indicates to perform random access on the first resource, and the first apparatus is in an idle state or an inactive state, the first apparatus performs random access on the first resource. For example, the first apparatus is UE. Because the second apparatus (for example, a base station) cannot control UE-UE interference caused by idle-state UE or inactive-state UE, the base station may indicate, by using the first information, the idle-state UE or the inactive-state UE whether to perform CBRA on the first resource, to reduce transmission interference as much as possible, and ensure random access performance.

In an implementation, when the first information indicates to perform random access on the first resource, and the first apparatus is in a non-idle state or a connected state, the first apparatus may perform random access on the first resource. For example, the first apparatus is UE. Because the second apparatus (for example, a base station) can better control UE-UE interference caused by connected-state UE, the base station may indicate, by using the first information, non-idle-state UE or the connected-state UE to perform random access, for example, CBRA or CFRA, on the first resource, to reduce transmission interference as much as possible, and ensure random access performance.

In an implementation, when the first information indicates to perform random access on the first resource, and the first apparatus is in a non-idle state, the first apparatus does not perform random access on the first resource. For example, the first apparatus is UE. Because the second apparatus (for example, a base station) can better control UE-UE interference caused by connected-state UE, the base station may indicate, by using the first information, non-idle-state UE not to perform random access on the first resource, to reduce transmission interference as much as possible, and ensure random access performance.

In an implementation, when the first information indicates to perform random access on the first resource, and the first apparatus is in a non-idle state, the first apparatus does not perform CBRA, but may perform CFRA on the first resource. For example, the first apparatus is UE. Because the second apparatus (for example, a base station) can better control UE-UE interference caused by connected-state UE, the base station may indicate, by using the first information, non-idle-state UE not to perform CBRA on the first resource, to reduce transmission interference as much as possible, and ensure random access performance.

In an implementation, when the first information indicates not to perform random access on the first resource, and/or when the first apparatus is in a non-idle state or an active state, the first apparatus does not perform random access on the first resource.

It should be understood that in this embodiment of this application, the first time domain resource may include the first part and another part (for example, a second part or a third part). Herein, the first part of the first time domain resource is located on the first time domain resource, and the another part (for example, the second part or the third part) of the first time domain resource other than the first part may be located in the first time domain unit, or may be located in another time domain unit, for example, the second time domain unit. For example, the first part, the second part, and the third part of the first time domain resource may be sequentially located in an SBFD time domain unit, an SBFD time domain unit, and a UL time domain unit; the first part, the second part, and the third part of the first time domain resource may be sequentially located in an SBFD time domain unit, a UL time domain unit, and a UL time domain unit; the first part, the second part, the third part, and a fourth part of the first time domain resource may be sequentially located in an SBFD time domain unit, an SBFD time domain unit, a UL time domain unit, a UL time domain unit; or the like. This is not limited in this application.

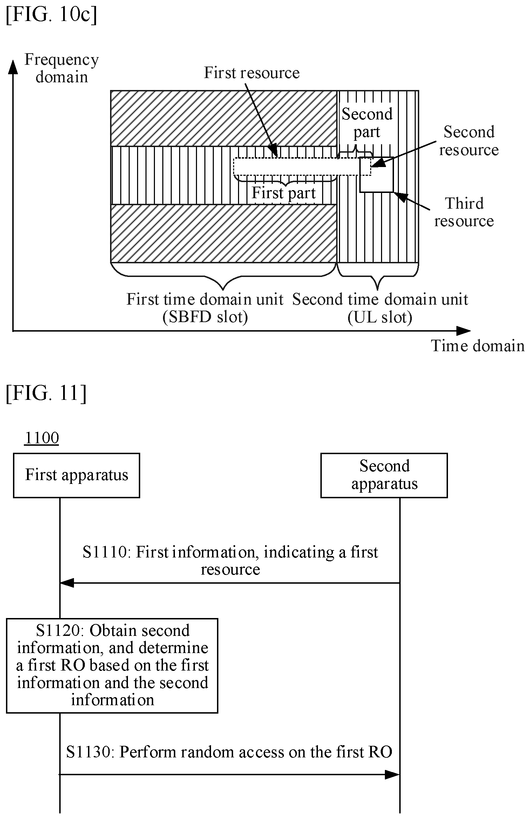

In an implementation, the second part of the first time domain resource is located in the second time domain unit, the second part is a time domain resource of a second resource, and the second time domain unit is used only for the uplink transmission. In this case, with reference to FIG. 10b and FIG. 10c, descriptions are provided for one or more of the following items that are included in the resource used by the first apparatus to perform random access. For a same part, refer to related descriptions in FIG. 10a.
(1) The first information indicates not to perform random access on the second resource. In other words, the second resource is an invalid resource and cannot be used for random access. It should be understood that this manner is applicable to a terminal that supports SBFD or SFFD. For example, the first information may be PRACH-ConfigurationIndex , and indicates time domain position information, for example, periodicities, frame numbers, subframe numbers, slot numbers, and quantities of ROs in a slot, of time domain distribution of the first resource and the second resource. For ease of differentiation, the first information herein may be first PRACH-ConfigurationIndex , and time domain position information of the PRACH resource in the UL time domain unit shown in FIG. 6 may be indicated by using second PRACH-ConfigurationIndex .

As shown in FIG. 10b, the first part of the first time domain resource is located in an SBFD slot, that is, the first resource is located in the SBFD slot, and the second part of the first time domain resource is located in a UL slot, that is, the second resource is located in the UL slot. In this case, the second apparatus may deliver the first information to indicate not to perform random access on the second part, in other words, the first apparatus cannot perform random access on the second resource in the UL slot, that is, an RO included in the second resource may be considered as an invalid RO (invalid RO), to be specific, the first apparatus cannot use the invalid RO to send the random access preamble (preamble), and the second apparatus does not need to receive and detect the preamble.

(2) When the second resource partially overlaps a third resource, the first information indicates to perform random access on a non-overlapping resource, and the non-overlapping resource is a resource that does not overlap with the second resource or the third resource. In other words, an overlapping resource between the second resource and the third resource cannot be used for random access, the overlapping resource may be considered as an invalid resource, and an RO included in the overlapping resource may be considered as an invalid RO (invalid RO). A time domain resource of the third resource is located in the second time domain unit, and the third resource is predefined or preconfigured. It should be understood that, for a manner of determining the third resource, refer to the PRACH resource shown in FIG. 6.

As shown in FIG. 10c, the first part of the first time domain resource is located in an SBFD slot, that is, the first resource is located in the SBFD slot, and the second part of the first time domain resource is located in a UL slot, that is, the second resource is located in the UL slot. The second resource partially overlaps the third resource. In this case, the second apparatus may deliver the first information to indicate not to perform random access on an overlapping part of the second resource and the third resource, in other words, the first information indicates to perform random access on a non-overlapping part of the second resource and the third resource in the UL slot.

(3) When the second resource does not overlap the third resource, the first information indicates to perform random access on the second resource, the time domain resource of the third resource is located in the second time domain unit, and the third resource is predefined or preconfigured.

As shown in FIG. 10b, the first part of the first time domain resource is located in an SBFD slot, that is, the first resource is located in the SBFD slot, the second part of the first time domain resource is located in a UL slot, that is, the second resource is located in the UL slot, and the first resource and the second resource do not overlap with each other. In this case, the second apparatus may deliver the first information to indicate to perform random access on the second part, in other words, the first apparatus may perform random access on the second resource in the UL slot. Optionally, the first apparatus may alternatively perform random access on the first resource in the SBFD slot. This is not limited in this application.

In this application, the first resource and the second resource configured by using the first PRACH-ConfigurationIndex , and the third resource configured by using the second PRACH-ConfigurationIndex may satisfy one or more of the following:
(1) a format length of a random access preamble sent on the first resource and the second resource is greater than a format length of a random access preamble sent on the third resource, where the first PRACH-ConfigurationIndex indicates the format length of the random access preamble sent on the first resource and the second resource and a time domain position of the first resource, and the second PRACH-ConfigurationIndex signaling indicates the format length of the random access preamble sent on the third resource and a time domain position of the third resource, where the PRACH-ConfigurationIndex signaling is carried in SIB signaling;
(2) the first resource and the second resource support repetitions of physical random access channel PRACH transmission and the third resource does not support repetitions of PRACH transmission, or a maximum quantity of repetitions of PRACH transmission supported by the first resource and the second resource is different from a maximum quantity of repetitions of PRACH transmission supported by the third resource;
(3) a corresponding RSRP threshold used by the first resource and the second resource to determine a quantity of repetitions (for example, 2, 4, 8, or another value) is greater than a corresponding RSRP threshold used by the third resource to determine a quantity of repetitions (for example, 2, 4, 8, or another value), where
   for example, a threshold #1 for the first resource and the second resource to determine no repetition or two repetitions is greater than a threshold #2 for the third resource to determine no repetition or two repetitions, or a threshold #3 for the first resource and the second resource to determine two repetitions or four repetitions is greater than a threshold #4 for the third resource to determine two repetitions or four repetitions;
(4) a time domain resource corresponding to an RO of the first resource and the second resource is greater than a time domain resource corresponding to an RO of the third resource, or a preamble length corresponding to the first resource and the second resource is greater than a preamble length corresponding to the third resource;
(5) maximum power at which UE is allowed to send a PRACH on the first resource and the second resource is less than maximum power at which the UE is allowed to send a PRACH on the third resource, where the maximum transmit power may be understood as maximum transmit power, configured by a base station, at which the first apparatus (for example, the UE) is allowed to send a PRACH. For example, the base station directly indicates a power value, and this value represents maximum power of the PRACH or this value represents a fallback value of maximum transmit power, configured by the base station, at which the first apparatus (for example, the UE) is allowed to perform uplink transmission; and
(6) in one random access procedure, power at which the first apparatus sends a PRACH on the first resource and the second resource is less than power at which the first apparatus sends a PRACH on the third resource.

In a possible implementation, when the first information indicates to perform random access on the first resource, the first apparatus may determine a first RO from the first resource, and then send a random access preamble on the first RO. Optionally, the first information may further indicate that the first RO is used for contention-based random access CBRA; or the first information further indicates that the first RO is used for contention-free random access CFRA. For an implementation of determining the first RO from the first resource, refer to the conventional technology, or refer to the following related descriptions. This is not limited in this application.

According to the foregoing solution, the second apparatus (for example, a base station) sends the first information to the first apparatus (for example, a terminal) based on a CLI interference status, of a cell, evaluated by the second apparatus, to indicate whether the first resource can be used by an idle-state terminal or an inactive-state terminal to perform initial access. This can effectively control a UE-UE interference level caused by random access of the idle-state terminal or the inactive-state terminal in the cell, thereby achieving a trade-off between terminal access capability enhancement and interference control, improving random access performance, and reducing transmission interference.

FIG. 11 is a schematic flowchart of a communication method according to an embodiment of this application. As shown in FIG. 11, the method 1100 includes the following plurality of steps:
S1110: A second apparatus sends first information to a first apparatus.

Correspondingly, the first apparatus receives the first information from the second apparatus.

The first information indicates a first resource, the first resource includes a first time domain resource and a first frequency domain resource, the first time domain resource corresponds to the first frequency domain resource, the first time domain resource is located in a first time domain unit, a first frequency domain unit corresponding to the first time domain unit includes a first subband used for uplink transmission and a second subband used for downlink transmission, and the first frequency domain resource is located in the first frequency domain unit.

It should be understood that, for related information of the first information and the first resource, refer to related descriptions of the foregoing method 900. Details are not described herein again.

S1120: The first apparatus obtains second information, and determines a first RO based on the first information and the second information.

The second information indicates a first threshold, and the first threshold includes one or more of the following: an RSRP threshold, a path loss threshold, a transmit power threshold, or a frequency distance threshold.

It may be understood that RSRP refers to a power value of a reference signal received at a receive end, and may indicate signal strength or signal quality. A path loss refers to signal strength attenuation caused by various factors during signal transmission. For example, the path loss indicates a difference between transmit power and receive power. The transmit power may be output power or sending power of a signal. In an implementation, a base station notifies UE of transmit power of a reference signal through broadcasting, and the UE obtains a path loss through calculation by using measured received reference signal power and the transmit power, of the reference signal, that is broadcast by the base station. A frequency distance may be a frequency distance between a PRACH resource on an uplink subband and a downlink subband, or may be a frequency distance between a PRACH resource on an uplink subband and a predefined frequency. The predefined frequency may be located on the uplink subband, or may be located on the downlink subband. This is not limited in this application. In other words, the first RO should be an RO as far away as possible from the downlink subband, so that CLI interference can be effectively reduced, and random access performance can be improved.

In a first example, the second information may be predefined or preconfigured. Predefinition may include advance definition, for example, protocol definition. Preconfiguration may be implemented by pre-storing corresponding code, a corresponding table, a corresponding function, a corresponding text, or a corresponding character string in the first apparatus, or in another manner that may indicate the second information. A specific implementation of the second information is not limited in this application.

In a second example, the second information may be configured via signaling. For example, the second apparatus sends the second information to the first apparatus. Correspondingly, the first apparatus receives the second information from the second apparatus, and parses the second information to obtain the first threshold.

A specific implementation in which the first apparatus determines the first RO based on the first information and the second information is described below.

In a first implementation, the first apparatus obtains a first measurement result, determines a first comparison result based on the first measurement result and the first threshold, and determines the first RO based on the first comparison result and a first mapping relationship.

The first mapping relationship indicates a mapping relationship between M comparison results and N RO sets, the M comparison results include the first comparison result, the first resource includes the N RO sets, the N RO sets include a first RO set, and the first RO set includes the first RO, where both M and N are integers greater than or equal to 1.

Optionally, the first measurement result obtained by the first apparatus may be a measurement result obtained by measuring a signal (for example, an SSB beam) by the first apparatus, or may be a measurement result received from another third-party device, for example, a measurement result obtained by measuring a signal by the third-party device.

In an example, the first mapping relationship may be predefined or preconfigured. Predefinition may include advance definition, for example, protocol definition. Preconfiguration may be implemented by pre-storing corresponding code, a corresponding table, a corresponding function, a corresponding text, or a corresponding character string in the first apparatus, or in another manner that may indicate the first mapping relationship. A specific implementation of the first mapping relationship is not limited in this application.

In another example, the first mapping relationship may be configured via signaling. For example, the second apparatus sends the first mapping relationship to the first apparatus. Correspondingly, the first apparatus receives the first mapping relationship from the second apparatus.

In this implementation, an example in which the first threshold includes the RSRP threshold, the path loss threshold, or the transmit power threshold is used for description.

It should be noted that in this application, during comparison between A and B, a specific implementation of "when A is greater than or equal to B, a manner A is performed; or when A is less than or equal to B, a manner B is performed" may be "when A is greater than or equal to B, the manner A is performed; or when A is less than B, the manner B is performed"; or may be "when A is greater than B, the manner A is performed; or when A is less than or equal to B, the manner B is performed". This is not limited in this application. For ease of description, in implementations provided in this application, "when A is greater than or equal to B, the manner A is performed; or when A is less than B, the manner B is performed" is used as an example for description.

An example of the first mapping relationship is provided below in a table form. If the first threshold is the RSRP threshold, the first mapping relationship is a mapping relationship between an RSRP measurement value and an RO set, as shown in Table 1. For example, the first apparatus compares an RSRP measurement value of an SSB or another reference signal with the RSRP threshold, determines an RO resource position for random access based on a comparison result, and may determine, based on an SSB-RO correspondence, an SSB beam used for random access.

**Table 1**

| Comparison result | | RO set |
|---|---|---|
| Comparison result #1 | An RSRP measurement value is greater than or equal to an RSRP threshold #1 | RO set #1 |
| Comparison result #2 | An RSRP measurement value is less than an RSRP threshold #1 | RO set #2 |
| Comparison result #3 | An RSRP measurement value is greater than or equal to an RSRP threshold #1 | RO set #1 and RO set #2 |
| Comparison result #4 | An RSRP measurement value is greater than or equal to an RSRP threshold #1 | RO set #2 |
| Comparison result #5 | An RSRP measurement value is greater than or equal to an RSRP threshold #1 | RO set #1 |
| Comparison result #6 | An RSRP measurement value is greater than or equal to an RSRP threshold #2 and less than an RSRP threshold #1 | RO set #2 |
| Comparison result #7 | An RSRP measurement value is greater than or equal to an RSRP threshold #3 and less than an RSRP threshold #2 | RO set #3 |
| Comparison result #8 | An RSRP measurement value is less than an RSRP threshold #3 | RO set #4 |
| Comparison result #9 | An RSRP measurement value is greater than or equal to an RSRP threshold #1 | RO set #1, RO set #2, RO set #3, and RO set #4 |
| Comparison result #10 | An RSRP measurement value is greater than or equal to an RSRP threshold #2 and less than an RSRP threshold #1 | RO set #2, RO set #3, and RO set #4 |
| Comparison result #11 | An RSRP measurement value is greater than or equal to an RSRP threshold #3 and less than an RSRP threshold #2 | RO set #3 and RO set #4 |
| Comparison result #12 | An RSRP measurement value is less than an RSRP threshold #3 | RO set #4 |

As shown in Table 1, the comparison result includes the comparison result #1, the comparison result #2, the comparison result #3, and the comparison result #4, and the RO set includes the RO set #1 and the RO set #2. One row in Table 1 represents a mapping relationship between a comparison result and an RO set corresponding to the comparison result.

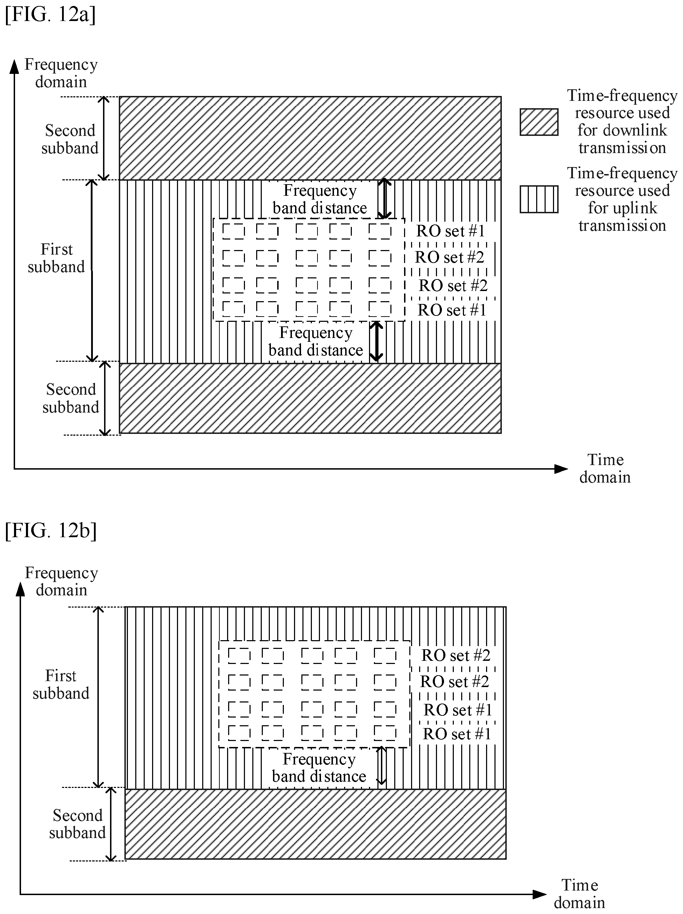

For example, for RO sets corresponding to the comparison result #1 and the comparison result #2, refer to FIG. 12a. A frequency domain includes two downlink subbands and one uplink subband. A large dashed box in an SBFD slot represents the first resource, and a small dashed box in the first resource represents an RO. A frequency distance between the RO set #1 and the downlink subband is greater than a frequency distance between the RO set #2 and the downlink subband. To be specific, the RO set #1 includes 10 small dashed boxes in the top and bottom rows, namely, 10 ROs, and the RO set #2 includes 10 small dashed boxes in the middle two rows, namely, 10 ROs. In this case, if an RSRP measurement value of an SSB beam measured by the first apparatus is greater than or equal to the RSRP threshold #1, the RO set #1 may be determined based on the first mapping relationship in Table 1, so that the first apparatus can select one RO from the top and bottom rows of ROs in the figure as the first RO. Alternatively, if an RSRP measurement value of an SSB beam measured by the first apparatus is less than the RSRP threshold #1, the RO set #2 may be determined based on the first mapping relationship in Table 1, so that the first apparatus can select one RO from the middle two rows of ROs in the figure as the first RO.

For example, for RO sets corresponding to the comparison result #3 and the comparison result #4, refer to FIG. 12b. A frequency domain includes one downlink subband and one uplink subband. A large dashed box in an SBFD slot represents the first resource, and a small dashed box in the first resource represents an RO. A frequency distance between the RO set #1 and the downlink subband is less than a frequency distance between the RO set #2 and the downlink subband. To be specific, the RO set #1 includes 10 small dashed boxes in the lower two rows, namely, 10 ROs, and the RO set #2 includes 10 small dashed boxes in the upper two rows, namely, 10 ROs. In this case, if an RSRP measurement value of an SSB beam measured by the first apparatus is greater than or equal to the RSRP threshold #1, the RO set #1 and the RO set #2 may be determined based on the first mapping relationship in Table 1, so that the first apparatus can select one RO from all ROs in the figure as the first RO. Alternatively, if an RSRP measurement value of an SSB beam measured by the first apparatus is less than the RSRP threshold #1, the RO set #2 may be determined based on the first mapping relationship in Table 1, so that the first apparatus can select one RO from the middle two rows of ROs in the figure as the first RO.

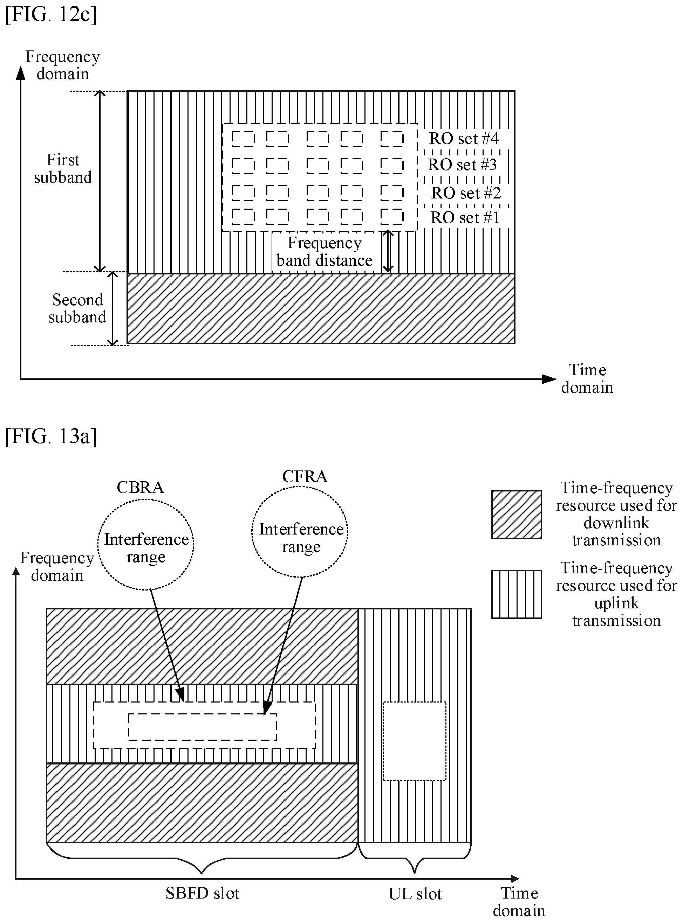

For example, for RO sets corresponding to the comparison result #5 to the comparison result #12, refer to FIG. 12c. A frequency domain includes one downlink subband and one uplink subband. A large dashed box in an SBFD slot represents the first resource, and a small dashed box in the first resource represents an RO. Frequency distances between the downlink subband and the RO set #1, the RO set #2, the RO set #3, and the RO set #4 gradually increase. To be specific, the RO set #1 includes five small dashed boxes in the bottom row, the RO set #2 includes five small dashed boxes in the second row from the bottom, the RO set #3 includes five small dashed boxes in the second row, and the RO set #4 includes five small dashed boxes in the first row, that is, each RO set includes five ROs. In this case, if an RSRP measurement value of an SSB beam measured by the first apparatus is greater than or equal to the RSRP threshold #2 and less than the RSRP threshold #1, the RO set #2 may be determined based on the first mapping relationship in Table 1, so that the first apparatus can select one RO from the ROs in the third row in the figure as the first RO. Alternatively, if an RSRP measurement value of an SSB beam measured by the first apparatus is greater than or equal to the RSRP threshold #3 and less than the RSRP threshold #2, the RO set #3 and the RO set #4 may be determined based on the first mapping relationship in Table 1, so that the first apparatus can select one RO from the upper two rows of ROs in the figure as the first RO.

Optionally, as shown in FIG. 12c, the RO set #1 and the RO set #2 may be frequency division multiplexed RO sets with different frequency indexes, where the RO set #1 is closer to the downlink subband than the RO set #2 (a frequency distance between the RO set #1 and the downlink subband is smaller).

Optionally, if there is no RO that satisfies the foregoing requirement, the first apparatus does not use the first resource to perform initial random access.

It should be noted that, a smaller RSRP measurement value indicates poorer signal quality, and corresponding UE may cause strong interference. In this case, an RO with a longer frequency distance from the downlink subband may be used. A larger RSRP measurement value indicates better signal quality, and corresponding UE may cause weak interference. In this case, an RO with a shorter frequency distance from the downlink subband may be used, or any RO may be selected for random access. This can reduce interference caused by PRACH transmission with large PRACH transmit power to downlink UE in an SBFD slot.

An example of the first mapping relationship is provided below in a table form. If the first threshold is the path loss threshold, the first mapping relationship is a mapping relationship between a path loss measurement value and an RO set, as shown in Table 2. For example, the first apparatus compares a path loss measurement value of an SSB or another reference signal with the path loss threshold, determines an RO resource position for random access based on a comparison result, and may determine, based on an SSB-RO correspondence, an SSB beam used for random access.

**Table 2**

| Comparison result | | RO set |
|---|---|---|
| Comparison result #1 | A path loss measurement value is greater than or equal to a path loss threshold #1 | RO set #1 |
| Comparison result #2 | A path loss measurement value is less than a path loss threshold #1 | RO set #2 |
| Comparison result #3 | A path loss measurement value is greater than or equal to a path loss threshold #1 | RO set #1 and RO set #2 |
| Comparison result #4 | A path loss measurement value is greater than or equal to a path loss threshold #1 | RO set #2 |

As shown in Table 2, the comparison result includes the comparison result #1, the comparison result #2, the comparison result #3, and the comparison result #4, and the RO set includes the RO set #1 and the RO set #2. One row in Table 2 represents a mapping relationship between a comparison result and an RO set corresponding to the comparison result.

For example, if a path loss measurement value of an SSB beam measured by the first apparatus is greater than or equal to the path loss threshold #1, the RO set #1 may be determined based on the first mapping relationship in Table 2, so that the first apparatus can select one RO from the RO set #1 as the first RO. Alternatively, if a path loss measurement value of an SSB beam measured by the first apparatus is less than the path loss threshold, the RO set #2 may be determined based on the first mapping relationship in Table 2, so that the first apparatus can select one RO from the RO set #2 as the first RO.

Optionally, if there is no RO that satisfies the foregoing requirement, the first apparatus does not use the first resource to perform initial random access.

An example of the first mapping relationship is provided below in a table form. If the first threshold is the transmit power threshold, the first mapping relationship is a mapping relationship between an estimated transmit power value and an RO set, as shown in Table 3. For example, the first apparatus obtains, through calculation, an estimated transmit power value based on a path loss obtained by measuring an SSB or another reference signal, compares the estimated transmit power value with the power threshold, determines an RO resource position for random access based on a comparison result, and may determine, based on an SSB-RO correspondence, an SSB beam used for random access.

**Table 3**

| Comparison result | | RO set |
|---|---|---|
| Comparison result #1 | An estimated transmit power value is greater than or equal to a transmit power threshold #1 | RO set #1 |
| Comparison result #2 | An estimated transmit power value is less than a transmit power threshold #1 | RO set #2 |
| Comparison result #3 | An estimated transmit power value is greater than or equal to a transmit power threshold #1 | RO set #1 |
| Comparison result #4 | An estimated transmit power value is greater than or equal to a transmit power threshold #1 | RO set #1 and RO set #2 |

As shown in Table 3, the comparison result includes the comparison result #1, the comparison result #2, the comparison result #3, and the comparison result #4, and the RO set includes the RO set #1 and the RO set #2. One row in Table 3 represents a mapping relationship between a comparison result and an RO set corresponding to the comparison result.

For example, if an estimated transmit power value of an SSB beam measured by the first apparatus is greater than or equal to the transmit power threshold #1, the RO set #1 may be determined based on the first mapping relationship in Table 3, so that the first apparatus can select one RO from the RO set #1 as the first RO. Alternatively, if an estimated transmit power value of an SSB beam measured by the first apparatus is less than the transmit power threshold, the RO set #2 may be determined based on the first mapping relationship in Table 3, so that the first apparatus can select one RO from the RO set #2 as the first RO.

Optionally, if there is no RO that satisfies the foregoing requirement, the first apparatus does not use the first resource to perform initial random access.

It should be noted that the foregoing Table 1 to Table 3 are merely examples provided for ease of understanding, and other solutions are not excluded. Optionally, a quantity (for example, one row in the table) of first mapping relationships in Table 1 to Table 3 is not limited in this application. In other words, a quantity of comparison results in Table 1 to Table 3 is not limited in this application. For example, the quantity of comparison results or RO sets may be increased or decreased. For example, a plurality of tables in Table 1 to Table 3 may be combined into one table, or any one of the tables may be split into a plurality of tables. For example, the comparison result #1 to the comparison result #4, the comparison result #5 to the comparison result #8, and the comparison result #9 to the comparison result #12 in Table 1 may be separately formed into new tables, or Table 1 may be split into a plurality of other tables for illustration. This application does not impose any limitation on this, nor on the splitting manner.

It should be noted that, based on the foregoing manner, the first RO is located in an SBFD time domain unit. Optionally, the first apparatus in this application may further determine a second RO on a PRACH resource (namely, a second resource) in a UL time domain unit, and perform random access on the second RO. Implementations of determining to perform random access on the first RO or the second RO for two cases are described below by using examples.

Case 1: For example, the first apparatus obtains a second measurement result, and determines the first RO or the second RO based on the second measurement result and the first threshold, where the first RO is located on the first resource, and the second RO is located on the second resource.

For example, when the second measurement result is greater than or equal to the RSRP threshold, the first RO is located on the first resource, that is, the first apparatus performs random access on the first resource.

For example, when the second measurement result is less than or equal to an RSRP threshold, the second RO is located on the second resource, that is, the first apparatus performs random access on the second resource.

For example, when the second measurement result is less than or equal to the path loss threshold, the first RO is located on the first resource, that is, the first apparatus performs random access on the first resource.

For example, when the second measurement result is greater than or equal to the path loss threshold, the second RO is located on the second resource, that is, the first apparatus performs random access on the first resource.

Based on the foregoing examples, the first apparatus may perform random access on the first resource or the second resource. This can reduce signal interference while ensuring random access performance.

Case 2: For example, the first apparatus obtains a second measurement result, and determines the first RO or the second RO based on the second measurement result and the first threshold, where the first RO is located on the first resource, and the second RO is located on the second resource.

For example, when the second measurement result is less than or equal to the RSRP threshold, the first RO is located on the first resource, that is, the first apparatus performs random access on the first resource.

For example, when the second measurement result is greater than or equal to the RSRP threshold, the second RO is located on the second resource, that is, the first apparatus performs random access on the second resource.

For example, when the second measurement result is greater than or equal to the path loss threshold, the first RO is located on the first resource, that is, the first apparatus performs random access on the first resource.

For example, when the second measurement result is less than or equal to the path loss threshold, the second RO is located on the second resource, that is, the first apparatus performs random access on the first resource.

Based on the foregoing examples, it is considered that a PRACH resource in an SBFD time domain unit may be used to extend PRACH coverage, for example, a longer random access preamble (preamble) is used or a higher repetition level is allowed. In this case, logic for determining, by determining a threshold and a measurement value, a PRACH resource used for random access may change. Especially when coverage of UE is limited (for example, RSRP is small), the UE may select a PRACH resource in a UL time domain unit for random access, to ensure random access performance.

In a second implementation, the first apparatus determines the first RO based on the first comparison result and a second comparison result, where the first comparison result is a result of comparison between the frequency distance threshold and a first distance, the second comparison result is a result of comparison between the frequency distance threshold and a second distance, the first distance is a distance between the first RO and a first frequency, and the second distance is a distance between the second RO and the first frequency. The first frequency is located on the second subband. Optionally, the first frequency may alternatively be located on the first subband, for example, adjacent to a frequency on the second subband.

For example, if the first comparison result indicates that the frequency distance threshold is greater than or equal to the first distance, and the second comparison result indicates that the frequency distance threshold is less than the second distance, it indicates that the distance between the first RO and the first frequency is greater than or equal to a frequency distance threshold, and the distance between the second RO and the first frequency is less than the frequency distance threshold, that is, the first RO is farther away from the downlink subband, the second RO is closer to the downlink subband, and interference caused by random access on the first RO is less than that caused by random access on the second RO.

Optionally, the first apparatus randomly selects one RO, namely, the first RO, from an RO set that satisfies a frequency distance threshold comparison condition.

Optionally, the implementation may further include a third comparison result or a fourth comparison result. Correspondingly, the third comparison result is a result of comparison between the frequency distance threshold and a third distance, the fourth comparison result is a result of comparison between the frequency distance threshold and a fourth distance, the third distance is a distance between a third RO and the first frequency, the fourth distance is a distance between a fourth RO and the first frequency, and the first frequency is located on the second subband. Optionally, the first frequency may alternatively be located on the first subband, for example, adjacent to a frequency on the second subband. It should be understood that the distance between the third RO and the first frequency is less than the frequency distance threshold, and the distance between the fourth RO and the first frequency is also less than the frequency distance threshold, that is, the third RO and the fourth RO are closer to the downlink subband, and interference caused by random access on the first RO is less than that caused by random access on the third RO and the fourth RO.

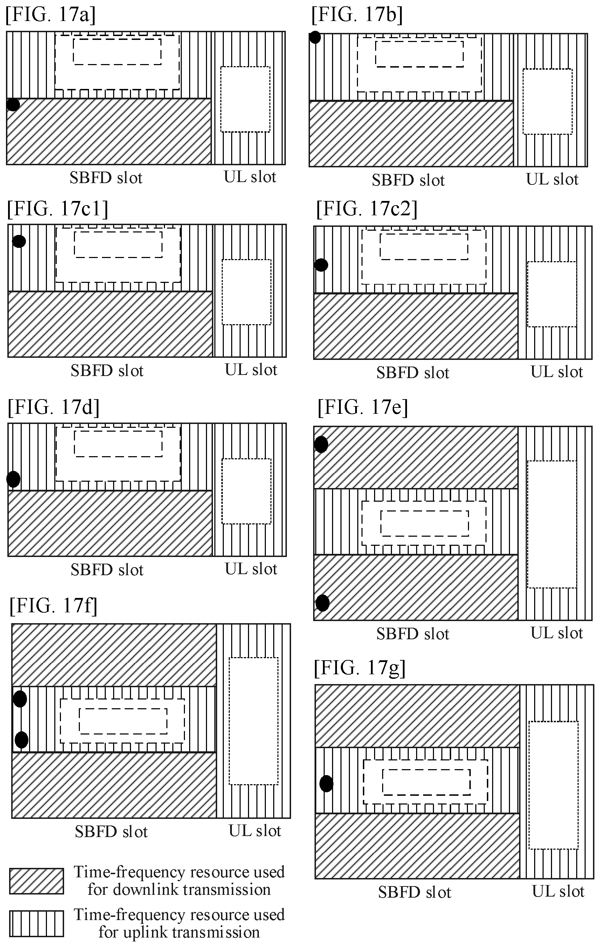

It should be noted that the first frequency may be located on the second subband (downlink subband), or may be located on the first subband (uplink subband). In addition, there may be one or two first frequencies, and a position of the first frequency affects selection of an RO used for random access. With reference to FIG. 17a to FIG. 17g, examples in which a position of the first frequency affects selection of an RO used for random access are separately described below by using a case 1 and a case 2. As shown in FIG. 17a to FIG. 17g, the first subband (for example, an uplink subband) in an SBFD time domain unit includes the first resource (for example, a PRACH, that is, corresponding to a large dashed box), where a small dashed box is an RO selected on a PRACH resource for sending a preamble, and a small black dot in the figure represents the position of the first frequency (or further including a second frequency).

Case 1: For a scenario in which a frequency domain unit corresponding to the SBFD time domain unit includes one downlink subband.

For example, in FIG. 17a, the first frequency is located on the second subband. In this case, the first RO may be determined according to the foregoing solution, that is, an RO whose frequency distance from the second subband is greater than or equal to the frequency distance threshold is selected as the first RO.

For example, in FIG. 17b, the first frequency is located on the first subband. In this case, the first apparatus may select, based on a relationship between the PRACH resource, the first frequency position, and a second subband position, an RO that is far away from the second subband to perform random access. For example, in FIG. 17b, a distance between the second subband and the first frequency located on the first subband is greater than a distance between any RO on the PRACH resource and the second subband. In this case, the first apparatus may select one or more ROs associated with an SSB, select any RO from the one or more ROs, and calculate a distance between the RO and the first frequency. If the distance is less than or equal to the frequency distance threshold, the first apparatus may use the RO to perform random access.

Optionally, if the distance between the first RO and the first frequency is less than or equal to the frequency distance threshold, and the distance between the second RO and the first frequency is greater than the frequency distance threshold, it indicates that the first RO is farther from the second subband. In this case, the first RO is selected to perform random access.

For example, in FIG. 17c1, the first frequency is located on a frequency band corresponding to the PRACH resource. In this case, the first apparatus may select one or more ROs associated with an SSB, select any RO from the one or more ROs, and calculate a distance between the RO and the first frequency. If a distance between the first frequency and the second subband is less than a distance between the RO and the second subband, and the distance between the first frequency and the RO is less than or equal to the frequency distance threshold, the first apparatus may use the RO to perform random access. If the distance between the first frequency and the second subband is greater than the distance between the RO and the second subband, and the distance between the first frequency and the RO is greater than or equal to the frequency distance threshold, the first apparatus may use the RO to perform random access.

For example, in FIG. 17c2, the first frequency is located on a frequency band corresponding to the PRACH resource. In this case, the first apparatus may select one or more ROs associated with an SSB, select any RO from the one or more ROs, and calculate a distance between the RO and the first frequency. If a distance between the first frequency and the second subband is less than a distance between the RO and the second subband, the first apparatus may use the RO to perform random access. If the distance between the first frequency and the second subband is greater than the distance between the RO and the second subband, the first apparatus may not use the RO to perform random access.

It should be noted that in this implementation, there may be one or two frequency distance thresholds. If there are two frequency distance thresholds, corresponding different ROs are allocated.

For example, in FIG. 17d, a distance between the second subband and the first frequency located on the first subband is less than a distance between any RO on the PRACH resource and the second subband. In this case, the first apparatus may select one or more ROs associated with an SSB, select any RO from the one or more ROs, and calculate a distance between the RO and the first frequency. If the distance is greater than or equal to the frequency distance threshold, the first apparatus may use the RO to perform random access.

Optionally, if the distance between the first RO and the first frequency is greater than or equal to the frequency distance threshold, and the distance between the second RO and the first frequency is less than the frequency distance threshold, the first apparatus may use the first RO to perform random access.

In conclusion, the first apparatus may select, from the PRACH resource, an RO far away from the second subband to perform random access. This can reduce CLI interference while ensuring random access performance.

Case 2: For a scenario in which a frequency domain unit corresponding to the SBFD time domain unit includes two downlink subbands.

For example, in FIG. 17e, there are two first frequencies, which are separately located on the second subband. In this case, the first RO may be determined according to the foregoing solution, that is, an RO whose frequency distance is greater than or equal to the frequency distance threshold is selected as the first RO (both distance associations satisfy the requirement).

For example, in FIG. 17f, there are two first frequencies, which are separately located on the first subband and are not on a frequency band corresponding to the PRACH resource. In this case, the first RO may be determined according to the foregoing solution, that is, an RO whose frequency distance is greater than or equal to the frequency distance threshold is selected as the first RO (both distance associations satisfy the requirement).

For example, in FIG. 17g, there is one first frequency, and the first frequency is located at the center of the first subband, located on a frequency band corresponding to the PRACH resource, or located at the center of the frequency band corresponding to the PRACH resource. In this case, an RO whose frequency distance is less than or equal to the frequency distance threshold is selected as the first RO.

It should be noted that for the two first frequencies, there may be one frequency distance threshold, or there may be two frequency distance thresholds that correspond one-to-one to the two first frequencies.

In conclusion, the first apparatus may select, from the PRACH resource, an RO far away from the second subband to perform random access. This can reduce CLI interference while ensuring random access performance.

Optionally, in the figure, placing the first frequency on the leftmost side is merely an example provided for ease of understanding. A specific position of the first frequency is not limited in this application.

Optionally, in a possible design, when a distance between the first RO and the second frequency is greater than or equal to the frequency distance threshold, the first RO may be used for CBRA; or when the distance between the first RO and the second frequency is less than the frequency distance threshold, the first RO is used for CFRA.

In other words, the first resource in the SBFD time domain unit is used for random access, where the first resource includes a plurality of ROs. If a distance between the RO and the second frequency on the downlink subband in the SBFD time domain unit is greater than or equal to the frequency distance threshold, the RO may be used for CBRA; or if the distance between the RO and the second frequency on the downlink subband in the SBFD time domain unit is less than the frequency distance threshold, the RO may be used for CFRA.

For example, as shown in FIG. 13a, a time domain includes an SBFD slot and a UL slot, and a frequency domain includes two downlink subbands and one uplink subband. A dashed box in the figure represents a PRACH resource, used by the first apparatus for random access. A large dashed box in the SBFD slot represents the first resource, and a small dashed box in the first resource is farther from the downlink subband than the large dashed box. To be specific, if a distance between the first RO of the first resource and the second frequency on the downlink subband is greater than or equal to the frequency distance threshold, it is considered that the first RO is located in the small dashed box, and a PRACH resource in the small dashed box is used for CBRA. If the distance between the first RO of the first resource and the second frequency on the downlink subband is less than the frequency distance threshold, it is considered that the first RO is located in the large dashed box, and a PRACH resource in the large dashed box may be used for CFRA.

Therefore, the first apparatus may select, based on the obtained frequency distance threshold, an RO whose distance from a boundary of the downlink subband (namely, the second subband) or distance from a frequency on any given downlink subband (namely, the second subband) is greater than (or greater than or equal to) the frequency distance threshold as an RO for sending the preamble in the CBRA case, and remaining ROs or all ROs may be used as ROs for sending the preamble in the CFRA case.

Based on the foregoing manner, the first RO is located in the SBFD time domain unit. Optionally, the first apparatus in this application may further determine the second RO on the PRACH resource (namely, the second resource) in the UL time domain unit, and perform random access on the second RO. The implementation in which the first apparatus determines to perform random access on the first RO or the second RO is described below by using examples.

For example, the first apparatus obtains the second measurement result, and determines the first RO or the second RO based on the second measurement result and the first threshold, where the first RO is located on the first resource, and the second RO is located on the second resource.

For example, the distance between the first RO and the second frequency is greater than or equal to the frequency distance threshold, and the second frequency is located on the second subband.

For example, a distance between the second RO and the second frequency is less than or equal to the frequency distance threshold, and the second frequency is located on the second subband.

Optionally, the second frequency may alternatively be located on the first subband, for example, adjacent to a frequency on the second subband.

Based on the foregoing examples, the first apparatus determines, based on the results of comparison between the frequency distance threshold and the distances between the ROs and the second frequency, to perform random access on the first resource or the second resource. This can reduce signal interference as much as possible while improving random access performance.

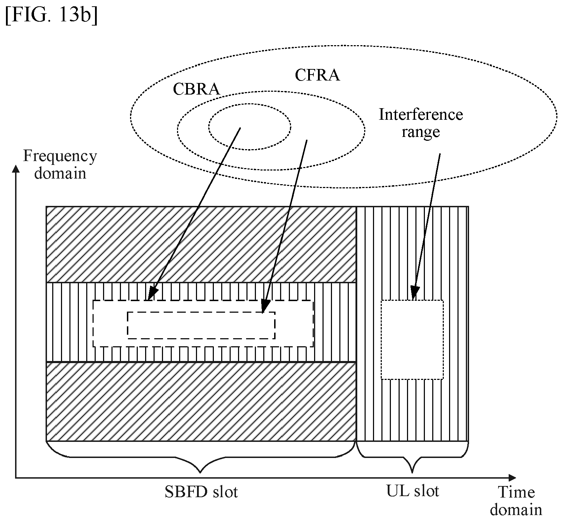

For example, as shown in FIG. 13b, a time domain includes an SBFD slot and a UL slot, and a frequency domain corresponding to the SBFD slot includes two downlink subbands and one uplink subband. A dashed box in the figure represents a PRACH resource, used by the first apparatus for random access. A large dashed box in the SBFD slot represents the first resource, and a small dashed box in the first resource is farther from the downlink subband than the large dashed box. To be specific, an RO in the large dashed box is suitable for CFRA, in other words, the RO in the large dashed box is suitable for random access of UE with a low interference level, and an RO in the small dashed box is suitable for CBRA, in other words, the RO in the small dashed box is suitable for random access of UE with a high interference level. In comparison, a dashed box in the UL slot represents a PRACH resource. UE with a strong or extremely strong interference level may not perform random access on a PRACH resource in the SBFD slot, but may directly choose to perform random access on the PRACH resource in the UL slot, to ensure random access performance and reduce signal interference.

In other words, if there is no RO that satisfies the threshold requirement, the first apparatus does not use the first resource in the SBFD slot to perform initial random access, and may use the second resource in the UL slot to perform initial random access, to ensure random access performance.

S1130: The first apparatus performs random access on the first RO.

For example, based on the first RO determined in the foregoing step, the first apparatus sends a random access preamble on the first RO. For a specific implementation, refer to related descriptions of the method 400 or 500. Random access on the first RO can reduce, as much as possible, signal interference caused by uplink transmission and downlink transmission, and improve random access performance.

According to the foregoing solution, the measurement result is compared with the first threshold to determine the RO used for random access, and then the random access preamble is sent on the RO. By controlling an average UE-UE interference level caused by random access in a cell, a trade-off between UE access capability enhancement and interference control is achieved, that is, signal interference is reduced while random access performance is ensured.

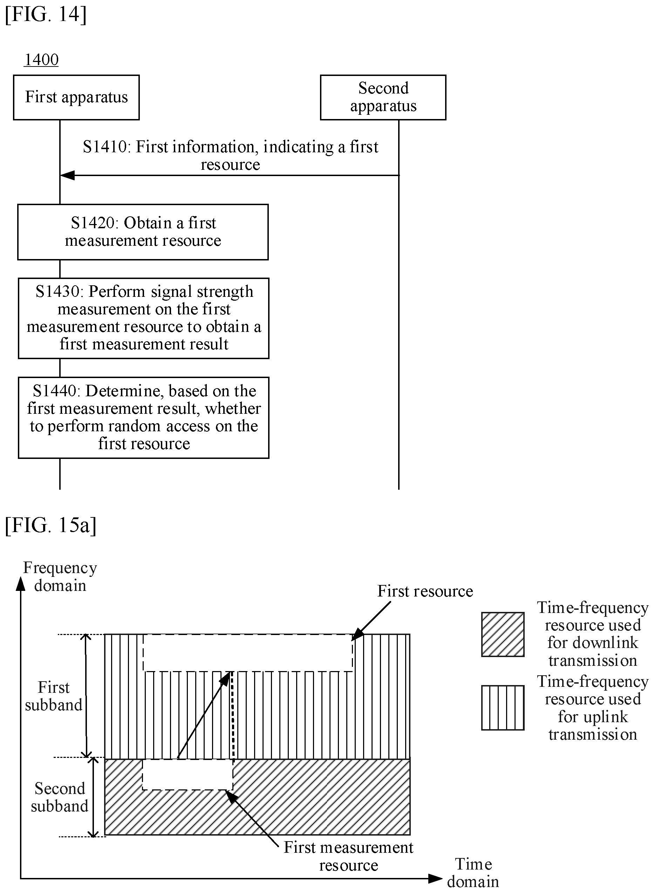

FIG. 14 is a schematic flowchart of a communication method according to an embodiment of this application. As shown in FIG. 14, the method 1400 includes the following plurality of steps. In this implementation, a first apparatus first performs detection and then determines whether to perform random access. For example, the first apparatus first detects, on a measurement resource (the measurement resource is a downlink resource), downlink signal power of a base station or uplink interference power from other UE, and then determines, based on a measurement result, whether to use a PRACH resource in an SBFD time domain unit to send a preamble.

S1410: A second apparatus sends first information to the first apparatus.

Correspondingly, the first apparatus receives the first information from the second apparatus.

The first information indicates a first resource, the first resource includes a first time domain resource and a first frequency domain resource, the first time domain resource corresponds to the first frequency domain resource, the first time domain resource is located in a first time domain unit, a first frequency domain unit corresponding to the first time domain unit includes a first subband used for uplink transmission and a second subband used for downlink transmission, and the first frequency domain resource is located on the first subband.

It should be understood that, for related information of the first information and the first resource, refer to related descriptions of the foregoing method 900. Details are not described herein again.

As shown in FIG. 15a, a horizontal axis represents a time domain, and includes an SBFD slot (namely, the first time domain unit), and a vertical axis represents a frequency domain, and includes one first subband (for example, an uplink subband) and one second subband (for example, a downlink subband) (that is, the first subband and the second subband are considered as the first frequency domain unit). The first resource is a PRACH resource on the uplink subband in the SBFD slot, that is, a dashed box on the UL subband in the SBFD slot may represent the PRACH resource. For example, the first resource is located at the top of the UL subband, that is, a distance between the first resource and the downlink subband is the longest, so that transmission interference can be reduced as much as possible, and random access performance can be ensured.

S1420: The first apparatus obtains a first measurement resource.

In a first example, the first measurement resource may be predefined or preconfigured. Predefinition may include advance definition, for example, protocol definition. Preconfiguration may be implemented by pre-storing corresponding code, a corresponding table, a corresponding function, a corresponding text, or a corresponding character string in the first apparatus, or in another manner that may indicate the first measurement resource. A specific implementation of the first measurement resource is not limited in this application.

In a second example, second information may be configured via signaling. For example, the second apparatus sends information to the first apparatus. Correspondingly, the first apparatus receives the information from the second apparatus, and parses the information to obtain the first measurement resource.

Optionally, a resource used for signal measurement (for example, the first measurement resource) may be periodic. In other words, a quantity of first measurement resources is not limited in this application.

Optionally, the resource used for signal measurement (for example, the first measurement resource) may be located in an SBFD time domain unit, for example, an SBFD slot or an SBFD symbol, and occupies, in frequency domain, an RE corresponding to the SBFD time domain unit.

As shown in FIG. 15a, a dashed box on a downlink (DL) subband in an SBFD slot may represent the first measurement resource. For example, the first apparatus may detect downlink signal power of a base station on the first measurement resource, to determine interference caused by the first apparatus to other UE.

Optionally, a position of the first measurement resource on the downlink subband is not limited in this application. For example, the first measurement resource may be located on the second subband of the SBFD slot or the SBFD symbol, and may be adjacent to the first subband.

S1430: The first apparatus performs signal strength measurement on the first measurement resource to obtain a first measurement result.

For example, UE determines, from a measurement resource indicated by the base station, a resource that is closest to a current moment, receives a signal on the resource, calculates power of the received signal, and compares the power with a threshold indicated by the base station, to obtain the first measurement result.

S1440: The first apparatus determines, based on the first measurement result, whether to perform random access on the first resource.

The first measurement result may be obtained by measuring a downlink signal from a network device.

Optionally, a first signal strength threshold may be predefined or preconfigured. Predefinition may include advance definition, for example, protocol definition. Preconfiguration may be implemented by pre-storing corresponding code, a corresponding table, a corresponding function, a corresponding text, or a corresponding character string in the first apparatus, or in another manner that may indicate the first signal strength threshold. A specific implementation of the first signal strength threshold is not limited in this application.

Optionally, the first signal strength threshold may be configured via signaling. For example, the second apparatus sends information to the first apparatus. Correspondingly, the first apparatus receives the information from the second apparatus, and parses the information to obtain the first signal strength threshold.

In an example, when the first measurement result is greater than or equal to the first signal strength threshold, random access is performed on the first resource.

For example, the second apparatus sends downlink data on the specified first measurement resource. If signal strength measured by the first apparatus is greater than the first signal strength threshold, it indicates that a downlink signal is strong enough, and the first apparatus may use a PRACH resource in the SBFD time domain unit to perform random access. This does not cause strong interference. Optionally, the first apparatus sends a preamble by using an RO that satisfies a random access requirement (that is, satisfies an association relationship between an SSB beam and an RO in a current protocol) and that is closest to detection time.

In another example, when the first measurement result is less than the first signal strength threshold, random access is not performed on the first resource.

To be specific, the first apparatus receives a signal on the first measurement resource, and measures signal power obtained through calculation. If a measurement result satisfies a threshold comparison condition, the first apparatus may select an RO located after the first measurement resource, to send a preamble. On the contrary, if the measurement result does not satisfy the threshold comparison condition, the first apparatus may not perform random access; or the first apparatus may continue to perform signal detection on the periodic measurement resource until the measurement result satisfies the threshold condition, and then perform random access.

Optionally, in a possible design, the method further includes: The first apparatus obtains a second measurement resource, where the second measurement resource includes a third time domain resource and a third frequency domain resource, the third time domain resource corresponds to the third frequency domain resource, the third time domain resource is located in the first time domain unit, and the third frequency domain resource is located on the first subband; performs signal strength measurement on the second measurement resource to obtain a second measurement result; and determines, based on the first measurement result and the second measurement result, whether to perform random access on the first resource.

The second measurement result may be obtained by measuring an uplink signal from another terminal.

Optionally, a second signal strength threshold may be predefined or preconfigured, or may be indicated by signaling. This is not specifically limited in this application.

Optionally, a resource used for signal measurement (for example, the second measurement resource) may be periodic. In other words, a quantity of second measurement resources is not limited in this application.

Optionally, the resource used for signal measurement (for example, the second measurement resource) may be located in an SBFD time domain unit, for example, an SBFD slot or an SBFD symbol, and occupies, in frequency domain, an RE corresponding to the SBFD time domain unit.

For example, the second apparatus ensures that the second apparatus does not send downlink data on the specified first measurement resource. If signal strength (namely, the first measurement result) measured by the first apparatus is less than the second signal strength threshold, it indicates that interference of an uplink signal of other UE to a downlink signal at this frequency position is weak enough. In this case, the first apparatus may use a PRACH resource in the SBFD time domain unit to perform random access. This does not cause strong interference.

For example, when the first measurement result is greater than or equal to the first signal strength threshold, and the second measurement result is less than or equal to the second signal strength threshold, random access is performed on the first resource.

For example, when the first measurement result is less than the first signal strength threshold, and/or the second measurement result is greater than the second signal strength threshold, random access is not performed on the first resource.

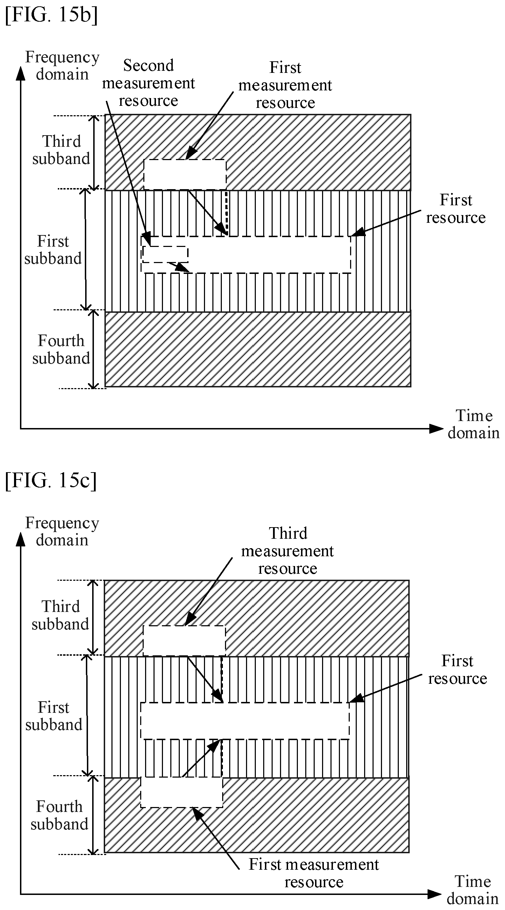

As shown FIG. 15b, a horizontal axis represents a time domain, and includes an SBFD slot (namely, the first time domain unit), and a vertical axis represents a frequency domain, and includes one first subband (for example, an uplink subband) and two second subbands (for example, downlink subbands) (that is, the first subband and the second subbands are considered as the first frequency domain unit). Optionally, the second subbands include a third subband and a fourth subband, and the third subband and the fourth subband are located on both sides of the first subband in time domain. It may be considered that the third subband is located above the first subband, and it may be considered that the fourth subband is located below the first subband, that is, both the third subband and the fourth subband are downlink subbands. The first resource is a PRACH resource on the uplink subband in the SBFD slot, that is, a large dashed box on the UL subband in the SBFD slot may represent the PRACH resource. A dashed box on the downlink (DL) subband in the SBFD slot may represent the first measurement resource, and a small dashed box on the uplink (UL) subband in the SBFD slot may represent the second measurement resource. For example, the first apparatus may detect downlink signal power of a base station on the first measurement resource, to determine interference caused by the first apparatus to other UE, and detect uplink signal power of other UE on the second measurement resource, to determine interference caused by the other UE to the first apparatus. This can reduce transmission interference as much as possible, and ensure random access performance.

Optionally, a position of the first measurement resource on the third subband and a position of the second measurement resource on the first resource are not limited in this application. For example, the first measurement resource may be located on the third subband of the SBFD slot or the SBFD symbol and adjacent to the first subband, and the second measurement resource may be located on the first subband of the SBFD slot or the SBFD symbol.

Optionally, in a possible design, the second subband includes a third subband and a fourth subband, and the third subband and the fourth subband are located on both sides of the first subband in frequency domain. The method further includes: The first apparatus obtains a third measurement resource, where the third measurement resource includes a fourth time domain resource and a fourth frequency domain resource, the fourth time domain resource corresponds to the fourth frequency domain resource, the fourth time domain resource is located in the first time domain unit, the fourth frequency domain resource is located on the third subband, and a second frequency domain resource is located on the fourth subband; performs signal strength measurement on the third measurement resource to obtain a third measurement result; and determines, based on the first measurement result and the third measurement result, whether to perform random access on the first resource.

Optionally, a resource used for signal measurement (for example, the third measurement resource) may be periodic. In other words, a quantity of third measurement resources is not limited in this application.

Optionally, the resource used for signal measurement (for example, the third measurement resource) may be located in an SBFD time domain unit, for example, an SBFD slot or an SBFD symbol, and occupies, in frequency domain, an RE corresponding to the SBFD time domain unit.

For example, when the first measurement result is greater than or equal to the first signal strength threshold, and the third measurement result is greater than or equal to a third signal strength threshold, random access is performed on the first resource.

Optionally, the first signal strength threshold and the third signal strength threshold may be the same or different. This is not limited in this application.

For example, when the first measurement result is less than the first signal strength threshold, and/or the third measurement result is greater than the third signal strength threshold, random access is not performed on the first resource.

As shown in FIG. 15c, a horizontal axis represents a time domain, and includes an SBFD slot (namely, the first time domain unit), and a vertical axis represents a frequency domain, and includes one first subband (for example, an uplink subband) and two second subbands (for example, downlink subbands) (that is, the first subband and the second subbands are considered as the first frequency domain unit). The first resource is a PRACH resource on the uplink subband in the SBFD slot, that is, a dashed box on the UL subband in the SBFD slot may represent the PRACH resource. A dashed box on the third subband in the SBFD slot may represent the third measurement resource, and a small dashed box on the fourth subband in the SBFD slot may represent the first measurement resource. For example, the first apparatus may detect downlink signal power of a base station on the first measurement resource and the third measurement resource, to determine interference caused by the first apparatus to other UE. This can reduce transmission interference as much as possible, and ensure random access performance.

Optionally, a position of the first measurement resource on the fourth subband and a position of the third measurement resource on the third subband are not limited in this application. For example, the first measurement resource and the third measurement resource may be respectively located on the fourth subband and the third subband of the SBFD slot or the SBFD symbol, and may be adjacent to the first subband. For example, the first measurement resource and the third measurement resource may be located at a start position of the SBFD slot or the SBFD symbol, or located at a same position as a start position of a time domain unit in which the PRACH resource is located.

Optionally, in a possible design, when random access is not performed on the first resource, the method further includes: The first apparatus obtains a fourth measurement resource, where the fourth measurement resource includes a fifth time domain resource and a fifth frequency domain resource, the fifth time domain resource corresponds to the fifth frequency domain resource, the fifth time domain resource is located in the first time domain unit, and the fifth frequency domain resource is located on the third subband; obtains a fifth measurement resource, where the fifth measurement resource includes a sixth time domain resource and a sixth frequency domain resource, the sixth time domain resource corresponds to the sixth frequency domain resource, the sixth time domain resource is located in the first time domain unit, and the sixth frequency domain resource is located on the fourth subband; performs signal strength measurement on the fourth measurement resource to obtain a fourth measurement result; performs signal strength measurement on the fifth measurement resource to obtain a fifth measurement result; and determines, based on the fourth measurement result and the fifth measurement result, whether to perform random access on the first resource.

Optionally, a resource used for signal measurement (for example, the fourth measurement resource and/or the fifth measurement resource) may be periodic. In other words, a quantity of fourth measurement resources and/or a quantity of fifth measurement resources are/is not limited in this application.

Optionally, the resource used for signal measurement (for example, the fourth measurement resource and/or the fifth measurement resource) may be located in an SBFD time domain unit, for example, an SBFD slot or an SBFD symbol, and occupies, in frequency domain, an RE corresponding to the SBFD time domain unit.

Optionally, a fourth signal strength threshold and a fifth signal strength threshold may be the same or different. This is not limited in this application.

Optionally, the first signal strength threshold and the fifth signal strength threshold may be the same, and the third signal strength threshold and the fourth signal strength threshold may be the same. This is not limited in this application.

For example, when the fourth measurement result is greater than or equal to the fourth signal strength threshold, and the fifth measurement result is greater than or equal to the fifth signal strength threshold, random access is performed on the first resource.

For example, when the fourth measurement result is less than the fourth signal strength threshold, and/or the fifth measurement result is less than the fifth signal strength threshold, random access is not performed on the first resource.

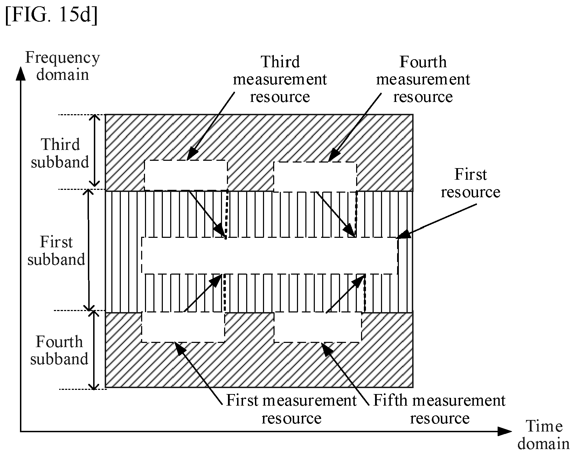

As shown in FIG. 15d, a horizontal axis represents a time domain, and includes an SBFD slot (namely, the first time domain unit), and a vertical axis represents a frequency domain, and includes one first subband (for example, an uplink subband) and two second subbands (for example, downlink subbands) (that is, the first subband and the second subbands are considered as the first frequency domain unit). The first resource is a PRACH resource on the uplink subband in the SBFD slot, that is, a dashed box on the UL subband in the SBFD slot may represent the PRACH resource. In comparison with FIG. 15c, the fourth measurement resource located on the third subband in the SBFD slot and the fifth measurement resource located on the fourth subband in the SBFD slot are newly added. It should be noted that the first measurement resource is different from the fifth measurement resource, and the third measurement resource is different from the fourth measurement resource. For example, the first apparatus may detect downlink signal power of a base station on the fourth measurement resource and the fifth measurement resource, to determine interference caused by the first apparatus to other UE. This can reduce transmission interference as much as possible, and ensure random access performance.

Optionally, a position of the fourth measurement resource on the third subband and a position of the fifth measurement resource on the fourth subband are not limited in this application. The fourth measurement resource and the fifth measurement resource are respectively located after the third measurement resource and the first measurement resource in time domain. Optionally, the fourth measurement resource and the fifth measurement resource may be respectively located on the fourth subband and the third subband of the SBFD slot or the SBFD symbol, and may be adjacent to the first subband.

It should be noted that an arrow in FIG. 15a to FIG. 15d represents a PRACH resource, associated with a measurement resource, that can be used for random access. In other words, a detection result on a current measurement resource indicates that random access can be performed on the first resource. In this case, the first apparatus may send, at a position to which the arrow points (or a PRACH resource position after the measurement resource), a random access preamble to the second apparatus, to implement random access.

Optionally, the second apparatus may allocate, to an important channel such as a PRACH and/or a PUCCH, an uplink subband resource that is in the uplink resources in the uplink subbands in the SBFD time domain unit and that is relatively far away from the downlink subband, and allocate, to a secondary important channel such as a PUSCH, an uplink resource that is in the uplink resources in the uplink subbands in the SBFD time domain unit and that is relatively close to the downlink subband.

It should be noted that, if a measurement result obtained by the first apparatus through detection on a current measurement resource indicates not to perform random access on the first resource, the first apparatus may continue to perform signal detection on another measurement resource until a measurement result indicates that random access can be performed on the first resource. For example, in FIG. 15d, the third measurement resource and the fourth measurement resource are located on the third subband, the third measurement resource and the fourth measurement resource are different, the fifth measurement resource and the second measurement resource are located on the fourth subband, and the fifth measurement resource and the second measurement resource are different. Optionally, the first measurement resource and the third measurement resource may be considered as a group of measurement resources, and the fourth measurement resource and the fifth measurement resource may be considered as a group of measurement resources. In other words, when the first apparatus finds that interference is strong after measuring signals on a first group of measurement resources, the first apparatus may continue to measure a next group of measurement resources until a measurement resource with weak interference strength is found, and then perform random access on a random access resource after the measurement resource. A quantity/a group quantity of measurement resources in the SBFD time domain unit is not limited in this application.

In other words, if there are a plurality of measurement resources (for example, refer to FIG. 15d. In time domain, the fifth measurement resource is included after the first measurement resource, and the fourth measurement resource is included after the third measurement resource), the first measurement resource is associated with a first resource (for example, a PRACH resource #1) between the first measurement resource and the fifth measurement resource, that is, signal detection on the first measurement resource is for determining whether the PRACH resource #1 can be used by the first apparatus for random access. Similarly, the third measurement resource is associated with a first resource (for example, a PRACH resource #2) between the third measurement resource and the fourth measurement resource, that is, signal detection on the third measurement resource is for determining whether the PRACH resource #2 can be used by the first apparatus for random access. The rest can be deduced by analogy.

It should be understood that in frequency division multiplexed ROs of a PRACH resource in an SBFD time domain unit (which may be referred to as an SBFD-PRACH for short), a frequency division multiplexed RO that occupies a lowest frequency position starts from a lowest RE or a lowest RB of an uplink subband in the SBFD time domain unit. Alternatively, in frequency division multiplexed ROs of an SBFD-PRACH, a frequency division multiplexed RO that occupies a highest frequency position ends at a highest RE or a highest RB of an uplink subband, a center frequency position of the PRACH is aligned with a center frequency position of the uplink subband (a deviation does not exceed a given threshold, and a specific quantity may be predefined), or the PRACH does not occupy one or more (a specific quantity may be predefined) RBs or REs closest to a downlink subband.

According to the foregoing solution, the first apparatus obtains the first measurement resource, performs signal monitoring on the first measurement resource to obtain the first measurement result, and then determines, based on the first measurement result, whether to perform random access on the first resource. In this implementation, whether to use the first resource to perform random access is determined based on strength of signal interference detected by the first apparatus, so that a CLI interference level caused by random access of the first apparatus in a cell can be effectively controlled, and random access performance of the first apparatus can be improved.

For the solutions shown in FIG. 9, FIG. 11, and FIG. 14, the first apparatus may select the first RO for random access on the first resource (for example, a PRACH resource) on the first subband (uplink subband) in the SBFD time domain unit. Specifically, the first apparatus may send a preamble on the first RO.

In an implementation, after receiving the first RO, the second apparatus may determine one or more of the following: a resource used to send a RAR, a resource used to send a msg3, a resource used to send a msg4, or a resource used to send a msg5, to implement a complete random access procedure. This can improve random access performance while effectively controlling CLI interference.

For example, a frequency domain resource corresponding to the SBFD time domain unit includes one uplink subband and two downlink subbands, that is, includes the first subband, the third subband, and the fourth subband. The third subband and the fourth subband may be referred to as the second subband, the third subband is located above the first subband, and the fourth subband is located below the first subband. In this case, after receiving the preamble from the first apparatus on the first RO, the second apparatus may determine one or more of the following: The resource used to send the RAR is located at the top of the third subband or at the bottom of the fourth subband and at a position farthest from the first subband, the resource used to send the msg3 is located in the middle of the first subband and at a position farthest from the second subband, the resource used to send the msg4 is located at the top of the third subband or at the bottom of the fourth subband and at a position farthest from the first subband, and the resource used to send the msg5 is located in the middle of the first subband and at a position farthest from the second subband. It may be understood as that a resource position for sending a PUSCH by the first apparatus may be located in the middle of the first subband, and a resource position for sending a PDSCH by the second apparatus may be located at the top of the third subband or at the bottom of the fourth subband. This can improve random access performance while effectively controlling CLI interference.

For another example, a frequency domain resource corresponding to the SBFD time domain unit includes one uplink subband and one downlink subband, that is, includes the first subband and the second subband. Frequency domain positions of the first subband and the second subband are not limited in this application. For example, the first subband is located above the second subband, or the first subband is located below the second subband. In this case, after receiving the preamble from the first apparatus on the first RO, the second apparatus may determine one or more of the following: If the first subband is located above the second subband, the resource used to send the RAR is located at the bottom of the second subband, the resource used to send the msg3 is located in the middle of the first subband and at a position farthest from the second subband, the resource used to send the msg4 is located at the bottom of the second subband, and the resource used to send the msg5 is located in the middle of the first subband and at a position farthest from the second subband. In other words, a resource position for sending a PUSCH by the first apparatus may be located in the middle of the first subband, and a resource position for sending a PDSCH by the second apparatus may be located at the bottom of the second subband. Alternatively, if the first subband is located below the second subband, the resource used to send the RAR is located at the top of the second subband and at a position farthest from the first subband, the resource used to send the msg3 is located in the middle of the first subband and at a position farthest from the second subband, the resource used to send the msg4 is located at the top of the second subband and at a position farthest from the first subband, and the resource used to send the msg5 is located in the middle of the first subband and at a position farthest from the second subband. In other words, a resource position for sending a PUSCH by the first apparatus may be located in the middle of the first subband, and a resource position for sending a PDSCH by the second apparatus may be located at the bottom of the second subband. This can improve random access performance while effectively controlling CLI interference.

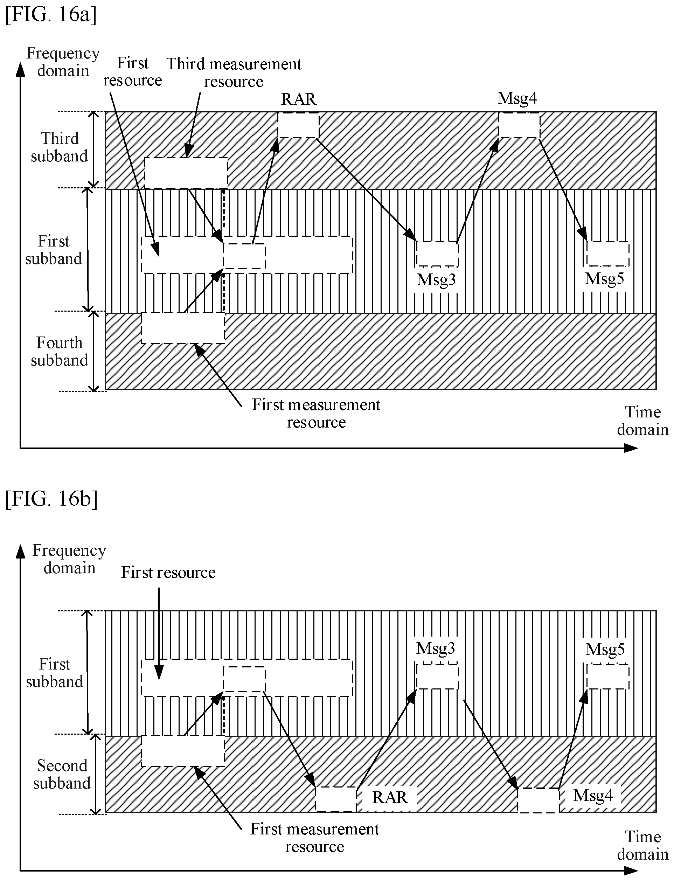

A position relationship between resources for sending a preamble, a RAR, a msg3, a msg4, and a msg5 in a random access procedure performed in an SBFD time domain unit is described below by using examples with reference to FIG. 16a and FIG. 16b.

FIG. 16a and FIG. 16b are diagrams of position relationships between messages sent during random access according to embodiments of this application. As shown in FIG. 16a, a horizontal axis represents a time domain, and includes an SBFD slot (namely, the first time domain unit), and a vertical axis represents a frequency domain, and includes one first subband (for example, an uplink subband) and two second subbands (namely, the third subband and the fourth subband, for example, downlink subbands) (that is, the first subband and the second subbands are considered as the first frequency domain unit). The first resource is a PRACH resource on the uplink subband in the SBFD slot, that is, a large dashed box on the UL subband in the SBFD slot may represent the PRACH resource, and the third subband and the fourth subband in the SBFD slot respectively include measurement resources (referring to the third measurement resource and the first measurement resource shown in FIG. 15c). For example, the first apparatus may detect downlink signal power of a base station on the first measurement resource and the third measurement resource, and correspondingly obtain the first measurement result and the third measurement result, to determine interference caused by the first apparatus to other UE. For a specific implementation, refer to the foregoing related descriptions. Assuming that the first measurement result is greater than or equal to the first signal strength threshold, and the third measurement result is greater than or equal to the third signal strength threshold, it indicates that signal quality is good and caused CLI interference is weak. In this case, the first apparatus may select, from the first resource, a position after the first measurement resource or the third measurement resource to perform random access. For example, in a small dashed box in the large dashed box in the figure, the first apparatus sends a msg1 or a msgA to the second apparatus, where the msg1 or the msgA carries a preamble. Correspondingly, the second apparatus sends a RAR on a resource corresponding to a 2^{nd} dashed box on the third subband. Correspondingly, the first apparatus sends a msg3 on a resource corresponding to a 2^{nd} small dashed box on the first subband. Correspondingly, the second apparatus sends a msg4 on a resource corresponding to a 3^{rd} dashed box on the third subband. Correspondingly, the first apparatus sends a msg5 on a resource corresponding to a 3^{rd} small dashed box on the first subband until the random access procedure is completed.

As shown in FIG. 16a, the first resource is located in the middle of the first subband and at a position farthest from the downlink subbands (namely, the third subband and the fourth subband), the resource used to send the RAR is located at the top of the third subband or at the bottom of the fourth subband, the resource used to send the msg3 is located in the middle of the first subband, the resource used to send the msg4 is located at the top of the third subband or at the bottom of the fourth subband, and the resource used to send the msg5 is located in the middle of the first subband. In other words, a resource position for sending a PUSCH may be located in the middle of the first subband, and a resource position for sending a PDSCH may be located at the top of the third subband or at the bottom of the fourth subband. This can improve random access performance while effectively controlling CLI interference.

As shown in FIG. 16b, a time domain includes an SBFD slot and a UL slot, and a frequency domain corresponding to the SBFD slot includes one downlink subband and one uplink subband. The first resource is a PRACH resource on the uplink subband in the SBFD slot, that is, a large dashed box on the UL subband in the SBFD slot may represent the PRACH resource, and the second subband in the SBFD slot includes a measurement resource (referring to the first measurement resource shown in FIG. 15a). For example, the first apparatus may detect downlink signal power of a base station on the first measurement resource, and correspondingly obtain the first measurement result, to determine interference caused by the first apparatus to other UE. For a specific implementation, refer to the foregoing related descriptions. Assuming that the first measurement result is greater than or equal to the first signal strength threshold, it indicates that signal quality is good and caused CLI interference is weak. In this case, the first apparatus may select, from the first resource, a position after the first measurement resource to perform random access. For example, in a small dashed box in the large dashed box in the figure, the first apparatus sends a msg1 or a msgA to the second apparatus, where the msg1 or the msgA carries a preamble. Correspondingly, the second apparatus sends a RAR on a resource corresponding to a 2^{nd} dashed box on the second subband. Correspondingly, the first apparatus sends a msg3 on a resource corresponding to a 2^{nd} small dashed box on the first subband. Correspondingly, the second apparatus sends a msg4 on a resource corresponding to a 3^{rd} dashed box on the third subband. Correspondingly, the first apparatus sends a msg5 on a resource corresponding to a 3^{rd} small dashed box on the first subband until the random access procedure is completed.

As shown in FIG. 16b, the first resource is located in the middle of the first subband and at a position farthest from the downlink subband (namely, the second subband), the resource used to send the RAR is located at the bottom of the second subband, the resource used to send the msg3 is located in the middle of the first subband, the resource used to send the msg4 is located at the bottom of the second subband, and the resource used to send the msg5 is located in the middle of the first subband. In other words, a resource position for sending a PUSCH may be located in the middle of the first subband, and a resource position for sending a PDSCH may be located at the bottom of the second subband. This can improve random access performance while effectively controlling CLI interference.

It should be noted that in this application, unless otherwise stated or if there is a logic conflict, terms and/or descriptions in different embodiments are consistent and may be mutually referenced, and technical features in different embodiments may be combined based on an internal logical relationship thereof, to form a new embodiment. For example, that the second apparatus determines and allocates a sending resource to the first apparatus in a random access procedure may be applied to the foregoing solutions shown in FIG. 9, FIG. 11, and FIG. 14, that is, the two may be combined or referenced to each other. A specific implementation is not described.

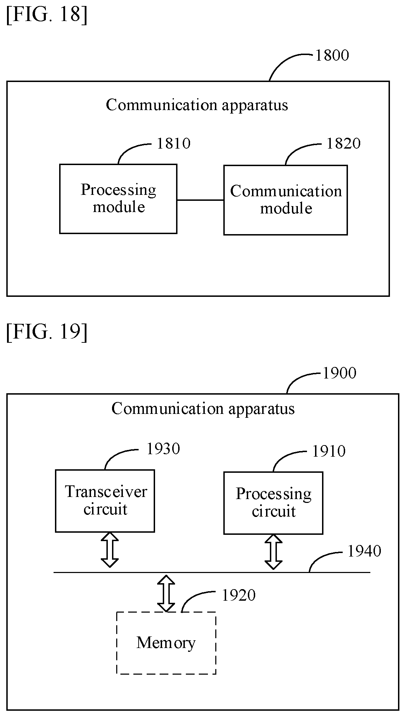

Embodiments on a communication method side of this application are described above in detail with reference to FIG. 1 to FIG. 17g. Embodiments on a communication apparatus side of this application are described below in detail with reference to FIG. 18 and FIG. 19. It should be understood that descriptions of the apparatus embodiments correspond to the descriptions of the method embodiments, and therefore, for a part that is not described in detail, refer to the foregoing method embodiments.

FIG. 18 is a diagram of a communication apparatus according to an embodiment of this application. As shown in FIG. 18, the communication apparatus 1800 includes a processing module 1810 and a communication module 1820. The communication apparatus 1800 may be a first apparatus, and the first apparatus may be a terminal device, or may be a communication apparatus, for example, a chip, a chip system, or a circuit, that is used in the terminal device or used in conjunction with the terminal device and that can implement the method performed by the terminal device. Alternatively, the communication apparatus 1800 may be a second apparatus, and the second apparatus may be a network device, or may be a communication apparatus, for example, a chip, a chip system, a circuit, a DU, or a CU, that is used in the network device or used in conjunction with the network device and that can implement the method performed by the network device.

The communication module 1820 may also be referred to as a transceiver module, a transceiver, a transceiver machine, a transceiver unit, a transceiver apparatus, or the like. The processing module 1810 may also be referred to as a processor, a processing board, a processing unit, a processing apparatus, or the like. Optionally, the communication module 1820 is configured to perform a sending operation and a receiving operation of the first apparatus or the second apparatus in the foregoing method. A device configured to implement the receiving function in the communication module 1820 may be considered as a receiving unit, and a device configured to implement the sending function in the communication module 1820 may be considered as a sending unit. In other words, the communication module 1820 includes the receiving unit and/or the sending unit. Optionally, the processing module 1810 is configured to implement a processing function of the first apparatus or the second apparatus in the foregoing method.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the apparatus is implemented by using a chip/circuit (for example, an integrated circuit or a logic circuit), the communication module may be an input/output circuit and/or a communication interface, and performs an input operation (corresponding to the foregoing receiving operation) and an output operation (corresponding to the foregoing sending operation). The processing module is an integrated processor, a microprocessor, or a circuit (for example, an integrated circuit or a logic circuit).

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

FIG. 19 is a diagram of another communication apparatus according to an embodiment of this application. As shown in FIG. 19, optionally, the communication apparatus 1900 may be the foregoing first apparatus or second apparatus, or a chip, a chip system, or a circuit used in the foregoing first apparatus or second apparatus. Optionally, in this application, the chip system may include a chip, or may include a chip and another discrete device. The first apparatus may be a terminal device, and the second apparatus may be a network device or the like.

The communication apparatus 1900 may be configured to implement a function of any device (for example, the terminal device or the network device) in the communication system described in the foregoing example. The communication apparatus 1900 may include at least one processing circuit 1910. Optionally, the processing circuit 1910 is coupled to a memory. The memory may be located in the apparatus. Alternatively, the memory may be integrated with a processor. Alternatively, the memory may be located outside the apparatus. For example, the communication apparatus 1900 may further include at least one memory 1920. The memory 1920 stores a computer program or instructions, and/or data that are/is necessary for implementing any one of the foregoing examples. The processing circuit 1910 may execute the computer program stored in the memory 1920, to complete the method in any one of the foregoing examples.

The communication apparatus 1900 may further include a transceiver circuit 1930, and the communication apparatus 1900 may exchange information with another device through the transceiver circuit 1930. For example, the transceiver circuit 1930 may be a transceiver, a circuit, a bus, a module, a pin, or another type of communication interface. When the communication apparatus 1900 is a chip-type apparatus or circuit, the transceiver circuit 1930 in the apparatus 1900 may alternatively be an input/output circuit or an interface circuit, and may input information (or receive information) and output information (or send information). When the communication apparatus 1900 is a network device or a terminal device, the transceiver circuit 1930 may be a transmitter, a receiver, a transceiver, or a communication interface. This is not limited herein.

The processing circuit 1910 may be one or more processors, or may be all or some processing circuits of the one or more processors. The processing circuit 1910 is an integrated processor, a microprocessor, an integrated circuit, a logic circuit, or the like. The processor may determine output information based on input information.

The coupling in this application is indirect coupling or a communication connection between apparatuses, units, or modules for information exchange between the apparatuses, the units, or the modules, and may be in electrical, mechanical, or other forms. The processing circuit 1910 may operate in collaboration with the memory 1920 and the transceiver circuit 1930. A specific connection medium between the processing circuit 1910, the memory 1920, and the transceiver circuit 1930 is not limited in this application.

Optionally, as shown in FIG. 19, the processing circuit 1910, the memory 1920, and the transceiver circuit 1930 are connected to each other through a bus 1940. Optionally, the bus may include a type of bus, for example, an address bus, a data bus, or a control bus. In addition, for ease of representation, FIG. 19 shows one bus 1940, but this does not mean that there is only one bus or only one type of bus.

It should be understood that the processor mentioned in embodiments of this application may be the following device or a part of circuits configured for a processing function in the following device: a central processing unit (central processing unit, CPU) or another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include, but is not limited to, these and any other appropriate type of memory.

An embodiment of this application further provides a computer-readable storage medium. The computer-readable storage medium stores computer instructions for implementing the method performed by the first apparatus or the second apparatus in the foregoing embodiments.

An embodiment of this application further provides a computer program product. The computer program product includes computer program code or instructions. When the computer program code or the instructions are executed by a computer, the method performed by the first apparatus or the second apparatus in the foregoing embodiments is implemented.

An embodiment of this application further provides a communication system. The communication system includes the first apparatus or the second apparatus in the foregoing embodiments.

For explanations and beneficial effects of related content in any one of the apparatuses provided above, refer to the corresponding method embodiment provided above. Details are not described herein again.

For ease of understanding of the foregoing embodiments provided in this application, the following descriptions are provided.
(1) In this application, unless otherwise stated or if there is a logic conflict, terms and/or descriptions in different embodiments are consistent and may be mutually referenced, and technical features in different embodiments may be combined based on an internal logical relationship thereof, to form a new embodiment.
(2) In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof means any combination of these items, including a singular item (piece) or any combination of plural items (pieces). For example, at least one of a, b, and c may indicate a, b, c, a and b, a and c, b and c, or a, b, and c. Each of a, b, and c may be in a singular form or a plural form.
(3) In this application, "first", "second", and various numbers (for example, #1 and #2) are merely used for distinguishing for ease of description, and are not intended to limit the scope of embodiments of this application, for example, are intended to differentiate different messages, but are not intended to describe a specific order or sequence. It should be understood that objects described in such a way are interchangeable in an appropriate circumstance, so that a solution other than embodiments of this application can be described.
(4) In this application, descriptions such as "when...", "in a case that...", and "if" all mean that a device performs corresponding processing in an objective case and do not limit time, and the device does not need to perform a determining action during implementation. This does not mean that there is another limitation.
(5) In this application, "indicate" may include a direct indication and an indirect indication. When a piece of indication information is described to indicate A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. An example sending method is not limited in embodiments of this application.

The "indication information" in embodiments of this application may be an explicit indication, to be specific, a direct indication via signaling, or an indication obtained based on a parameter indicated via signaling in combination with another rule or another parameter or obtained through deduction; or may be an implicit indication, to be specific, an indication obtained based on a rule, a relationship, or another parameter or obtained through deduction. This is not specifically limited in this application.

(6) In this application, a "protocol" may be a standard protocol in the communication field, for example, may include a 5G protocol, an NR protocol, and a related protocol used in a future communication system. This is not limited in this application. "Predefinition" may include advance definition, for example, protocol-definition. "Preconfiguration" may be implemented by pre-storing corresponding code or a corresponding table in a device, or may be implemented in another manner that may indicate related information. An example implementation thereof is not limited in this application.

(7) In this application, "communication" may also be described as "data transmission", "information transmission", "data processing", or the like. "Transmission" includes "sending" and "receiving".

(8) In this application, "sending information to XX (a device)" may be understood as that a destination of the information is the device, and may include directly or indirectly sending the information to the device. "Receiving information from XX (a device) or receiving information that is from XX (the device)" may be understood as that a source of the information is the device, and may include directly or indirectly receiving the information from the device. Necessary processing, for example, a format change, may be performed on the information when the information is sent between the source and the destination, but the destination can understand valid information from the source.

In various embodiments of this application, sequence numbers of the foregoing processes do not mean execution orders. The execution orders of the processes should be determined based on functions and internal logic of the processes, and should not be construed as any limitation on the implementation processes of embodiments of this application.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

It should be understood that, in some of the foregoing embodiments, a device in an existing network architecture is mainly used as an example for description, and a specific form of the device is not limited in embodiments of this application. For example, all devices that can implement a same function in the future are applicable to embodiments of this application.

A person of ordinary skill in the art may be aware that, in combination with the examples described in embodiments disclosed in this specification, units and algorithm steps may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more of the units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information, wherein the first information indicates a first resource, the first resource comprises a first time domain resource and a first frequency domain resource, the first time domain resource corresponds to the first frequency domain resource, a first part of the first time domain resource is located in a first time domain unit, a first frequency domain unit corresponding to the first time domain unit comprises a first subband used for uplink transmission and a second subband used for downlink transmission, and the first frequency domain resource is located in the first frequency domain unit, wherein the first information further indicates whether to perform random access on the first resource; and
performing or skipping performing random access on the first resource based on the first information.

2. A communication method, comprising:
determining first information, wherein the first information indicates a first resource, the first resource comprises a first time domain resource and a first frequency domain resource, the first time domain resource corresponds to the first frequency domain resource, a first part of the first time domain resource is located in a first time domain unit, a first frequency domain unit corresponding to the first time domain unit comprises a first subband used for uplink transmission and a second subband used for downlink transmission, and the first frequency domain resource is located in the first frequency domain unit, wherein the first information further indicates whether to perform random access on the first resource; and
sending the first information.

3. The method according to claim 1 or 2, wherein the first information comprises second information and third information, the second information indicates the first resource, and the third information indicates whether to perform random access on the first resource.

4. The method according to any one of claims 1 to 3, wherein performing or skipping performing random access on the first resource based on the first information comprises:
when the first information indicates to perform random access on the first resource, and a first apparatus is in an idle state or an inactive state, performing, by the first apparatus, random access on the first resource.

5. The method according to any one of claims 1 to 3, wherein performing or skipping performing random access on the first resource based on the first information comprises:
when the first information indicates to perform random access on the first resource, and a first apparatus is in a non-idle state, skipping, by the first apparatus, performing random access on the first resource.

6. The method according to claim 5, wherein a second part of the first time domain resource is located in a second time domain unit, the second part is a time domain resource of a second resource, and the second time domain unit is used only for the uplink transmission, wherein
the first information indicates not to perform random access on the second resource; when the second resource partially overlaps a third resource, the first information indicates to perform random access on a non-overlapping resource, the non-overlapping resource is a resource that does not overlap with the second resource or the third resource, a time domain resource of the third resource is located in the second time domain unit, and the third resource is predefined or preconfigured; or when the second resource does not overlap the third resource, the first information indicates to perform random access on the second resource, the time domain resource of the third resource is located in the second time domain unit, and the third resource is predefined or preconfigured.

7. The method according to claim 6, wherein the first time domain unit comprises a subband full duplex SBFD time domain unit, and the second time domain unit comprises an uplink UL time domain unit.

8. The method according to any one of claims 1 to 7, wherein the second subband comprises a third subband and a fourth subband, and the third subband and the fourth subband are located on both sides of the first subband in time domain.

9. The method according to any one of claims 1 to 8, wherein the method further comprises:
when the first information indicates to perform random access on the first resource, determining a first time-frequency physical random access channel occasion RO from the first resource; and
sending a preamble on the first RO.

10. The method according to claim 9, wherein
the first information further indicates that the first RO is used for contention-based random access CBRA; or
the first information further indicates that the first RO is used for contention-free random access CFRA.

11. A communication method, comprising:
receiving first information, wherein the first information indicates a first resource, the first resource comprises a first time domain resource and a first frequency domain resource, the first time domain resource corresponds to the first frequency domain resource, the first time domain resource is located in a first time domain unit, a first frequency domain unit corresponding to the first time domain unit comprises a first subband used for uplink transmission and a second subband used for downlink transmission, and the first frequency domain resource is located in the first frequency domain unit;
obtaining second information, and determining a first time-frequency physical random access channel occasion RO based on the first information and the second information, wherein the first RO is located on the first resource; and
performing random access on the first RO.

12. The method according to claim 11, wherein the second information indicates a first
threshold, and the first threshold comprises one or more of the following: a reference signal received power RSRP threshold, a path loss threshold, or a transmit power threshold; and
determining the first RO based on the first information and the second information comprises:
obtaining a first measurement result;
determining a first comparison result based on the first measurement result and the first threshold; and
determining the first RO based on the first comparison result and a first mapping relationship, wherein the first mapping relationship indicates a mapping relationship between M comparison results and N RO sets, the M comparison results comprise the first comparison result, the first resource comprises the N RO sets, the N RO sets comprise a first RO set, and the first RO set comprises the first RO, wherein both M and N are integers greater than or equal to 1.

13. The method according to claim 11 or 12, wherein the second information indicates a frequency distance threshold, and determining the first RO based on the first information and the second information comprises:
determining the first RO based on the first comparison result and a second comparison result, wherein the first comparison result is a result of comparison between the frequency distance threshold and a first distance, the second comparison result is a result of comparison between the frequency distance threshold and a second distance, the first distance is a distance between the first RO and a first frequency, the second distance is a distance between a second RO and the first frequency, and the first frequency is located on the second subband.

14. The method according to any one of claims 11 to 13, wherein the second information indicates the frequency distance threshold; and
when a distance between the first RO and a second frequency is greater than or equal to the frequency distance threshold, the first RO is used for contention-based random access CBRA, and the second frequency is located on the second subband; or
when the distance between the first RO and the second frequency is less than the frequency distance threshold, the first RO is used for contention-free random access CFRA.

15. The method according to any one of claims 11 to 14, wherein the first time domain unit comprises a subband full duplex SBFD time domain unit.

16. The method according to any one of claims 11 to 15, wherein the second subband comprises a third subband and a fourth subband, and the third subband and the fourth subband are located on both sides of the first subband in time domain.

17. A communication method, comprising:
receiving first information, wherein the first information indicates a first resource, the first resource comprises a first time domain resource and a first frequency domain resource, the first time domain resource corresponds to the first frequency domain resource, the first time domain resource is located in a first time domain unit, a first frequency domain unit corresponding to the first time domain unit comprises a first subband used for uplink transmission and a second subband used for downlink transmission, and the first frequency domain resource is located on the first subband;
obtaining a first measurement resource, wherein the first measurement resource comprises a second time domain resource and a second frequency domain resource, the second time domain resource corresponds to the second frequency domain resource, the second time domain resource is located in the first time domain unit, and the second frequency domain resource is located on the second subband;
performing signal strength measurement on the first measurement resource to obtain a first measurement result; and
determining, based on the first measurement result, whether to perform random access on the first resource.

18. The method according to claim 17, wherein determining, based on the first measurement result, whether to perform random access on the first resource comprises:
when the first measurement result is greater than or equal to a first signal strength threshold, performing random access on the first resource.

19. The method according to claim 17 or 18, wherein determining, based on the first measurement result, whether to perform random access on the first resource comprises:
when the first measurement result is less than the first signal strength threshold, skipping performing random access on the first resource.

20. The method according to any one of claims 17 to 19, wherein the method further comprises:
obtaining a second measurement resource, wherein the second measurement resource comprises a third time domain resource and a third frequency domain resource, the third time domain resource corresponds to the third frequency domain resource, the third time domain resource is located in the first time domain unit, and the third frequency domain resource is located on the first subband;
performing signal strength measurement on the second measurement resource to obtain a second measurement result; and
determining, based on the first measurement result and the second measurement result, whether to perform random access on the first resource.

21. The method according to claim 20, wherein determining, based on the first measurement result and the second measurement result, whether to perform random access on the first resource comprises:
when the first measurement result is greater than or equal to the first signal strength threshold, and the second measurement result is less than or equal to a second signal strength threshold, performing random access on the first resource.

22. The method according to any one of claims 17 to 19, wherein the second subband comprises a third subband and a fourth subband, and the third subband and the fourth subband are located on both sides of the first subband in frequency domain; obtaining a third measurement resource, wherein the third measurement resource comprises a fourth time domain resource and a fourth frequency domain resource, the fourth time domain resource corresponds to the fourth frequency domain resource, the fourth time domain resource is located in the first time domain unit, the fourth frequency domain resource is located on the third subband, and the second frequency domain resource is located on the fourth subband; performing signal strength measurement on the third measurement resource to obtain a third measurement result; and
determining, based on the first measurement result and the third measurement result, whether to perform random access on the first resource.

23. The method according to claim 22, wherein determining, based on the first measurement result and the third measurement result, whether to perform random access on the first resource comprises:
when the first measurement result is greater than or equal to the first signal strength threshold, and the third measurement result is greater than or equal to a third signal strength threshold, performing random access on the first resource.

24. The method according to claim 22 or 23, wherein when random access is not performed on the first resource, the method further comprises:
obtaining a fourth measurement resource, wherein the fourth measurement resource comprises a fifth time domain resource and a fifth frequency domain resource, the fifth time domain resource corresponds to the fifth frequency domain resource, the fifth time domain resource is located in the first time domain unit, and the fifth frequency domain resource is located on the third subband;
obtaining a fifth measurement resource, wherein the fifth measurement resource comprises a sixth time domain resource and a sixth frequency domain resource, the sixth time domain resource corresponds to the sixth frequency domain resource, the sixth time domain resource is located in the first time domain unit, and the sixth frequency domain resource is located on the fourth subband;
performing signal strength measurement on the fourth measurement resource to obtain a fourth measurement result;
performing signal strength measurement on the fifth measurement resource to obtain a fifth measurement result; and
determining, based on the fourth measurement result and the fifth measurement result, whether to perform random access on the first resource.

25. The method according to claim 24, wherein determining, based on the fourth measurement result and the fifth measurement result, whether to perform random access on the first resource comprises:
when the fourth measurement result is greater than or equal to a fourth signal strength threshold, and the fifth measurement result is greater than or equal to a fifth signal strength threshold, performing random access on the first resource.

26. The method according to claim 24 or 25, wherein determining, based on the fourth measurement result and the fifth measurement result, whether to perform random access on the first resource comprises:
when the fourth measurement result is less than the fourth signal strength threshold, and/or the fifth measurement result is less than the fifth signal strength threshold, skipping performing random access on the first resource.

27. A communication method, comprising:
obtaining a first resource and a second resource, wherein the first resource comprises a first time domain resource and a first frequency domain resource, the first time domain resource corresponds to the first frequency domain resource, a first part of the first time domain resource is located in a first time domain unit, a first frequency domain unit corresponding to the first time domain unit comprises a first subband used for uplink transmission and a second subband used for downlink transmission, the first frequency domain resource is located in the first frequency domain unit, a time domain resource of the second resource is located in a second time domain unit, and the second resource is predefined or preconfigured.

28. The method according to claim 27, wherein a time domain resource of a third resource is located in the second time domain unit, and the third resource is predefined or preconfigured.

29. The method according to claim 28, wherein
a format length of a random access preamble sent on the first resource and the second resource is greater than a format length of a random access preamble sent on the third resource;
the first resource and the second resource support repetitions of physical random access channel PRACH transmission and the third resource does not support repetitions of PRACH transmission, or a maximum quantity of repetitions of PRACH transmission supported by the first resource and the second resource is different from a maximum quantity of repetitions of PRACH transmission supported by the third resource;
a corresponding reference signal received power RSRP threshold used by the first resource and the second resource to determine a quantity of repetitions is greater than a corresponding RSRP threshold used by the third resource to determine a quantity of repetitions;
a time domain resource corresponding to a time-frequency physical random access channel occasion RO of the first resource and the second resource is greater than a time domain resource corresponding to an RO of the third resource, or a preamble length corresponding to the first resource and the second resource is greater than a preamble length corresponding to the third resource;
maximum transmit power on the first resource and the second resource is less than maximum transmit power on the third resource; or
transmit power on the first resource and the second resource is less than transmit power on the third resource.

30. A communication method, comprising:
obtaining a first measurement result; and
determining a first time-frequency physical random access channel occasion RO or a second RO based on the first measurement result and a first threshold, wherein the first RO is located on a first resource, the second RO is located on a second resource, the first resource comprises a first time domain resource and a first frequency domain resource, the first time domain resource corresponds to the first frequency domain resource, a first part of the first time domain resource is located in a first time domain unit, a second part of the first time domain resource is located in a second time domain unit, the second part is a time domain resource of the second resource, and the second time domain unit is used for uplink transmission.

31. The method according to claim 30, wherein the method further comprises:
obtaining second information, wherein the second information indicates the first threshold, and the first threshold comprises one or more of the following: a corresponding reference signal received power RSRP threshold, a corresponding path loss threshold, or a corresponding transmit power threshold.

32. The method according to claim 31, wherein determining the first RO or the second RO based on the first measurement result and the first threshold comprises one or more of the following:
when the first measurement result is greater than or equal to the RSRP threshold,
the first RO is located on the first resource;
when the first measurement result is less than the RSRP threshold, the second RO is located on the second resource;
when the first measurement result is less than or equal to the path loss threshold, the first RO is located on the first resource;
when the first measurement result is greater than the path loss threshold, the second RO is located on the second resource;
when the first measurement result is less than or equal to the transmit power threshold, the first RO is located on the first resource; or
when the first measurement result is greater than the transmit power threshold, the second RO is located on the second resource.

33. The method according to claim 31 or 32, wherein the second information indicates a frequency distance threshold; and
when the first RO is located on the first resource, a distance between the first RO and a second frequency is greater than or equal to the frequency distance threshold, and the second frequency is located on a second subband; or
when the second RO is located on the second resource, a distance between the second RO and the second frequency is less than or equal to the frequency distance threshold, and the second frequency is located on the second subband.

34. A communication method, comprising:
receiving first information, wherein the first information indicates a first resource, the first resource comprises a first time domain resource and a first frequency domain resource, the first time domain resource corresponds to the first frequency domain resource, a first part of the first time domain resource is located in a first time domain unit, a first frequency domain unit corresponding to the first time domain unit comprises a first subband used for uplink transmission and a second subband used for downlink transmission, and the first frequency domain resource is located in the first frequency domain unit, wherein
the first information further indicates that M frequency division multiplexing-random access occasions FDM-ROs of N FDM-ROs of the first resource are used for contention-based random access CBRA, wherein N is greater than or equal to M, and M and N are positive integers; and/or
the first information further indicates that K FDM-ROs of the N FDM-ROs of the first resource are used for contention-free random access CFRA, wherein K is a positive integer less than or equal to N; and
determining, based on the first information, to perform CBRA on the M FDM-ROs, and/or to perform CFRA on the K FDM-ROs.

35. A communication method, comprising:
determining first information, wherein the first information indicates a first resource, the first resource comprises a first time domain resource and a first frequency domain resource, the first time domain resource corresponds to the first frequency domain resource, a first part of the first time domain resource is located in a first time domain unit, a first frequency domain unit corresponding to the first time domain unit comprises a first subband used for uplink transmission and a second subband used for downlink transmission, and the first frequency domain resource is located in the first frequency domain unit, wherein
the first information further indicates that M frequency division multiplexing-random access occasions FDM-ROs of N FDM-ROs of the first resource are used for contention-based random access CBRA, wherein N is greater than or equal to M, and M and N are positive integers; and/or
the first information further indicates that K FDM-ROs of the N FDM-ROs of the first resource are used for contention-free random access CFRA, wherein K is a positive integer less than or equal to N; and
sending the first information.

36. The method according to claim 35, wherein the M FDM-ROs are ROs, of the N FDM-ROs, that are farthest from the second subband, and a sum of distances between the M FDM-ROs and the second subband is a smallest value of a sum of distances between any M FDM-ROs of the N FDM-ROs and the second subband.

37. A communication method, comprising:
receiving first information, wherein the first information indicates a first resource, the first resource comprises a first time domain resource and a first frequency domain resource, the first time domain resource corresponds to the first frequency domain resource, the first time domain resource is located in a first time domain unit, a first frequency domain unit corresponding to the first time domain unit comprises a first subband used for uplink transmission and a second subband used for downlink transmission, and the first frequency domain resource is located on the first subband;
obtaining a first measurement resource, wherein the first measurement resource comprises a second time domain resource and a second frequency domain resource, the second time domain resource corresponds to the second frequency domain resource, the second time domain resource is located in the first time domain unit, and the second frequency domain resource is located on the second subband;
performing signal strength measurement on the first measurement resource to obtain a first measurement result; and
determining, based on the first measurement result, whether to perform random access on the first resource.

38. A communication method, comprising:
receiving first information, wherein the first information indicates a first resource, the first resource comprises a first time domain resource and a first frequency domain resource, the first time domain resource corresponds to the first frequency domain resource, a first part of the first time domain resource is located in a first time domain unit, a first frequency domain unit corresponding to the first time domain unit comprises a first subband used for uplink transmission and a second subband used for downlink transmission, the first frequency domain resource is located in the first frequency domain unit, a second part of the first time domain resource is located in a second time domain unit, the second part is a time domain resource of a second resource, and the second time domain unit is used only for the uplink transmission, wherein the first information further indicates whether to perform random access on the first resource; and
performing or skipping performing random access on the first resource based on the first information.

39. A communication apparatus, wherein the communication apparatus is a first apparatus, and is configured to implement the method according to any one of claims 1, 3 to 34, 37, and 38.

40. The communication apparatus according to claim 39, wherein the first apparatus comprises any one of the following: a terminal device or a chip.

41. A communication apparatus, wherein the communication apparatus is a second apparatus, and is configured to implement the method according to any one of claims 2 to 10, 35, and 36.

42. The communication apparatus according to claim 41, wherein the second apparatus comprises any one of the following: a network device, a chip, a central unit CU, or a distributed unit DU.

43. A computer-readable storage medium, wherein the computer-readable storage medium stores a computer program or instructions, and when the computer program or the instructions are run on a communication apparatus, the method according to any one of claims 1 to 38 is implemented.

44. A computer program product, comprising instructions, wherein when the instructions are run on a communication apparatus, the method according to any one of claims 1 to 38 is implemented.
